# EUROPEAN PATENT APPLICATION

(11) **EP 4 620 548 A1**
(43) Date of publication of application: **24.09.2025**
(21) Application number: 23890899.0
(22) Date of filing: 17.11.2023
(51) Int. Cl.: B01D 27/08

(54) **HOUSING FOR WATER PURIFIER**

(30) Priority: 17.11.2022 CN 202223530333 U; 17.11.2022 CN 202223507497 U
(71) Applicant: Yuyao Yadong Plastic Co., Ltd., Yuyao, Zhejiang 315456 (CN)
(72) Inventor: HE, Jianjiang, Ningbo, Zhejiang 315456 (CN); WEI, Jiabo, Ningbo, Zhejiang 315456 (CN); HU, Jizong, Ningbo, Zhejiang 315456 (CN)
(74) Representative: Tahtadjiev, Konstantin
(86) International application number: PCT/CN2023/132403
(87) International publication number: WO 2024/104471

(57) **Abstract**

Provided is a housing for a water purifier, which can withstand long-term water pressure and water hammer caused by changes in water pressure, and has a low manufacturing cost.

## Description

### FIELD OF INVENTION

The present invention relates to a water purifier, and more particularly to a housing for a water purifier.

### DESCRIPTION OF RELATED ARTS

A water purifying apparatus, also known as a water purifier, can purify raw water (such as tap water) according to the user's requirements to meet their needs. In many countries, especially developing countries, with the continuous development of industry and agriculture, the problem of water pollution is becoming increasingly more and more serious, the sources of the domestic water are also affected, whether lightly or heavily. In addition, the quality of the tap water will also be affected by the external environment and water supply pipelines. For example, excessive sand content in tap water sources, aging pipe networks, poor quality of tap water pipes, and long-term lack of cleaning in water supply pipe networks can all affect the quality of tap water. Therefore, due to various factors, the quality of tap water in many countries is poor and not suitable for being directly drunk.

A water purifier can effectively remove impurities such as silt, colloids, rust, bacteria, and even heavy metal ions from raw water, through the filtering effect of its purification device, thereby improving and enhancing the quality of domestic water. It is increasingly favored by consumers. The existing household water purifiers for purifying tap water mainly include kitchen ultrafiltration water purifiers, RO membrane water purifiers, water purifiers, water softeners, etc.

Water apparatus (or water purifiers) have water purification materials used to treat raw water, such as ultrafiltration membrane fibers, activated carbon, etc., which are placed inside the housing of the water purifier and the raw water flows through the water purification materials and is purified to obtain purified water. Raw water, especially tap water, has a high water pressure. After the raw water to be treated flows into the housing of the water purifier, the water pressure will act on the housing of the water purifier, and the housing of the water purifier needs to be under pressure for a long time. In addition, the water pressure of tap water often fluctuates, and the fluctuation of water pressure can also cause water hammer to act on the housing of the water purifier. In other words, the housing of the water purifier should have good flexibility to prevent it from breaking under long-term pressure or water hammer, ensuring the safe use of the water purifier. Therefore, many housings used for water purifiers have good flexibility. In addition, considering the manufacturing cost, many housings used for water purifiers are made of opaque materials having good flexibility.

The housings used for water purifiers which are made of opaque material have good flexibility, but it is inconvenient for users to check the usage status of the filter cartridge of the water purifier. For example, many users are concerned about whether water purification materials have accumulated dirt and caused the color of the purification material to turn yellow and black due to long-term use, in order to replace the filter cartridge in a timely manner. In order to meet the needs of users to observe the usage status of water purifiers at any time and replace the filter cartridge in a timely manner, many manufacturers use transparent materials to manufacture the housings for water purifiers. However, most transparent materials, such as, AS, PC, transparent ABS, PET, etc. have excessive rigidity but insufficient flexibility, and are prone to breakage when subjected to long-term external stress or water hammer caused by changes in water pressure. In order to ensure the safety of water purifiers, manufacturers have to increase the thickness of the water purifier casing or use expensive transparent materials that can withstand long-term stress to manufacture the housings for water purifiers, resulting in a significant increase in manufacturing costs.

Therefore, there is a need in the market for housings for water purifiers that can withstand water pressure, stress, and water hammer for a long time to ensure safe use, facilitate users to observe the use of water purification materials inside the housing of the water purifier, and have a low price.

### SUMMARY OF THE PRESENT INVENTION

A main advantage of the present invention is to provide a housing for a water purifier that can withstand long-term water pressure and withstand water hammer caused by changes in water pressure, and has a low manufacturing cost.

Another advantage of the present invention is to provide a housing for a water purifier, comprising an opaque housing body and a transparent housing body, wherein the opaque housing body at least partially wraps around an outer surface of the transparent housing body, and the opaque housing body and the transparent housing body are integrally formed to achieve the complementarity of flexible and rigid materials and improve the performance of the entire housing. Preferably, the opaque housing body is made of an opaque material, the transparent housing body is made of a transparent material, and the opaque housing body forms at least one window.

Another advantage of the present invention is to provide a housing for a water purifier, comprising an opaque housing body and a transparent housing body, wherein the transparent housing body at least partially wraps around an outer surface of the opaque housing body, and the transparent housing body and the opaque housing body are integrally formed to achieve the complementarity of flexible and rigid materials and improve the performance of the entire housing. Preferably, the opaque housing body is made of an opaque material, the transparent housing body is made of a transparent material, and the opaque housing body forms at least one window.

Other objectives and features of the present invention will become apparent from the following detailed description.

According to one aspect of the present invention, the foregoing and other objects and advantages are attained by a housing for a purifier of the present invention, comprising:
an opaque housing body; and
a transparent housing body, wherein each of the opaque housing body and the transparent housing body has a U-shaped longitudinal cross-section, wherein the opaque housing body at least partially wraps around an outer surface of the transparent housing body, and the opaque housing body and the transparent housing body are integrated with each other, wherein the opaque housing body defines at least one window, and the transparent housing body defines a water treatment chamber, wherein the opaque housing body is opaque and the transparent housing body is transparent.

According to another aspect of the present invention, the present invention further provides a housing for a water purifier, which comprises:
a transparent housing body; and
an opaque housing body, wherein each of the transparent housing body and the opaque housing body has a U-shaped longitudinal cross-section, wherein the transparent housing body at least partially wraps around an outer surface of the opaque housing body, and the transparent housing body and the opaque housing body are integrated with each other, wherein the opaque housing body defines a water treatment chamber and at least one window, wherein the transparent housing body is transparent and the opaque housing body is opaque.

Still further objects and advantages of the present invention will become apparent from a consideration of the ensuing description and drawings.

These and other objectives, features, and advantages of the present invention will become apparent from the following detailed description and the accompanying drawings.

### BRIEF DESCRIPTION OF THE DRAWINGS

FIG.1A is a front view of a water purifier according to a first embodiment of the present invention, wherein the water purifier shown in FIG.1A employs a housing for a water purifier according to the first embodiment of the present invention.
FIG.1B is an exploded view of the water purifier according to the first embodiment of the present invention, wherein the water purifier shown in FIG.1B employs the housing for a water purifier according to the first embodiment of the present invention.
FIG.1C is a sectional view of the water purifier according to the first embodiment of the present invention, wherein the water purifier shown in FIG.1C employs the housing for a water purifier according to the first embodiment of the present invention.
FIG.1D is an enlarged part of a sectional view of the housing for a water purifier according to the above first embodiment of the present invention.
FIG.1E is a sectional view of an opaque housing body and a transparent housing body of the housing for a water purifier according to the above first embodiment of the present invention.
FIG.1F is a sectional view of the opaque housing body, the transparent housing body and a transparent window body of the housing for a water purifier according to the above first embodiment of the present invention.
FIG.2A is a sectional view of the water purifier according to the first embodiment of the present invention, wherein the water purifier shown in FIG.2A employs an alternative of the housing for a water purifier according to the first embodiment of the present invention.
FIG.2B is an enlarged part of a sectional view of the alternative of the housing for a water purifier according to the above first embodiment of the present invention.
FIG.2C is a sectional view of an opaque housing body and a transparent housing body of the alternative of the housing for a water purifier according to the above first embodiment of the present invention.
FIG.2D is a sectional view of the opaque housing body, the transparent housing body and a transparent window body of the alternative of the housing for a water purifier according to the above first embodiment of the present invention.
FIG.3A is a sectional view of the water purifier according to the first embodiment of the present invention, wherein the water purifier shown in FIG.3A employs another alternative of the housing for a water purifier according to the first embodiment of the present invention.
FIG.3B is an enlarged part of a sectional view of the alternative of the housing for a water purifier according to the above first embodiment of the present invention.
FIG.3C is a sectional view of an opaque housing body, a transparent housing body and a transparent window body of the alternative of the housing for a water purifier according to the above first embodiment of the present invention.
FIG.4A is a sectional view of the water purifier according to the first embodiment of the present invention, wherein the water purifier shown in FIG.4A employs another alternative of the housing for a water purifier according to the first embodiment of the present invention.
FIG.4B is an enlarged part of a sectional view of the alternative of the housing for a water purifier according to the above first embodiment of the present invention.
FIG.4C is a sectional view of an opaque housing body, a transparent housing body and a transparent window body of the alternative of the housing for a water purifier according to the above first embodiment of the present invention.
FIG.5A is a front view of a water purifier according to a second embodiment of the present invention, wherein the water purifier shown in FIG.5A employs a housing for a water purifier according to the second embodiment of the present invention.
FIG.5B is an exploded view of the water purifier according to the second embodiment of the present invention, wherein the water purifier shown in FIG.5B employs the housing for a water purifier according to the second embodiment of the present invention.
FIG.5C is a sectional view of the water purifier according to the second embodiment of the present invention, wherein the water purifier shown in FIG.5C employs the housing for a water purifier according to the second embodiment of the present invention.
FIG.5D is an enlarged part of a sectional view of the housing for a water purifier according to the above second embodiment of the present invention.
FIG.5E is a sectional view of an opaque housing body and a transparent housing body of the housing for a water purifier according to the above second embodiment of the present invention.
FIG.5F is a sectional view of the opaque housing body, the transparent housing body and a transparent window body of the housing for a water purifier according to the above second embodiment of the present invention.
FIG.6A is a sectional view of the water purifier according to the second embodiment of the present invention, wherein the water purifier shown in FIG.6A employs an alternative of the housing for a water purifier according to the second embodiment of the present invention.
FIG.6B is an enlarged part of a sectional view of the alternative of the housing for a water purifier according to the above second embodiment of the present invention.
FIG.6C is a sectional view of an opaque housing body and a transparent housing body of the alternative of the housing for a water purifier according to the above second embodiment of the present invention.
FIG.6D is a sectional view of the opaque housing body, the transparent housing body and a transparent window body of the alternative of the housing for a water purifier according to the above second embodiment of the present invention.
FIG.7A is a sectional view of the water purifier according to the second embodiment of the present invention, wherein the water purifier shown in FIG.7A employs another alternative of the housing for a water purifier according to the second embodiment of the present invention.
FIG.7B is an enlarged part of a sectional view of the alternative of the housing for a water purifier according to the above second embodiment of the present invention.
FIG.7C is a sectional view of an opaque housing body, a transparent housing body and a transparent window body of the alternative of the housing for a water purifier according to the above second embodiment of the present invention.
FIG.8A is a sectional view of the water purifier according to the second embodiment of the present invention, wherein the water purifier shown in FIG.8A employs another alternative of the housing for a water purifier according to the second embodiment of the present invention.
FIG.8B is an enlarged part of a sectional view of the alternative of the housing for a water purifier according to the above second embodiment of the present invention.
FIG.8C is a sectional view of an opaque housing body, a transparent housing body and a transparent window body of the alternative of the housing for a water purifier according to the above second embodiment of the present invention.
FIG.9A is a front view of a water purifier according to a third embodiment of the present invention, wherein the water purifier shown in FIG.9A employs a housing for a water purifier according to the third embodiment of the present invention.
FIG.9B is an exploded view of the water purifier according to the third embodiment of the present invention, wherein the water purifier shown in FIG.9B employs the housing for a water purifier according to the third embodiment of the present invention.
FIG.9C is a sectional view of the water purifier according to the third embodiment of the present invention, wherein the water purifier shown in FIG.9C employs the housing for a water purifier according to the third embodiment of the present invention.
FIG.9D is an enlarged part of a sectional view of the housing for a water purifier according to the above third embodiment of the present invention.
FIG.9E is a sectional view of an opaque housing body and a transparent housing body of the housing for a water purifier according to the above third embodiment of the present invention.
FIG.9F is a sectional view of the opaque housing body, the transparent housing body and a transparent window body of the housing for a water purifier according to the above third embodiment of the present invention.
FIG.10A is a sectional view of the water purifier according to the third embodiment of the present invention, wherein the water purifier shown in FIG.10A employs an alternative of the housing for a water purifier according to the third embodiment of the present invention.
FIG.10B is an enlarged part of a sectional view of the alternative of the housing for a water purifier according to the above third embodiment of the present invention.
FIG.10C is a sectional view of an opaque housing body and a transparent housing body of the alternative of the housing for a water purifier according to the above third embodiment of the present invention.
FIG.10D is a sectional view of the opaque housing body, the transparent housing body and a transparent window body of the alternative of the housing for a water purifier according to the above third embodiment of the present invention.
FIG.10E is a sectional view of the water purifier according to the third embodiment of the present invention, wherein a sealing member of the water purifier is water-sealed between a cover and a second opening portion of the transparent housing body.
FIG.11A is a sectional view of the water purifier according to the third embodiment of the present invention, wherein the water purifier shown in FIG.11A employs another alternative of the housing for a water purifier according to the third embodiment of the present invention.
FIG.11B is an enlarged part of a sectional view of the alternative of the housing for a water purifier according to the above third embodiment of the present invention.
FIG.11C is a sectional view of an opaque housing body and a transparent housing body of the alternative of the housing for a water purifier according to the above third embodiment of the present invention.
FIG.11D is a sectional view of the opaque housing body, the transparent housing body and a transparent window body of the alternative of the housing for a water purifier according to the above third embodiment of the present invention.
FIG.12A is a sectional view of a water purifier according to a fourth embodiment of the present invention, wherein the water purifier shown in FIG.12A employs a housing for a water purifier according to the fourth embodiment of the present invention.
FIG.12B is an enlarged part of a sectional view of the housing for a water purifier according to the above fourth embodiment of the present invention.
FIG.12C is a sectional view of an opaque housing body, a transparent housing body and a transparent window body of the housing for a water purifier according to the above fourth embodiment of the present invention.
FIG.13A is a sectional view of the water purifier according to the fourth embodiment of the present invention, wherein the water purifier shown in FIG.13A employs an alternative of the housing for a water purifier according to the fourth embodiment of the present invention.
FIG.13B is an enlarged part of a sectional view of the alternative of the housing for a water purifier according to the above fourth embodiment of the present invention.
FIG.13C is a sectional view of an opaque housing body and a transparent housing body of the alternative of the housing for a water purifier according to the above fourth embodiment of the present invention.
FIG.13D is a sectional view of the water purifier according to the fourth embodiment of the present invention, wherein a sealing member of the water purifier is water-sealed between a cover and a second opening portion of the opaque housing body.
FIG.14A is a sectional view of the water purifier according to the fourth embodiment of the present invention, wherein the water purifier shown in FIG.14A employs another alternative of the housing for a water purifier according to the fourth embodiment of the present invention.
FIG.14B is an enlarged part of a sectional view of the alternative of the housing for a water purifier according to the above fourth embodiment of the present invention.
FIG.14C is a sectional view of an opaque housing body, a transparent housing body and a transparent window body of the alternative of the housing for a water purifier according to the above fourth embodiment of the present invention.
FIG.15A is a front view of a water purifier according to a fifth embodiment of the present invention, wherein the water purifier shown in FIG.15A employs a housing for purifier according to the fifth embodiment of the present invention.
FIG.15B is an exploded view of the water purifier according to the fifth embodiment of the present invention, wherein the water purifier shown in FIG.15B employs the housing for a water purifier according to the fifth embodiment of the present invention.
FIG.15C is a sectional view of the water purifier according to the fifth embodiment of the present invention, wherein the water purifier shown in FIG.15C employs the housing for a water purifier according to the fifth embodiment of the present invention.
FIG.15D for is an enlarged part of a sectional view of the water purifier according to the fifth embodiment of the present invention, wherein the water purifier shown in FIG.15D employs the housing for a water purifier according to the fifth embodiment of the present invention.
FIG.16A is a front view of the water purifier according to the fifth embodiment of the present invention, wherein the water purifier shown in FIG.16A employs an alternative of the housing for a water purifier according to the fifth embodiment of the present invention.
FIG.16B is an exploded view of the alternative of the housing for a water purifier according to the above fifth embodiment of the present invention.
FIG.16C is a sectional view of the alternative of the housing for a water purifier according to the above fifth embodiment of the present invention.
FIG.16D is an enlarged part of a sectional view of the alternative of the housing for a water purifier according to the above fifth embodiment of the present invention.
FIG.17A is a front view of the water purifier according to the fifth embodiment of the present invention, wherein the water purifier shown in FIG.17A employs another alternative of the housing for a water purifier according to the fifth embodiment of the present invention.
FIG.17B is an exploded view of the alternative of the housing for a water purifier according to the above fifth embodiment of the present invention.
FIG.17C is a sectional view of the alternative of the housing for a water purifier according to the above fifth embodiment of the present invention.
FIG.17D is an enlarged part of a sectional view of the alternative of the housing for a water purifier according to the above fifth embodiment of the present invention.
FIG.18A is a sectional view of another alternative of the water purifier according to the above fifth embodiment of the present invention.
FIG.18B is an enlarged part of a sectional view of the alternative of the housing for a water purifier according to the above fifth embodiment of the present invention.
FIG.19 is a schematic diagram of a manufacturing process of the housing for a water purifier according to the fifth embodiment of the present invention.
FIG.20A is a sectional view of a nested mechanism formed by a first transparent housing body and a second transparent housing body of the housing for a water purifier according to the fifth embodiment of the present invention, wherein the first transparent housing body has not been cooled to room temperature.
FIG.20B is an enlarged part of a sectional view of the nested mechanism formed by the first transparent housing body and the second transparent housing body of the housing for a water purifier according to the fifth embodiment of the present invention, wherein the first transparent housing body has not been cooled to room temperature.
FIG.20C is another enlarged part of a sectional view of the nested mechanism formed by the first transparent housing body and the second transparent housing body of the housing for a water purifier according to the fifth embodiment of the present invention, wherein the first transparent housing body has not been cooled to room temperature.
FIG.21 is a sectional view of the nested mechanism formed by the first transparent housing body and the second transparent housing body of the housing for a water purifier according to the fifth embodiment of the present invention, wherein the first transparent housing body has been cooled to room temperature.
FIG.22 is a sectional view of the nested mechanism formed by the first transparent housing body and the second transparent housing body of the housing for a water purifier according to the fifth embodiment of the present invention, wherein the nested mechanism is provided inside a molding cavity of a mold.
FIG.23A is a sectional view of the first transparent housing body, the second transparent housing body and a sealing sheet of the housing for a water purifier according to the fifth embodiment of the present invention, wherein the sealing sheet is provided between a first bottom of the first transparent housing body and a second bottom of the second transparent housing body.
FIG.23B is an enlarged part of a sectional view of the sealing sheet, the first transparent housing body and the second transparent housing body of the housing for a water purifier according to the fifth embodiment of the present invention.
FIG.24A is a sectional view of a first transparent housing body, a second transparent housing body and a sealing sheet of an alternative of the housing for a water purifier according to the fifth embodiment of the present invention, wherein the sealing sheet is provided between a first bottom of the first transparent housing body and a second bottom of the second transparent housing body.
FIG.24B is an enlarged part of a sectional view of the first transparent housing body, the second transparent housing body and the sealing sheet of the alternative of the housing for a water purifier according to the fifth embodiment of the present invention.
FIG.25A is a sectional view of the first transparent housing body, the second transparent housing body and a sealing sheet of another alternative of the housing for a water purifier according to the fifth embodiment of the present invention, wherein the sealing sheet is provided between a first bottom of the first transparent housing body and a second bottom of the second transparent housing body.
FIG.25B is an enlarged part of a sectional view of the sealing sheet, the first transparent housing body and the second transparent housing body of the alternative of the housing for a water purifier according to the fifth embodiment of the present invention.
FIG.26A is a sectional view of a first transparent housing body, a second transparent housing body and a sealing sheet of another alternative of the housing for a water purifier according to the fifth embodiment of the present invention, wherein the sealing sheet is provided between a first bottom of the first transparent housing body and a second bottom of the second transparent housing body.
FIG.26B is an enlarged part of a sectional view of the first transparent housing body, the second transparent housing body and the sealing sheet of the alternative of the housing for a water purifier according to the fifth embodiment of the present invention.

### DETAILED DESCRIPTION OF THE EMBODIMENT

The following description is disclosed to enable any person skilled in the art to make and use the present invention. Preferred embodiments are provided in the following description only as examples and modifications will be apparent to those skilled in the art. The general principles formed in the following description would be applied to other embodiments, alternatives, modifications, equivalents, and applications without departing from the spirit and scope of the present invention.

Those skilled in the art should understand that, in the disclosure of the present invention, terminologies of "longitudinal", "lateral", "upper", "lower", "front", "back", "left", "right", "perpendicular", "horizontal", "top", "bottom", "inner", "outer" and etc. just indicate relations of direction or position are based on the relations of direction or position shown in the appended drawings, which is only to facilitate descriptions of the present invention and to simplify the descriptions, rather than to indicate or imply that the referred device or element must apply specific direction or to be operated or configured in specific direction. Therefore, the above-mentioned terminologies shall not be interpreted as confine to the present invention.

It will be understood that the term "a" should be understood as "at least one" or "one or more", that is, in one embodiment, the number of an element may be one, and in other embodiments, the number of the element can be greater than one, and the term "a" cannot be construed as a limitation to the quantity.

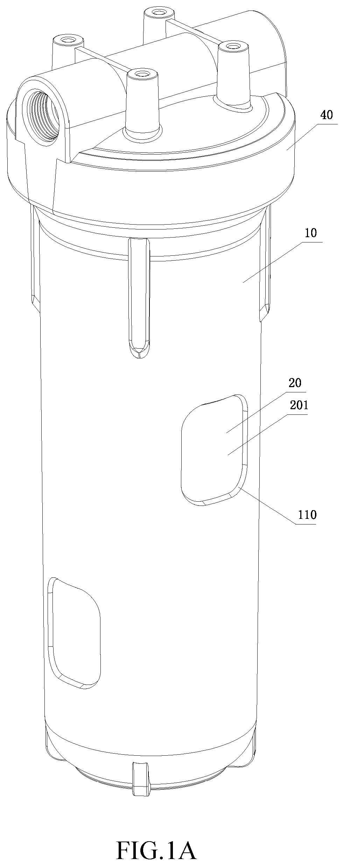

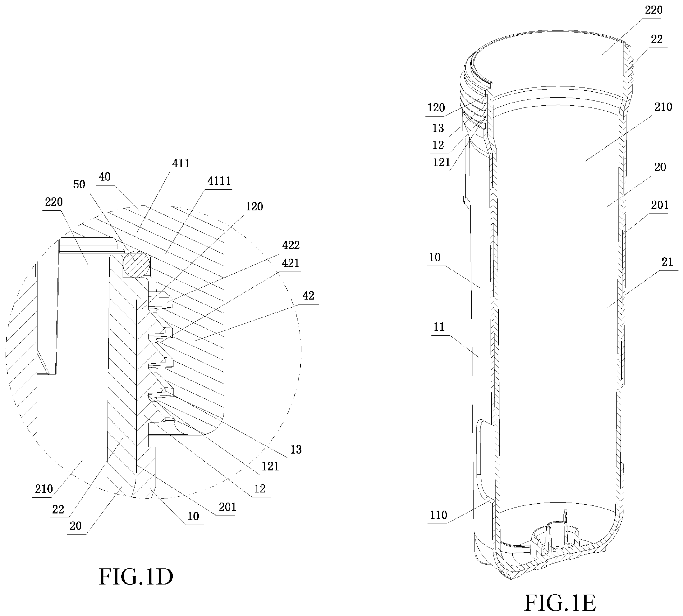

Referring to Figs.1A to 1F of the accompanying drawings, a housing for a water purifier according to the first embodiment of the present invention is illustrated, wherein the housing for a water purifier according to the first embodiment of the present invention comprises an opaque housing body 10 and a transparent housing body 20, wherein the opaque housing body 10 at least partially wraps around an outer surface 201 of the transparent housing body 20, and the opaque housing body 10 and the transparent housing body 20 are integrated with each other, wherein the opaque housing body 10 forms at least one window 110, and the transparent housing body 20 forms a water treatment chamber 210, wherein the opaque housing body 10 is opaque and the transparent housing body 20 is transparent. Correspondingly, the opaque housing body 10 of the housing for a water purifier according to the first embodiment of the present invention has flexibility better than that of the transparent housing body 20, and the transparent housing body 20 has rigidity stronger than that of the opaque housing body 10. Therefore, the opaque housing body 10 is made of plastic material having better flexibility, and the transparent housing body 20 is made of plastic material having better rigidity and strength. It is appreciated that the water treatment chamber 210 formed by the transparent housing body 20 of the housing for a water purifier according to the first embodiment of the present invention is used to accommodate water treatment materials inside the water treatment chamber 210 to purify raw water entering the water treatment chamber 210.It is appreciated that the opaque housing body 10 of the housing for a water purifier according to the first embodiment of the present invention can provide a stable support for the transparent housing body 20.

As shown in Figs.1A to 1F of the accompanying drawings, the opaque housing body 10 of the housing for a water purifier according to the first embodiment of the present invention has a first body portion 11 and a first opening portion 12 extended from the first body portion 11, the transparent housing body 20 has a second body portion 21 and a second opening portion 22 extended from the second body portion 21, wherein the first opening portion 12 of the opaque housing body 10 forms a first opening 120 and the second opening portion 22 of the transparent housing body 20 forms a second opening 220, wherein the first opening 120 of the first opening portion 12 of the opaque housing body 10 and the second opening 220 of the second opening portion 22 of the transparent housing body 20 have the same orientation, wherein the first body portion 11 of the opaque housing body 10 wraps around the second body portion 21 of the transparent housing body 20, the first opening portion 12 of the opaque housing body 10 wraps around the second opening portion 22 of the transparent housing body 20, wherein the at least one window 110 of the opaque housing body 10 is formed by the first body portion 11 of the opaque housing body 10 and the window 110 of the opaque housing body 10 is positioned to face the second body portion 21 of the transparent housing body 20. Correspondingly, the first body portion 11 of the opaque housing body 10 is integrated with the second body portion 21 of the transparent housing body 20, the first opening portion 12 of the opaque housing body 10 is integrated with the second opening portion 22 of the transparent housing body 20, and the second opening portion 22 of the transparent housing body 20 protrudes outwardly through the first opening 120 of the first opening portion 12 of the opaque housing body 10. Further, both the opaque housing body 10 and the transparent housing body 20 have a U-shaped longitudinal cross-section, so that the housing for a water purifier according to the first embodiment of the present invention has a U-shaped double-layer structure in the longitudinal cross-section, and when the housing for a water purifier according to the first embodiment of the present invention is vertically placed with the opening facing upwards, the second opening portion 22 of the transparent housing body 20 is slightly higher than the first opening portion 12 of the opaque housing body 10.

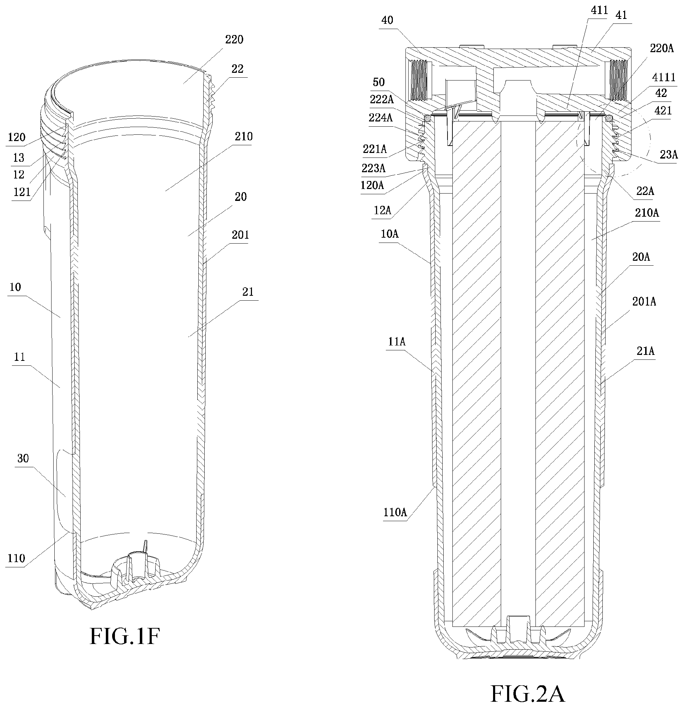

As shown in Fig.1F of the accompanying drawings, the housing for a water purifier according to the first embodiment of the present invention further comprises at least one transparent window body 30, wherein the at least one transparent window body 30 is disposed in the at least one window 110 formed by the first body portion 11 of the opaque housing body 10, and the at least one transparent window body 30 is integrated with the first body portion 11 of the opaque housing body 10 and the second body portion 21 of the transparent housing body 20, respectively. Preferably, the at least one transparent window body 30 and the second body portion 21 of the transparent housing body 20 are made of the same material, and the at least one transparent window body 30 and the second body portion 21 of the transparent housing body 20 are formed synchronously. Preferably, the opaque housing body 10 forms a plurality of windows 110. More preferably, the windows 110 of the opaque housing body 10 are arranged to be separated from each other. It is appreciated that the at least one transparent window body 30 is made of transparent material.

Correspondingly, the housing for a water purifier according to the first embodiment of the present invention is formed by integrating the opaque housing body 10 with the transparent housing body 20, and the second body portion 21 of the transparent housing body 20 is made of a transparent material, the opaque housing body 10 forms the window 110, so that the opaque housing body 10 of the housing for a water purifier according to the first embodiment of the present invention is made of an opaque material having better flexibility and can withstand long-term water pressure and water hammer, and the transparent housing body 20 is made of a transparent material having better rigidity, so that the opaque housing body 10 and the transparent housing body 20 can obtain complementary advantages, thereby allowing the user to view the usage status of the filter cartridge at any time while ensuring safety. In addition, due to that the opaque housing body 10 of the housing for a water purifier according to the first embodiment of the present invention is made of opaque material, the use of expensive transparent materials is reduced, significantly reducing the manufacturing cost of the housing for a water purifier according to the first embodiment of the present invention.

It is worth mentioning that, in order to reduce the manufacturing process difficulty of the housing for a water purifier according to the first embodiment of the present invention while ensuring the safety of the housing for a water purifier, the thickness of the opaque housing body 10 of the housing for a water purifier according to the first embodiment of the present invention is not less than 2.5mm, the thickness of the transparent housing body 20 is not less than 2.5mm, and the thickness ratio of the opaque housing body 10 to the transparent housing body 20 of the housing for a water purifier according to the first embodiment of the present invention is 1:3-3:1. Preferably, the thickness ratio of the opaque housing body 10 to the transparent housing body 20 of the housing for a water purifier according to the first embodiment of the present invention is 1:2-2:1.

As shown in Figs.1A to 1F of the accompanying drawings, the housing for a water purifier according to the first embodiment of the present invention further comprises a cover 40 and a sealing member 50, wherein the cover 40 is connected to the first opening portion 12 of the opaque housing body 10, wherein the sealing member 50 is water sealed between the cover 40 and a mechanism formed by integrating the opaque housing body 10 with the transparent housing body 20. Preferably, the sealing member 50 is water-sealed between the cover 40 and the second opening portion 22 of the transparent housing body 20.

As shown in Figs.1A to 1F of the accompanying drawings, the cover 40 for the housing for a water purifier according to the first embodiment of the present invention comprises a cover body 41 and a screwing portion 42, wherein the screwing portion 42 of the cover 40 is extended from a peripheral edge 4111 of an inner side 411 of the cover body 41, and the sealing member 50 is provided on the inner side 411 of the cover body 41, wherein the sealing member 50 is surrounded by the screwing portion 42 of the cover 40, wherein an outer side wall 121 of the first opening portion 12 of the opaque housing body 10 forms a first thread 13, and an inner side wall 422 of the screwing portion 42 forms a second thread 421, wherein the second thread 421 is provided to be suitable for being screwed with the first thread 13 of the first opening portion 12 of the opaque housing body 10 together, so that the sealing member 50 is water-sealed between the cover 40 and the second opening portion 22 of the transparent housing body 20. Preferably, the sealing member 50 is annular and the sealing member 50 is pressed and water-sealed between the inner side 411 of the cover body 41 and the second opening portion 22 of the transparent housing body 20. Optionally, the sealing member 50 is side-sealed between the inner side wall 422 of the screwing portion 42 of the cover body 41 and the second opening portion 22 of the transparent housing body 20. More preferably, the sealing member 50 is at least partially pressed and sealed between the inner side wall 422 of the screwing portion 42 of the cover body 41 and the second opening portion 22 of the transparent housing body 20, and the sealing member 50 is at least partially side-sealed between the inner side wall 422 of the screwing portion 42 of the cover body 41 and the second opening portion 22 of the transparent housing body 20. Optionally, the sealing member 50 is pressed against the first opening portion 12 of the opaque housing body 10 and water-sealed between the cover 40 and the first opening portion 12 of the opaque housing body 10.

It is worth mentioning that a thread of the housing for a water purifier according to the first embodiment of the present invention, which is used for screwing the housing for a water purifier and the cover 40 together, is formed on the outer side wall 121 of the first opening portion 12 of the opaque housing body 10 to avoid the risk of rupture of the second opening portion 22 of the transparent housing body 20 caused by a stress applied on the second opening portion 22 of the transparent housing body 20 when the thread is provided on the second opening portion 22 of the transparent housing body 20, wherein the stress is generated by screwing the housing for a water purifier and the cover 40. In addition, the first body portion 11 and the first opening portion 12 of the opaque housing body 10 of the housing for a water purifier according to the first embodiment of the present invention wrap around the second body portion 21 and the second opening portion 22 of the transparent housing body 20, and the second opening portion 22 of the transparent housing body 20 protrudes outwardly from the first opening 120 of the first opening portion 12 of the opaque housing body 10, so that the position of the second opening 220 of the second opening portion 22 of the transparent housing body 20 is staggered from the position of the first thread 13 of the first opening portion 12 of the opaque housing body 10, so that when the first opening portion 12 of the opaque housing body 10 and the cover 40 of the housing for a water purifier according to the first embodiment of the present invention are connected with each other (e.g. screwed together), the second body portion 21 and the second opening portion 22 of the transparent housing body 20 can avoid directly bearing the stress generated when the cover 40 is connected to the first opening portion 12 of the opaque housing body 10. In other words, since the cover 40 is connected to the first opening portion 12 of the opaque housing body 10, the position of the second opening 220 of the second opening portion 22 of the transparent housing body 20 is staggered from the position of the first thread 13 of the first opening portion 12 of the opaque housing body 10. Therefore, the stress applied on the position where the second opening 220 of the second opening portion 22 of the transparent housing body 20 is located has been reduced, so as to prevent the second opening portion 22 of the transparent housing body 20 from being cracked under long-term stress (or reducing the probability of cracking), and allowing the thickness of the transparent housing body 20 to be reduced and making the manufacturing cost of the housing for a water purifier according to the first embodiment of the present invention be reduced. Finally, the sealing member 50 is water-sealed between the inner side 411 of the cover body 41 and the second opening portion 22 of the transparent housing body 20, so that the transparent housing body 20, the cover 40, and the sealing member 50 form a continuous water-sealed whole mechanism, and the water pressure can only directly be applied on a sealing chamber formed by the cover 40, the sealing member 50 and the transparent housing body 20 to reduce the possibility of leakage of the water to be treated and the purified water. Further, considering that the housing for a water purifier according to the first embodiment of the present invention, as a manufactured product, even though only has a mechanism formed by integrating the opaque housing body 10 with the transparent housing body 20, which can be used for sales purposes (the cover 40 can be allocated by downstream distributors). Therefore, although the present invention exemplarily describes the threaded connection between the first opening portion 12 of the opaque housing body 10 and the cover 40 of the housing for a water purifier according to the first embodiment of the present invention, the housing for a water purifier according to the first embodiment of the present invention is not limited to necessarily having the cover 40.

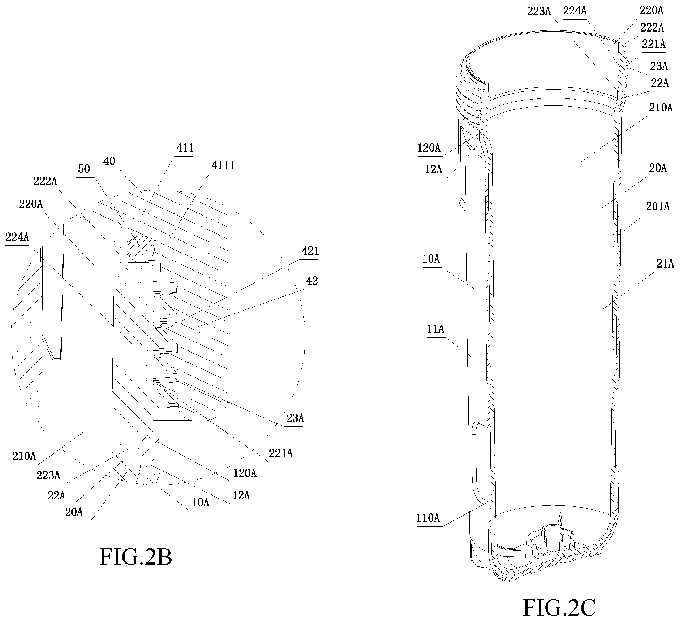

Figs.2A to 2C of the accompanying drawings illustrated an alternative of the housing for a water purifier according to the first embodiment of the present invention, which comprises an opaque housing body 10A and a transparent housing body 20A, wherein the opaque housing body 10A at least partially wraps around an outer surface 201A of the transparent housing body 20A, and the opaque housing body 10A and the transparent housing body 20A are integrated with each other, wherein the opaque housing body 10A forms at least one window 110A, and the transparent housing body 20A forms a water treatment chamber 210A, wherein the opaque housing body 10A is opaque and the transparent housing body 20A is transparent. Correspondingly, the opaque housing body 10A of the alternative of the housing for a water purifier according to the first embodiment of the present invention has flexibility better than that of the transparent housing body 20A, and the transparent housing body 20A has rigidity stronger than that of the opaque housing body 10A. Therefore, the opaque housing body 10A is made of plastic material having better flexibility, and the transparent housing body 20A is made of plastic material having better rigidity and strength. It is appreciated that the water treatment chamber 210A formed by the transparent housing body 20A of the alternative of the housing for a water purifier according to the first embodiment of the present invention is used to accommodate water treatment materials inside the water treatment chamber 210A to purify raw water entering the water treatment chamber 210A. It is appreciated that the opaque housing body 10A of the alternative of the housing for a water purifier according to the first embodiment of the present invention can provide a stable support for the transparent housing body 20A.

As shown in Figs.2A to 2C of the accompanying drawings, the opaque housing body 10A of the alternative of the housing for a water purifier according to the first embodiment of the present invention comprises a first body portion 11A and a first opening portion 12A, and the transparent housing body 20A comprises a second body portion 21A and a second opening portion 22A, wherein the first opening portion 12A of the opaque housing body 10A is extended from the first body portion 11A, and the second opening portion 22A of the transparent housing body 20A is extended from the second body portion 21A, wherein the first opening portion 12A of the opaque housing body 10A forms a first opening 120A, and the second opening portion 22A of the transparent housing body 20A forms a second opening 220A, wherein the first opening 120A of the first opening portion 12A of the opaque housing body 10A and the second opening 220A of the second opening portion 22A of the transparent housing body 20A have the same orientation, wherein the first body portion 11A of the opaque housing body 10A wraps around the second body portion 21A of the transparent housing body 20A, and the second opening portion 22A of the transparent housing body 20A is partially wrapped by the first opening portion 12A of the opaque housing body 10A, wherein the at least one window 110A of the opaque housing body 10A is formed by the first body portion 11A of the opaque housing body 10A, and the window 110A of the opaque housing body 10A is positioned to face the second body portion 21A of the transparent housing body 20A. Correspondingly, the first body portion 11A of the opaque housing body 10A is integrated with the second body portion 21A of the transparent housing body 20A, the first opening portion 12A of the opaque housing body 10A is integrated with the second opening portion 22A of the transparent housing body 20A, and the second opening portion 22A of the transparent housing body 20A protrudes outwardly through the first opening 120A of the first opening portion 12A of the opaque housing body 10A, so as to enable the first opening portion 12A of the opaque housing body 10A to wrap around a neck of the second opening portion 22A of the transparent housing body 20A.

As shown in Figs.2A to 2C of the accompanying drawings, further, both of the longitudinal section of the first body portion 11A of the opaque housing body 10A and the second body portion 21A of the transparent housing body 20A of the alternative of the housing for a water purifier according to the first embodiment of the present invention are U-shaped, so that the first body portion 11A of the opaque housing body 10A and the second body portion 21A of the transparent housing body 20A can form a U-shaped double-layer structure. Therefore, both the longitudinal sections of the opaque housing body 10A and the transparent housing body 20A of the alternative of the housing for a water purifier according to the first embodiment of the present invention are U-shaped, so that the alternative of the housing for a water purifier according to the first embodiment of the present invention as a whole has a U-shaped double-layer structure in its longitudinal section.

As shown in Figs.2A to 2C of the accompanying drawings, the alternative of the housing for a water purifier according to the first embodiment of the present invention further comprises a cover 40 and a sealing member 50, wherein the sealing member 50 is water-sealed between the cover 40 and a mechanism formed by integrating the opaque housing body 10A with the transparent housing body 20A. Preferably, the sealing member 50 is water-sealed between the cover 40 and the second opening portion 22A of the transparent housing body 20A.

As shown in Figs.2A to 2C of the accompanying drawings, the cover 40 of the alternative of the housing for a water purifier according to the first embodiment of the present invention comprises a cover body 41 and a screwing portion 42, wherein the screwing portion 42 of the cover 40 is extended from a peripheral edge 4111 of an inner side 411 of the cover body 41, and the sealing member 50 is provided on the inner side 411 of the cover body 41, wherein the second opening portion 22A of the transparent housing body 20A further has a first thread 23A, the sealing member 50 is surrounded by the screwing portion 42 of the cover 40, and the inner side wall 422 of the screwing portion 42 forms a second thread 421, wherein the second thread 421 is provided to be suitable for being screwed with the first thread 23A of the second opening portion 22A of the transparent housing body 20A together, so that the cover 40 can be screwed onto the second opening portion 22A of the transparent housing body 20A and the sealing member 50 can be pressed against the second opening portion 22A of the transparent housing body 20A and water-sealed between the cover 40 and the second opening portion 22A of the transparent housing body 20A. Preferably, the sealing member 50 is ring-shaped.

As shown in Figs.2A to 2C of the accompanying drawings, the first thread 23A of the alternative of the housing for a water purifier according to the first embodiment of the present invention is an external thread formed on an outer side wall 221A of the second opening portion 22A of the transparent housing body 20A, and the second thread 421 of the screwing portion 42 of the cover 40 is an internal thread formed by the inner side wall 422 of the screwing portion 42 of the cover 40, wherein the second thread 421 is provided to be suitable for being screwed with the first thread 23A of the second opening portion 22A of the transparent housing body 20A together, so that the sealing member 50 can be water-sealed between the cover 40 and the second opening portion 22A of the transparent housing body 20A.

As shown in Figs.2A to 2C of the accompanying drawings, the second opening portion 22A of the transparent housing body 20A of the alternative of the housing for a water purifier according to the first embodiment of the present invention forms a top end 222A, a bottom end 223A and a thread forming portion 224A extended between the top end 222A and the bottom end 223A, wherein the top end 222A of the second opening portion 22A of the transparent housing body 20A forms the second opening 220A, and the bottom end 223A of the second opening portion 22A of the transparent housing body 20A is covered by the first opening portion 12A of the opaque housing body 10A, the first thread 23A of the second opening portion 22A of the transparent housing body 20A is formed by the thread forming portion 224A of the second opening portion 22A of the transparent housing body 20A. Correspondingly, the thread forming portion 224A of the second opening portion 22A and the portion of the second opening 220A of the second opening portion 22A are integrally formed from the same material to avoid the thread forming portion 224A being pulled apart into two layers under continuous force and causing the thread to easily break when the thread forming portion 224A is formed by integrated double layered material. Preferably, the second opening portion 22A of the transparent housing body 20A is thickened to enhance its strength and prevent it from shattering under stress.

Further, considering that the alternative of the housing for a water purifier according to the first embodiment of the present invention, as a manufactured product, even though only has a mechanism formed by integrating the opaque housing body 10A with the transparent housing body 20A, which can be used for sales purposes (the cover 40 can be allocated by downstream distributors). Therefore, although the present invention exemplarily describes the threaded connection between the second opening portion 22A of the transparent housing body 20A and the cover 40 of the alternative of the housing for a water purifier according to the first embodiment of the present invention, the alternative of the housing for a water purifier according to the first embodiment of the present invention is not limited to necessarily having the cover 40.

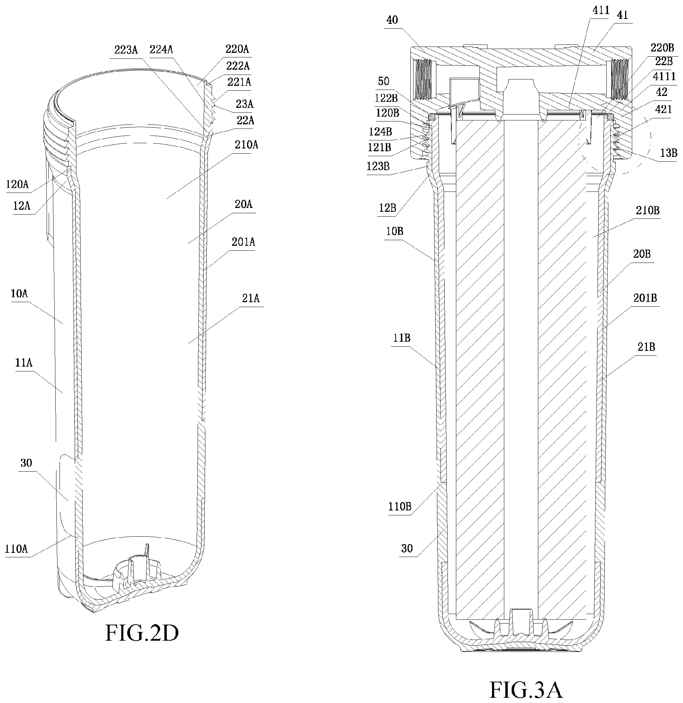

As shown in Fig.2D of the accompanying drawings, the alternative of the housing for a water purifier according to the first embodiment of the present invention further comprises at least one transparent window body 30A, wherein the at least one transparent window body 30A is disposed in the at least one window 110A formed by the first body portion 11A of the opaque housing body 10A, and the at least one transparent window body 30A is integrated with the first body portion 11A of the opaque housing body 10A and the second body portion 21A of the transparent housing body 20A, respectively. Preferably, the at least one transparent window body 30A and the second body portion 21A of the transparent housing body 20A are made of the same material, and the at least one transparent window body 30A and the second body portion 21A of the transparent housing body 20A are formed synchronously. Preferably, the opaque housing body 10A forms a plurality of windows 110A. More preferably, the windows 110A of the opaque housing body 10A are arranged to be separated from each other. It is appreciated that the at least one transparent window body 30A is made of transparent material.

Correspondingly, the alternative of the housing for a water purifier according to the first embodiment of the present invention is formed by integrating the opaque housing body 10A with the transparent housing body 20A, and the second body portion 21A of the transparent housing body 20A is made of a transparent material, the opaque housing body 10A forms the window 110A, so that the opaque housing body 10A of the alternative of the housing for a water purifier according to the first embodiment of the present invention is made of an opaque material having better flexibility and can withstand long-term water pressure and water hammer, and the transparent housing body 20A is made of a transparent material having better rigidity, so that the opaque housing body 10A and the transparent housing body 20A can obtain complementary advantages, thereby allowing the user to view the usage status of the filter cartridge at any time while ensuring safety. In addition, due to that the opaque housing body 10A of the alternative of the housing for a water purifier according to the first embodiment of the present invention is made of opaque material, the use of expensive transparent materials is reduced, significantly reducing the manufacturing cost of the alternative of the housing for a water purifier according to the first embodiment of the present invention.

It is worth mentioning that, in order to reduce the manufacturing process difficulty of the alternative of the housing for a water purifier according to the first embodiment of the present invention while ensuring the safety of the alternative of the housing for a water purifier, the thickness of the opaque housing body 10A of the alternative of the housing for a water purifier according to the first embodiment of the present invention is not less than 2.5mm, the thickness of the transparent housing body 20A is not less than 2.5mm, and the thickness ratio of the opaque housing body 10A to the transparent housing body 20A of the alternative of the housing for a water purifier according to the first embodiment of the present invention is 1:3-3:1. Preferably, the thickness ratio of the opaque housing body 10A to the transparent housing body 20A of the alternative of the housing for a water purifier according to the first embodiment of the present invention is 1:2-2:1.

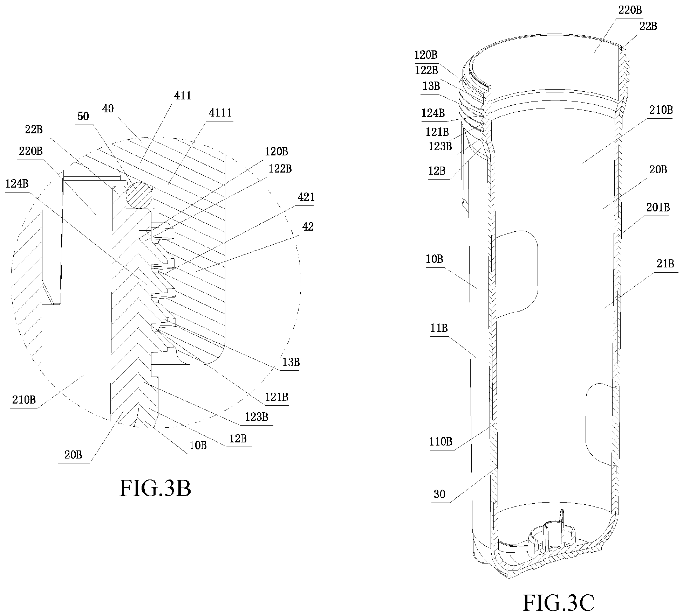

Figs.3A to 3C of the accompanying drawings illustrated an alternative of the housing for a water purifier according to the first embodiment of the present invention, which comprises a transparent housing body 10B and an opaque housing body 20B, wherein the transparent housing body 10B at least partially wraps around an outer surface 201B of the opaque housing body 20B, and the transparent housing body 10B and the opaque housing body 20B are integrated with each other, wherein the opaque housing body 20B forms at least one window 110B and a water treatment chamber 210B, wherein the transparent housing body 10B is transparent and the opaque housing body 20B is opaque. Correspondingly, the opaque housing body 20B of the alternative of the housing for a water purifier according to the first embodiment of the present invention has flexibility better than that of the transparent housing body 10B, and the transparent housing body 10B has rigidity stronger than that of the opaque housing body 20B. Therefore, the opaque housing body 20B is made of plastic material having better flexibility, and the transparent housing body 10B is made of plastic material having better rigidity and strength. It is appreciated that the water treatment chamber 210B formed by the opaque housing body 20B of the alternative of the housing for a water purifier according to the first embodiment of the present invention is used to accommodate water treatment materials inside the water treatment chamber 210B to purify raw water entering the water treatment chamber 210B.

As shown in Figs.3A to 3C of the accompanying drawings, the transparent housing body 10B of the alternative of the housing for a water purifier according to the first embodiment of the present invention comprises a first body portion 11B and a first opening portion 12B, and the opaque housing body 20B comprises a second body portion 21B and a second opening portion 22B, wherein the first opening portion 12B of the transparent housing body 10B is extended from the first body portion 11B, and the second opening portion 22B of the opaque housing body 20B is extended from the second body portion 21B, wherein the first opening portion 12B of the transparent housing body 10B forms a first opening 120B, and the second opening portion 22B of the opaque housing body 20B forms a second opening 220B, wherein the first opening 120B of the first opening portion 12B of the transparent housing body 10B and the second opening 220B of the second opening portion 22B of the opaque housing body 20B have the same orientation, wherein the first body portion 11B of the transparent housing body 10B wraps around the second body portion 21B of the opaque housing body 20B, and the second opening portion 22B of the opaque housing body 20B is partially wrapped by the first opening portion 12B of the transparent housing body 10B, wherein the at least one window 110B of the opaque housing body 20B is formed by the second body portion 21B of the opaque housing body 20B, and the window 110B of the opaque housing body 20B is positioned to face the first body portion 11B of the transparent housing body 10B. Correspondingly, the first body portion 11B of the transparent housing body 10B is integrated with the second body portion 21B of the opaque housing body 20B, the first opening portion 12B of the transparent housing body 10B is integrated with the second opening portion 22B of the opaque housing body 20B, so that the first opening portion 12B of the transparent housing body 10B wraps around the second opening portion 22B of the opaque housing body 20B.

As shown in Figs.3A to 3C of the accompanying drawings, further, both of the longitudinal sections of the first body portion 11B of the transparent housing body 10B and the second body portion 21B of the opaque housing body 20B of the alternative of the housing for a water purifier according to the first embodiment of the present invention are U-shaped, so that the first body portion 11B of the transparent housing body 10B and the second body portion 21B of the opaque housing body 20B can form a U-shaped double-layer structure. Therefore, both the longitudinal sections of the transparent housing body 10B and the opaque housing body 20B of the alternative of the housing for a water purifier according to the first embodiment of the present invention are U-shaped, so that the alternative of the housing for a water purifier according to the first embodiment of the present invention as a whole has a U-shaped double-layer structure in its longitudinal section. Preferably, the second body portion 21B of the opaque housing body 20B protrudes outwardly through the first opening 120B of the first opening portion 12B of the transparent housing body 10B, and when the alternative of the housing for a water purifier according to the first embodiment of the present invention is vertically placed with the opening facing upwards, the second opening portion 22B of the opaque housing body 20B is slightly higher than the first opening portion 12B of the transparent housing body 10B.

As shown in Figs.3A to 3C of the accompanying drawings, the alternative of the housing for a water purifier according to the first embodiment of the present invention further comprises a cover 40 and a sealing member 50, wherein the sealing member 50 is water-sealed between the cover 40 and a mechanism formed by integrating the transparent housing body 10B with the opaque housing body 20B. Preferably, the sealing member 50 is water-sealed between the cover 40 and the second opening portion 22B of the opaque housing body 20B.

As shown in Figs.3A to 3C of the accompanying drawings, the cover 40 of the alternative of the housing for a water purifier according to the first embodiment of the present invention comprises a cover body 41 and a screwing portion 42, wherein the screwing portion 42 of the cover 40 is extended from a peripheral edge 4111 of an inner side 411 of the cover body 41, and the sealing member 50 is provided on the inner side 411 of the cover body 41, wherein the first opening portion 12B of the transparent housing body 10B further has a first thread13B, the sealing member 50 is surrounded by the screwing portion 42 of the cover 40, and the screwing portion 42 forms a second thread 421, wherein the second thread 421 is provided to be suitable for being screwed with the first thread 13B of the first opening portion 12B of the transparent housing body 10B together, so that the cover 40 can be screwed to the first opening portion 12B of the transparent housing body 10B and the sealing member 50 can be pressed against the second opening portion 22B of the opaque housing body 20B and water-sealed between the cover 40 and the second opening portion 22B of the opaque housing body 20B. Preferably, the sealing member 50 is ring-shaped. Optionally, the sealing member 50 is pressed against the first opening portion 12B of the transparent housing body 10B and water-sealed between the cover 40 and the first opening portion 12B of the transparent housing body 10B.

As shown in Figs.3A to 3C of the accompanying drawings, the first thread 13B of the alternative of the housing for a water purifier according to the first embodiment of the present invention is an external thread formed on an outer side wall 121B of the first opening portion 12B of the transparent housing body 10B, and the second thread 421 of the screwing portion 42 of the cover 40 is an internal thread formed on the inner side wall 422 of the screwing portion 42 of the cover 40, wherein the second thread 421 is provided to be suitable for being screwed with the first thread 13B of the first opening portion 12B of the transparent housing body 10B together, the second opening portion 22B of the opaque housing body 20B protrudes outwardly through the first opening 120B of the first opening portion 12B of the transparent housing body 10B, so that the sealing member 50 can be water-sealed between the cover 40 and the second opening portion 22B of the opaque housing body 20B.

As shown in Figs.3A to 3C of the accompanying drawings, the first opening portion 12B of the transparent housing body 10B of the alternative of the housing for a water purifier according to the first embodiment of the present invention forms a top end 122B, a bottom end 123B and a thread forming portion 124B extended between the top end 122B and the bottom end 123B, wherein the top end 122B of the first opening portion 12B of the transparent housing body 10B forms the first opening 120B, and the bottom end 123B of the first opening portion 12B of the transparent housing body 10B wraps around the second opening portion 22B of the opaque housing body 20B, the first thread 13B of the first opening portion 12B of the transparent housing body 10B is formed by the thread forming portion 124B of the first opening portion 12B of the transparent housing body 10B. Correspondingly, when the first opening portion 12B of the transparent housing body 10B is connected to the cover 40 of the alternative of the housing for a water purifier according to the first embodiment of the present invention (e.g., screwed together), the opaque housing body 20B, as an inner layer, is made of opaque material, which has better resistance to water hammer impact and avoids direct water hammer impact on the outer transparent housing body 10B, thereby improving the safety of the alternative of the housing for a water purifier according to the first embodiment of the present invention. In addition, due to that the transparent housing body 10B is made of transparent material, which can form the surface of the alternative of the housing for a water purifier according to the first embodiment of the present invention, and the transparent plastic material has high smoothness, so the outer transparent housing body 10B can produce a mirror effect and have a better product texture. At the same time, the smooth outer surface formed for the transparent plastic material is less prone to dust and easier to wipe, clean, and maintain.

It is worth mentioning that the first body portion 11B of the alternative of the housing for a water purifier according to the first embodiment of the present invention wraps around the second body portion 21B of the opaque housing body 20B, and the second opening portion 22B of the opaque housing body 20B is at least partially wrapped by the first opening portion 12B of the transparent housing body10B, and the second opening portion 22B of the opaque housing body 20B protrudes outwardly through the first opening 120B of the first opening portion 12B of the transparent housing body 10B, so that when the first opening portion 12B of the transparent housing body 10B is connected to the cover 40 of the alternative of the housing for a water purifier according to the first embodiment of the present invention (e.g., screwed together), the second opening portion 22B of the opaque housing body 20B can provide a supporting effect on the first opening portion 12B of the transparent housing body 10B. Further, considering that the alternative of the housing for a water purifier according to the first embodiment of the present invention, as a manufactured product, even though only has a mechanism formed by integrating the transparent housing body 10B with the opaque housing body 20B, which can be used for sales purposes (the cover 40 can be allocated by downstream distributors). Therefore, although the present invention exemplarily describes the threaded connection between the first opening portion 12B of the transparent housing body 10B of the alternative of the housing for a water purifier according to the first embodiment of the present invention and the cover 40, the alternative of the housing for a water purifier according to the first embodiment of the present invention is not limited to necessarily having the cover 40.

As shown in Figs.3A to 3C of the accompanying drawings, the alternative of the housing for a water purifier according to the first embodiment of the present invention of further comprises at least one transparent window body 30B, wherein the at least one transparent window body 30B is disposed in the at least one window 110B formed by the second body portion 21B of the opaque housing body 20B, and the at least one transparent window body 30B is integrated with the first body portion 11B of the transparent housing body 10B and the second body portion 21B of the opaque housing body 20B, respectively. Preferably, the at least one transparent window body 30B and the first body portion 11B of the transparent housing body 10B are made of the same material, and the at least one transparent window body 30B and the first body portion 11B of the transparent housing body 10B are formed synchronously.

As shown in Figs.3A to 3C of the accompanying drawings, preferably, the second body portion 21B of the opaque housing body 20B of the alternative of the housing for a water purifier according to the first embodiment of the present invention forms a plurality of windows 110B. More preferably, the windows 110B of the second body portion 21B of the opaque housing body 20B are arranged to be separated from each other and staggered from each other. It is appreciated that the at least one transparent window body 30B is made of transparent material.

Correspondingly, the alternative of the housing for a water purifier according to the first embodiment of the present invention is formed by integrating the opaque housing body 20B with the transparent housing body 10B, and the first body portion 11B of the transparent housing body 10B is made of a transparent material, the opaque housing body 10B forms the window 110B, so that the opaque housing body 20B of the alternative of the housing for a water purifier according to the first embodiment of the present invention is made of an opaque material having better flexibility and can withstand long-term water pressure and water hammer, and the transparent housing body 10B is made of a transparent material having better rigidity, so that the opaque housing body 20B and the transparent housing body 10B can obtain complementary advantages, thereby allowing the user to view the usage status of the filter cartridge at any time while ensuring safety. In addition, due to that the opaque housing body 20B of the alternative of the housing for a water purifier according to the first embodiment of the present invention is made of opaque material, the use of expensive transparent materials is reduced, significantly reducing the manufacturing cost of the alternative of the housing for a water purifier according to the first embodiment of the present invention.

It is worth mentioning that, in order to reduce the manufacturing process difficulty of the alternative of the housing for a water purifier according to the first embodiment of the present invention while ensuring the safety of the alternative of the housing for a water purifier, the thickness of the transparent housing body 10B of the alternative of the housing for a water purifier according to the first embodiment of the present invention is not less than 2.5mm, the thickness of the opaque housing body 20B is not less than 2.5mm, and the thickness ratio of the opaque housing body 20B to the transparent housing body 10B of the alternative of the housing for a water purifier according to the first embodiment of the present invention is 1:3-3:1.

Preferably, the thickness ratio of the opaque housing body 20B to the transparent housing body 10B of the alternative of the housing for a water purifier according to the first embodiment of the present invention is 1:2-2:1.

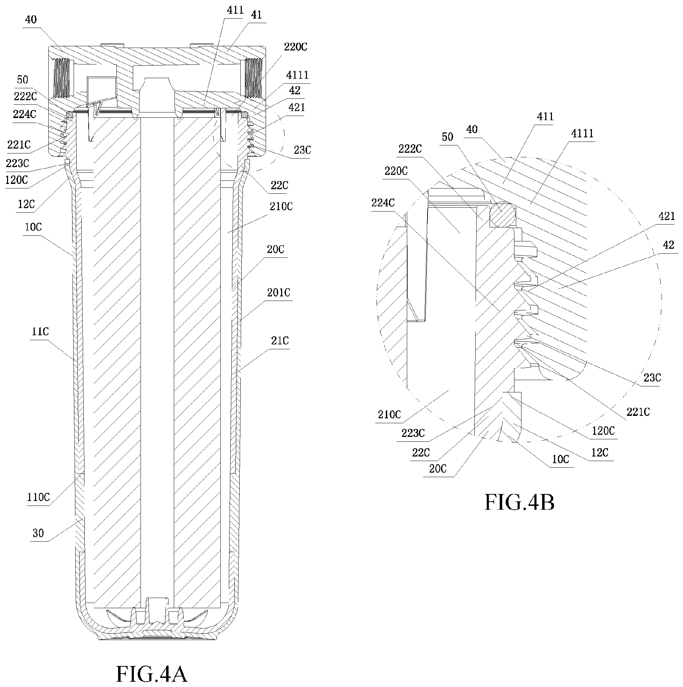

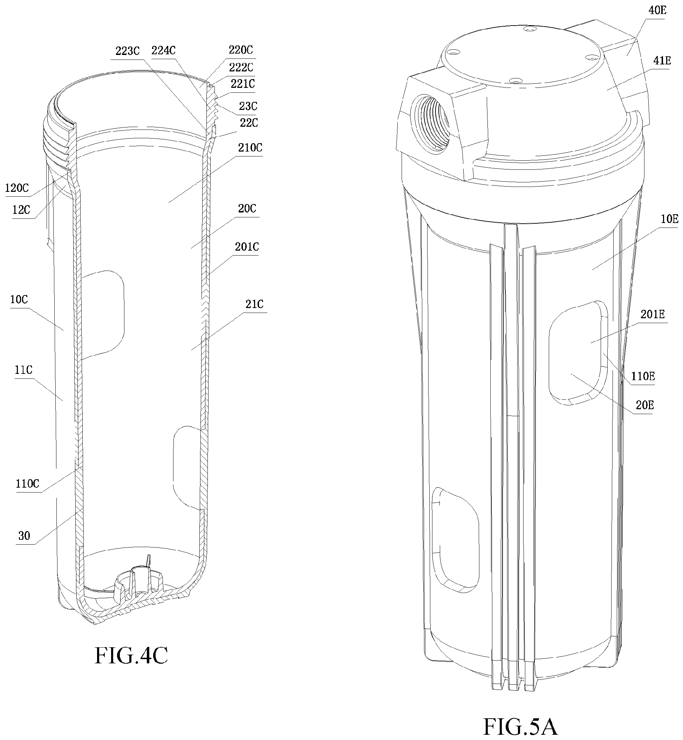

Figs.4A to 4C of the accompanying drawings illustrates an alternative of the housing for a water purifier according to the first embodiment of the present invention, which comprises a transparent housing body 10C and an opaque housing body 20C, wherein the transparent housing body 10C at least partially wraps around an outer surface 201C of the opaque housing body 20C, and the transparent housing body 10C and the opaque housing body 20C are integrated with each other, wherein the opaque housing body 20C forms at least one window 110C and a water treatment chamber 210C, wherein the transparent housing body 10C is transparent and the opaque housing body 20C is opaque. Correspondingly, the opaque housing body 20C of the alternative of the housing for a water purifier according to the first embodiment of the present invention has flexibility better than that of the transparent housing body 10C, and the transparent housing body 10C has rigidity stronger than that of the opaque housing body 20C. Therefore, the opaque housing body 20C is made of plastic material having better flexibility, and the transparent housing body 10C is made of plastic material having better rigidity and strength.

It is appreciated that the water treatment chamber 210C formed by the opaque housing body 20C of the alternative of the housing for a water purifier according to the first embodiment of the present invention is used to accommodate water treatment materials inside the water treatment chamber 210C to purify raw water entering the water treatment chamber 210C.

As shown in Figs.4A to 4C of the accompanying drawings, the transparent housing body 10C of the alternative of the housing for a water purifier according to the first embodiment of the present invention comprises a first body portion 11C and a first opening portion 12C, and the opaque housing body 20C comprises a second body portion 21C and a second opening portion 22C, wherein the first opening portion 12C of the transparent housing body 10C is extended from the first body portion 11C, and the second opening portion 22C of the opaque housing body 20C is extended from the second body portion 21C, wherein the first opening portion 12C of the transparent housing body 10C forms a first opening 120C, and the second opening portion 22C of the opaque housing body 20C forms a second opening 220C, wherein the first opening 120C of the first opening portion 12C of the transparent housing body 10C and the second opening 220C of the second opening portion 22C of the opaque housing body 20C have the same orientation, wherein the first body portion 11C of the transparent housing body 10C wraps around the second body portion 21C of the opaque housing body 20C and the second opening portion 22C of the opaque housing body 20C is at least partially wrapped around by the first opening portion 12C of the transparent housing body 10C, wherein the at least one window 110C of the opaque housing body 20C is formed by the second body portion 22C of the opaque housing body 20C, and the window 110C of the opaque housing body 20C is positioned to face the first body portion 12C of the transparent housing body 10C. Correspondingly, the first body portion 11C of the transparent housing body 10C is integrated with the second body portion 21C of the opaque housing body 20C, the first opening portion 12C of the transparent housing body 10C is integrated with the second opening portion 22C of the opaque housing body 20C, so that the first opening portion 12C of the transparent housing body 10C wraps around a neck of the second opening portion 22C of the opaque housing body 20C. Correspondingly, the second opening portion 22C of the opaque housing body 20C protrudes outwardly through the first opening 120C of the first opening portion 12C of the transparent housing body 10C, and the first opening portion 12C of the transparent housing body 10C wraps around the second opening portion 22C of the opaque housing body 20C.

As shown in Figs.4A to 4C of the accompanying drawings, further, both of the longitudinal sections of the first body portion 11C of the transparent housing body 10C and the second body portion 21C of the opaque housing body 20C of the alternative of the housing for a water purifier according to the first embodiment of the present invention are U-shaped, so that the first body portion 11C of the transparent housing body 10C and the second body portion 21C of the opaque housing body 20C can form a U-shaped double-layer structure. Therefore, both the longitudinal sections of the transparent housing body 10C and the opaque housing body 20C of the alternative of the housing for a water purifier according to the first embodiment of the present invention are U-shaped, so that the alternative of the housing for a water purifier according to the first embodiment of the present invention as a whole has a U-shaped double-layer structure in its longitudinal section.

As shown in Figs.4A to 4C of the accompanying drawings, the alternative of the housing for a water purifier according to the first embodiment of the present invention further comprises a cover 40 and a sealing member 50, wherein the sealing member 50 is water-sealed between the cover 40 and a mechanism formed by integrating the transparent housing body 10C with the opaque housing body 20C. Preferably, the sealing member 50 is water-sealed between the cover 40 and the second opening portion 22C of the opaque housing body 20C.

As shown in Figs.4A to 4C of the accompanying drawings, the cover 40 of the alternative of the housing for a water purifier according to the first embodiment of the present invention comprises a cover body 41 and a screwing portion 42, wherein the screwing portion 42 of the cover 40 is extended from a peripheral edge 4111 of an inner side 411 of the cover body 41, and the sealing member 50 is provided on the inner side 411 of the cover body 41, wherein the second opening portion 22C of the opaque housing body 20C further has a first thread 23C, the sealing member 50 is surrounded by the screwing portion 42 of the cover 40, and the screwing portion 42 forms a second thread 421, wherein the second thread 421 is provided to be suitable for being screwed with the first thread 23C of the second opening portion 22C of the opaque housing body 20C together, so that the cover 40 can be screwed to the second opening portion 22C of the opaque housing body 20C and the sealing member 50 can be pressed against the second opening portion 22C of the opaque housing body 20C and water-sealed between the cover 40 and the second opening portion 22C of the opaque housing body 20C. Preferably, the sealing member 50 is ring-shaped.

As shown in Figs.4A to 4C of the accompanying drawings, the first thread 23C of the alternative of the housing for a water purifier according to the first embodiment of the present invention is an external thread formed on an outer side wall 221C of the second opening portion 22C of the opaque housing body 20C, and the second thread 421 of the screwing portion 42 of the cover 40 is an internal thread formed on the inner side wall 422 of the screwing portion 42 of the cover 40, wherein the second thread 421 is provided to be suitable for being screwed with the first thread 23C of the second opening portion 22C of the opaque housing body 20C together, so that the sealing member 50 can be water-sealed between the cover 40 and the second opening portion 22C of the opaque housing body 20C.

As shown in Figs.4A to 4C of the accompanying drawings, the second opening portion 22C of the opaque housing body 20C of the alternative of the housing for a water purifier according to the first embodiment of the present invention forms a top end 222C, a bottom end 223C and a thread forming portion 224C extended between the top end 222C and the bottom end 223C, wherein the top end 222C of the second opening portion 22C of the opaque housing body 20C forms the second opening 220C, and the bottom end 223C of the second opening portion 22C of the opaque housing body 20C is covered by the first opening portion 12C of the transparent housing body 10C, the first thread 23C of the second opening portion 22C of the opaque housing body 20C is formed by the thread forming portion 224C of the second opening portion 22C of the opaque housing body 20C. Correspondingly, the opaque housing body 20C is made of opaque material, which has stronger resistance to water hammer impact compared to the transparent material of the transparent housing body 10C, and can prevent the first body portion 11C and the first opening portion 12C of the transparent housing body 10C from being directly impacted by water hammer for a long time and causing rupture. Further, the second opening portion 22C of the opaque housing body 20C is connected to the cover 40 of the alternative of the housing for a water purifier according to the first embodiment of the present invention (e.g., when screwed together), and the second opening portion 22C of the opaque housing body 20C protrudes outwardly through the first opening 120C of the first opening portion 12C of the transparent housing body 10C to avoid the first body portion 11C and the first opening portion 12C of the transparent housing body 10C from being subjected to the stress generated by the connection between the cover 40 and the opaque housing body 20C. Preferably, the second opening portion 22C of the opaque housing body 20C is thickened to enhance its strength and prevent it from shattering under stress. Further, considering that the alternative of the housing for a water purifier according to the first embodiment of the present invention, as a manufactured product, even though only has a mechanism formed by integrating the transparent housing body 10C with the opaque housing body 20C, which can be used for sales purposes (the cover 40 can be allocated by downstream distributors). Therefore, although the present invention exemplarily describes the threaded connection between the second opening portion 22C of the opaque housing body 20C of the alternative of the housing for a water purifier according to the first embodiment of the present invention and the cover 40, the alternative of the housing for a water purifier according to the first embodiment of the present invention is not limited to necessarily having the cover 40.

As shown in Figs.4A to 4C of the accompanying drawings, the alternative of the housing for a water purifier according to the first embodiment of the present invention further comprises at least one transparent window body 30C, wherein the at least one transparent window body 30C is disposed in the at least one window 110C formed by the second body portion 21C of the opaque housing body 20C, and the at least one transparent window body 30C is integrated with the first body portion 11C of the transparent housing body 10C and the second body portion 21C of the opaque housing body 20C, respectively. Preferably, the at least one transparent window body 30C and the first body portion 11C of the transparent housing body 10C are made of the same material, and the at least one transparent window body 30C and the first body portion 11C of the transparent housing body 10C are formed synchronously.

As shown in Figs.4A to 4C of the accompanying drawings, preferably, the second body portion 21C of the opaque housing body 20C of the alternative of the housing for a water purifier according to the first embodiment of the present invention forms a plurality of windows 110C. More preferably, the windows 110C of the second body portion 21C of the opaque housing body 20C are arranged to be separated from each other and staggered from each other. Preferably, the at least one transparent window body 30C is made of transparent material.

Correspondingly, the alternative of the housing for a water purifier according to the first embodiment of the present invention is formed by integrating the opaque housing body 20C with the transparent housing body 10C, and the first body portion 11C of the transparent housing body 10C is made of a transparent material, the opaque housing body 10C forms the window 110C, so that the opaque housing body 20C of the alternative of the housing for a water purifier according to the first embodiment of the present invention is made of an opaque material having better flexibility and can withstand long-term water pressure and water hammer, and the transparent housing body 10C is made of a transparent material having better rigidity, so that the opaque housing body 20C and the transparent housing body 10C can obtain complementary advantages, thereby allowing the user to view the usage status of the filter cartridge at any time while ensuring safety. In addition, due to that the opaque housing body 20C of the alternative of the housing for a water purifier according to the first embodiment of the present invention is made of opaque material, the use of expensive transparent materials is reduced, significantly reducing the manufacturing cost of the alternative of the housing for a water purifier according to the first embodiment of the present invention.

It is worth mentioning that, in order to reduce the manufacturing process difficulty of the alternative of the housing for a water purifier according to the first embodiment of the present invention while ensuring the safety of the alternative of the housing for a water purifier, the thickness of the transparent housing body 10C of the alternative of the housing for a water purifier according to the first embodiment of the present invention is not less than 2.5mm, the thickness of the opaque housing body 20C is not less than 2.5mm, and the thickness ratio of the opaque housing body 20C to the transparent housing body 10C of the alternative of the housing for a water purifier according to the first embodiment of the present invention is 1:3-3:1. Preferably, the thickness ratio of the opaque housing body 20C to the transparent housing body 10C of the alternative of the housing for a water purifier according to the first embodiment of the present invention is 1:2-2:1.

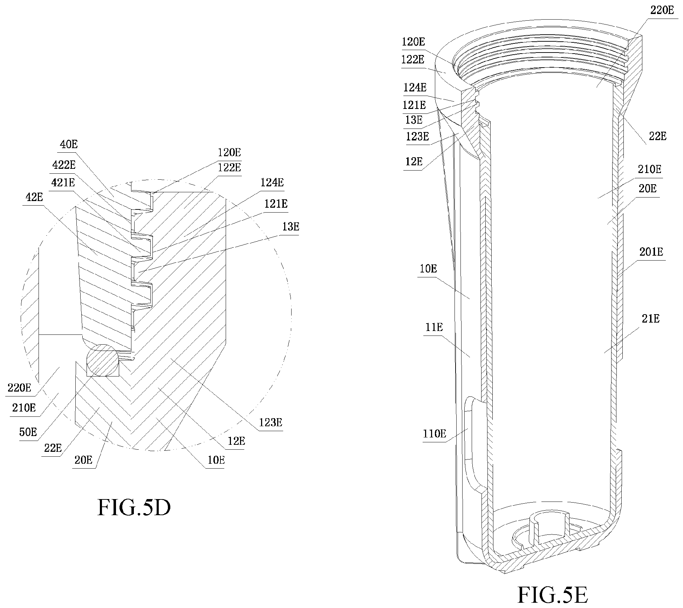

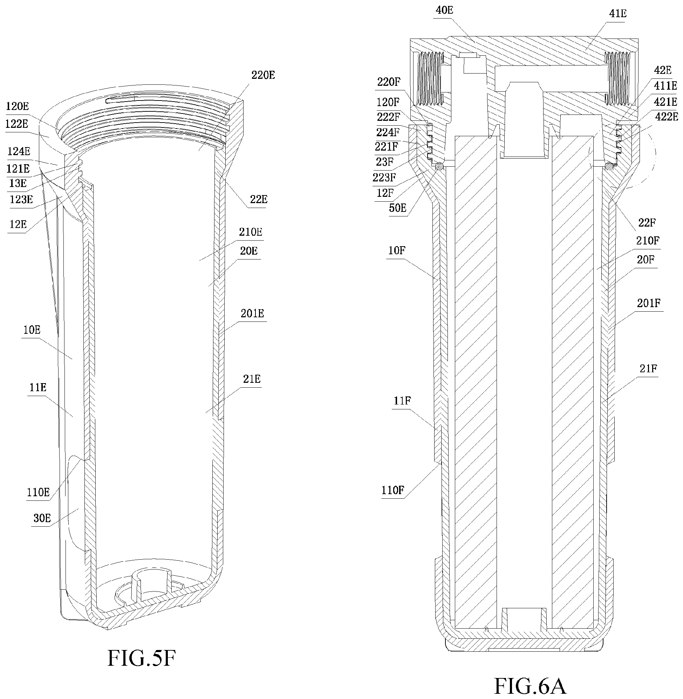

Figs.5A to 5F of the accompanying drawings illustrate a housing for a water purifier according to the second embodiment of the present invention is illustrated, wherein the housing for a water purifier according to the second embodiment of the present invention comprises an opaque housing body 10E and a transparent housing body 20E, wherein the opaque housing body 10E at least partially wraps around an outer surface 201E of the transparent housing body 20E, and the opaque housing body 10E and the transparent housing body 20E are integrated with each other, wherein the opaque housing body 10E forms at least one window 110E, and the transparent housing body 20E forms a water treatment chamber 210E, wherein the opaque housing body 10E is opaque and the transparent housing body 20E is transparent. Correspondingly, the opaque housing body 10E of the housing for a water purifier according to the second embodiment of the present invention has flexibility better than that of the transparent housing body 20E, and the transparent housing body 20E has rigidity stronger than that of the opaque housing body 10E. Therefore, the opaque housing body 10E is made of plastic material having better flexibility, and the transparent housing body 20E is made of plastic material having better rigidity and strength.

It is appreciated that the water treatment chamber 210E formed by the transparent housing body 20E of the housing for a water purifier according to the second embodiment of the present invention is used to accommodate water treatment materials inside the water treatment chamber 210E to purify raw water entering the water treatment chamber 210E. It is appreciated that the opaque housing body 10E of the housing for a water purifier according to the second embodiment of the present invention can provide a stable support for the transparent housing body 20E.

As shown in Figs.5A to 5F of the accompanying drawings, the opaque housing body 10E of the housing for a water purifier according to the second embodiment of the present invention has a first body portion 11E and a first opening portion 12E, the transparent housing body 20E has a second body portion 21E and a second opening portion 22E, wherein the first opening portion 12E of the opaque housing body 10E is extended from the first body portion 11E, the second opening portion 22E of the transparent housing body 20E is extended from the second body portion 21E, wherein the first opening portion 12E of the opaque housing body 10E forms a first opening 120E and the second opening portion 22E of the transparent housing body 20E forms a second opening 220E, wherein the first opening 120E of the first opening portion 12E of the opaque housing body 10E and the second opening 220E of the second opening portion 22E of the transparent housing body 20E have the same orientation, wherein the first body portion 11E of the opaque housing body 10E wraps around the second body portion 21E of the transparent housing body 20E, the first opening portion 12E of the opaque housing body 10E wraps around the second opening portion 22E of the transparent housing body 20E, wherein the at least one window 110E of the opaque housing body 10E is formed by the first body portion 11E of the opaque housing body 10E and the window 110E of the opaque housing body 10E is positioned to face the second body portion 21E of the transparent housing body 20E. Correspondingly, the first body portion 11E of the opaque housing body 10E is integrated with the second body portion 21E of the transparent housing body 20E; the first opening portion 12E of the opaque housing body 10E is integrated with the second opening portion 22E of the transparent housing body 20E.

As shown in Figs.5A to 5F of the accompanying drawings, further, both of the longitudinal sections of the opaque housing body 10E and the transparent housing body 20E of the housing for a water purifier according to the second embodiment of the present invention are U-shaped, so that the opaque housing body 10E and the transparent housing body 20E can form a U-shaped double-layer structure. Therefore, both the longitudinal sections of the opaque housing body 10E and the transparent housing body 20E of the housing for a water purifier according to the second embodiment of the present invention are U-shaped, so that the housing for a water purifier according to the second embodiment of the present invention as a whole has a U-shaped double-layer structure in its longitudinal section.

As shown in Figs.5A to 5F of the accompanying drawings, the housing for a water purifier according to the second embodiment of the present invention further comprises a cover 40E and a sealing member 50E, wherein the sealing member 50E is water-sealed between the cover 40E and a mechanism formed by integrating the opaque housing body 10E with the transparent housing body 20E. Preferably, the sealing member 50E is water-sealed between the cover 40E and the second opening portion 22E of the transparent housing body 20E.

As shown in Figs.5A to 5F of the accompanying drawings, the cover 40E of the housing for a water purifier according to the second embodiment of the present invention comprises a cover body 41E and a screwing portion 42E, wherein the screwing portion 42E of the cover 40E is extended from an outer side 411E of the cover body 41E, and the sealing member 50E is provided between the screwing portion 42E of the cover 40E and the second opening portion 22E of the transparent housing body 20E, wherein the first opening portion 12E of the opaque housing body 10E further has a first thread 13E and the screwing portion 42E of the cover 40E forms a second thread 421E, wherein the second thread 421E is provided to be suitable for being screwed with the first thread 13E of the first opening portion 12E of the opaque housing body 10E together, so that the cover 40E can be screwed to the first opening portion 12E of the opaque housing body 10E and the sealing member 50E can be pressed against the second opening portion 22E of the transparent housing boy 20E and water-sealed between the screwing portion 42E of the cover 40E and the second opening portion 22E of the transparent housing body 20E. Preferably, the first opening portion 12E of the opaque housing body 10E has a length longer than the second opening portion 22E of the transparent housing body 20E, so that the second opening portion 22E of the transparent housing body 20E is completely covered by the first opening portion 12E of the opaque housing body 10E and the second opening 220E of the second opening portion 22E of the transparent housing body 20E can be hidden within the first opening portion 12E of the opaque housing body 10E.

Preferably, the sealing member 50E is annular, and its width is no greater than the thickness of the second opening portion 22E of the transparent housing body 20E.

As shown in Figs.5A to 5F of the accompanying drawings, the first thread 13E of the housing for a water purifier according to the second embodiment of the present invention is an internal thread formed on an inner side wall 121E of the first opening portion 12E of the opaque housing body 10E, and the second thread 421E of the screwing portion 42E of the cover 40E is an external thread formed on the outer side wall 422E of the screwing portion 42E of the cover 40E, wherein the second thread 421E is provided to be suitable for being screwed with the first thread 13E of the first opening portion 12E of the opaque housing body 10E together, so that the sealing member 50E can be water-sealed between the cover 40E and the second opening portion 22E of the transparent housing body 20E.

As shown in Figs.5A to 5F of the accompanying drawings, the first opening portion 12E of the opaque housing body 10E of the housing for a water purifier according to the second embodiment of the present invention forms a top end 122E, a bottom end 123E and a thread forming portion 124E extended between the top end 122E and the bottom end 123E, wherein the top end 122E of the first opening portion 12E of the opaque housing body 10E forms the second opening 120E, and the second opening portion 22E of the transparent housing body 20E is integrated with the bottom end 123E of the first opening portion 12E of the opaque housing body 10E, the first thread 13E of the first opening portion 12E of the opaque housing body 10E is formed by the thread forming portion 124E of the first opening portion 12E of the opaque housing body 10E. Correspondingly, when the first opening portion 12E of the opaque housing body 10E is connected to the cover 40E of the housing for a water purifier according to the second embodiment of the present invention (e.g., screwed together), the second opening portion 22E of the transparent housing body 20E is connected to the cover 40E. Therefore, the cover 40E of the second embodiment of the present invention and the second opening portion 22E of the transparent housing body 20E form a seal, so that water pressure can only be applied to a sealing chamber formed by the cover 40E, the sealing member 50E and the transparent housing body 20E, avoiding water pressure and water hammer generated by water pressure from directly acting on the thread forming portion 124E of the first opening portion 12E of the opaque housing body 10E, thereby significantly reducing the stress generated by water pressure on the first opening portion 12E of the opaque housing body 10E, so as to prevent the first opening portion 12E of the opaque housing body 10E from being shattered under stress. At the same time, the opaque housing body 10E is made of opaque material, which makes the first thread 13E of the first opening portion 12E of the opaque housing body 10E have good resistance to water hammer impact, are not easy to break, have a longer service life, and are safer. Preferably, the first opening portion 12E of the opaque housing body 10E is thickened to enhance its strength, prevent excessive deformation when subjected to stress, and avoid excessive stress on the second body portion 21E and the second opening portion 22E of the transparent housing body 20E.

It is worth mentioning that a thread of the housing for a water purifier according to the second embodiment of the present invention, which is used for screwing the housing for a water purifier and the cover 40E together, is formed on the inner side wall 121E of the first opening portion 12E of the opaque housing body 10E to avoid the risk of rupture of the second opening portion 22E of the transparent housing body 20E caused by a stress applied on the second opening portion 22E of the transparent housing body 20E when the thread is provided on the second opening portion 22E of the transparent housing body 20E, wherein the stress is generated by screwing the housing for a water purifier and the cover 40E. In addition, the first opening portion 12E of the opaque housing body 10E of the housing for a water purifier according to the second embodiment of the present invention has a length longer than that of the second opening portion 22E of the transparent housing body 20E, so that the second opening portion 22E of the transparent housing body 20E is completely wrapped by the first opening portion 12E of the opaque housing body 10E and the second opening 220E of the second opening portion 22E of the transparent housing body 20E can be hidden within the first opening portion 12E of the opaque housing body 10E, so that a position where the second opening 220E of the second opening portion 22E of the transparent housing body 20E is located is staggered from a position where the first thread 13E of the first opening portion 12E of the opaque housing body 10E is located, so that when the first opening portion 12E of the opaque housing body 10E and the cover 40E of the housing for a water purifier according to the second embodiment of the present invention are connected with each other (e.g. screwed together), the second body portion 21E and the second opening portion 22E of the transparent housing body 20E can avoid directly bearing the stress generated when the cover 40E is connected to the first opening portion 12E of the opaque housing body 10E. In other words, since the cover 40E is connected to the first opening portion 12E of the opaque housing body 10E, the position where the second opening 220E of the second opening portion 22E of the transparent housing body 20E is located is staggered from the position where the first thread 13E of the first opening portion 12E of the opaque housing body 10E is located. Therefore, the stress applied on the position where the second opening 220E of the second opening portion 22E of the transparent housing body 20E is located has been reduced, so as to prevent the second opening portion 22E of the transparent housing body 20E from being cracked under long-term stress (or reducing the probability of cracking), and allowing the thickness of the transparent housing body 20E to be reduced and making the manufacturing cost of the housing for a water purifier according to the second embodiment of the present invention be reduced. Finally, the sealing member 50E is water-sealed between the screwing portion 42E of the cover 40E and the second opening portion 22E of the transparent housing body 20E, so that the transparent housing body 20E, the cover 40E and the sealing member 50E form a continuous water-sealed whole mechanism, and the water pressure can only directly be applied on a sealing chamber formed by the cover 40E, the sealing member 50E and the transparent housing body 20E to reduce the possibility of leakage of the water to be treated and the purified water.

As shown in Figs.5A to 5F of the accompanying drawings, the housing for a water purifier according to the second embodiment of the present invention further comprises at least one transparent window body 30E, wherein the at least one transparent window body 30E is disposed in the at least one window 110E formed by the first body portion 11E of the opaque housing body 10E, and the at least one transparent window body 30E is integrated with the first body portion 11E of the opaque housing body 10E and the second body portion 21E of the transparent housing body 20E respectively. Preferably, the at least one transparent window body 30E and the second body portion 21E of the transparent housing body 20E are made of the same material, and the at least one transparent window body 30E and the second body portion 21E of the transparent housing body 20E are formed synchronously. Preferably, the opaque housing body 10E forms a plurality of windows 110E. More preferably, the windows 110E of the opaque housing body 10E are arranged to be separated from each other. Preferably, the at least one transparent window body 30E is made of transparent material.

Correspondingly, the housing for a water purifier according to the second embodiment of the present invention is formed by integrating the opaque housing body 10E with the transparent housing body 20E, and the second body portion 21E of the transparent housing body 20E is made of a transparent material, the opaque housing body 10E forms the window 110E, so that the opaque housing body 10E of the housing for a water purifier according to the second embodiment of the present invention is made of an opaque material having better flexibility and can withstand long-term water pressure and water hammer, and the transparent housing body 20E is made of a transparent material having better rigidity, so that the opaque housing body 10E and the transparent housing body 20E can obtain complementary advantages, thereby allowing the user to view the usage status of the filter cartridge at any time while ensuring safety. In addition, due to that the opaque housing body 10E of the housing for a water purifier according to the second embodiment of the present invention is made of opaque material, the use of expensive transparent materials is reduced, significantly reducing the manufacturing cost of the housing for a water purifier according to the second embodiment of the present invention.

It is worth mentioning that, in order to reduce the manufacturing process difficulty of the housing for a water purifier according to the second embodiment of the present invention while ensuring the safety of the housing for a water purifier, the thickness of the opaque housing body 10E of the housing for a water purifier according to the second embodiment of the present invention is not less than 2.5mm, the thickness of the transparent housing body 20E is not less than 2.5mm, and the thickness ratio of the opaque housing body 10E to the transparent housing body 20E of the housing for a water purifier according to the second embodiment of the present invention is 1:3-3:1. Preferably, the thickness ratio of the opaque housing body 10E to the transparent housing body 20E of the housing for a water purifier according to the second embodiment of the present invention is 1:2-2:1.

Further, considering that the housing for a water purifier according to the second embodiment of the present invention, as a manufactured product, even though only has a mechanism formed by integrating the opaque housing body 10E with the transparent housing body 20E, which can be used for sales purposes (the cover 40E can be allocated by downstream distributors). Therefore, although the present invention exemplarily describes the threaded connection between the first opening portion 12E of the opaque housing body 10E of the housing for a water purifier according to the second embodiment of the present invention, and the cover 40E the housing for a water purifier according to the second embodiment of the present invention is not limited to necessarily having the cover 40E.

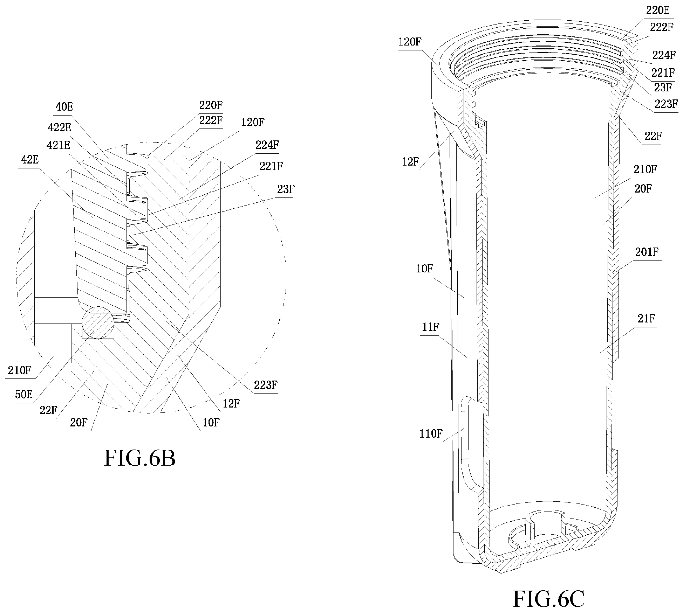

Referring to Figs.6A to 6C of the accompanying drawings, an alternative of the housing for a water purifier according to the second embodiment of the present invention is illustrated, wherein the housing for a water purifier according to the second embodiment of the present invention comprises an opaque housing body 10F and a transparent housing body 20F, wherein the opaque housing body 10F at least partially wraps around an outer surface 201F of the transparent housing body 20F, and the opaque housing body 10F and the transparent housing body 20F are integrated with each other, wherein the opaque housing body 10F forms at least one window 110F, and the transparent housing body 20F forms a water treatment chamber 210F, wherein the opaque housing body 10F is opaque and the transparent housing body 20F is transparent. Correspondingly, the opaque housing body 10F of the alternative of the housing for a water purifier according to the second embodiment of the present invention has flexibility better than that of the transparent housing body 20F, and the transparent housing body 20F has a rigidity stronger than that of the opaque housing body 10F. Therefore, the opaque housing body 10F is made of plastic material having better flexibility, and the transparent housing body 20F is made of plastic material having better rigidity and strength. It is appreciated that the water treatment chamber 210F formed by the transparent housing body 20F of the alternative of the housing for a water purifier according to the second embodiment of the present invention is used to accommodate water treatment materials inside the water treatment chamber 210F to purify raw water entering the water treatment chamber 210F. It is appreciated that the opaque housing body 10F of the alternative of the housing for a water purifier according to the second embodiment of the present invention can provide a stable support for the transparent housing body 20F.

As shown in Figs.6A to 6C of the accompanying drawings, the opaque housing body 10F of the alternative of the housing for a water purifier according to the second embodiment of the present invention has a first body portion 11F and a first opening portion 12F, the transparent housing body 20F has a second body portion 21F and a second opening portion 22F, wherein the first opening portion 12F of the opaque housing body 10F is extended from the first body portion 11F, the second opening portion 22F of the transparent housing body 20F is extended from the second body portion 21F, wherein the first opening portion 12F of the opaque housing body 10F forms a first opening 120F and the second opening portion 22F of the transparent housing body 20F forms a second opening 220F, wherein the first opening 120F of the first opening portion 12F of the opaque housing body 10F and the second opening 220F of the second opening portion 22F of the transparent housing body 20F have the same orientation, wherein the first body portion 11F of the opaque housing body 10F wraps around the second body portion 21F of the transparent housing body 20F, the first opening portion 12F of the opaque housing body 10F wraps around the second opening portion 22F of the transparent housing body 20F, wherein the at least one window 110F of the opaque housing body 10F is formed by the first body portion 11F of the opaque housing body 10F and the window 110F of the opaque housing body 10F is positioned to face the second body portion 21F of the transparent housing body 20F. Correspondingly, the first body portion 11F of the opaque housing body 10F is integrated with the second body portion 21F of the transparent housing body 20F; the first opening portion 12F of the opaque housing body 10F is integrated with the second opening portion 22F of the transparent housing body 20F.

As shown in Figs.6A to 6C of the accompanying drawings, further, both of the longitudinal sections of the opaque housing body 10F and the transparent housing body 20F of the alternative of the housing for a water purifier according to the second embodiment of the present invention are U-shaped, so that the opaque housing body 10F and the transparent housing body the rotation can form a U-shaped double-layer structure. Therefore, both the longitudinal sections of the opaque housing body 10F and the transparent housing body 20F of the alternative of the housing for a water purifier according to the second embodiment of the present invention are U-shaped, so that the alternative of the housing for a water purifier according to the second embodiment of the present invention as a whole has a U-shaped double-layer structure in its longitudinal section.

As shown in Figs.6A to 6C of the accompanying drawings, the alternative of the housing for a water purifier according to the second embodiment of the present invention further comprises a cover 40E and a sealing member 50E, wherein the sealing member 50E is water-sealed between the cover 40E and a mechanism formed by integrating the transparent housing body 20F with the opaque housing body 10F. Preferably, the sealing member 50E is water-sealed 10F between the cover 40E and the second opening portion 22F of the transparent housing body 20F.

As shown in Figs.6A to 6C of the accompanying drawings, the cover 40E of the alternative of the housing for a water purifier according to the second embodiment of the present invention comprises a cover body 41E and a screwing portion 42E, wherein the screwing portion 42E of the cover 40E is extended from an outer side 411E of the cover body 41E, and the sealing member 50E is provided between the screwing portion 42E of the cover 40E and the second opening portion 22F of the transparent housing body 20F, wherein the second opening portion 22F of the transparent housing body 20F further has a first thread 23F and the screwing portion 42E of the cover 40E forms a second thread 421E, wherein the second thread 421E is provided to be suitable for being screwed with the first thread 23F of the second opening portion 22F of the transparent housing body 20F together, so that the cover 40E can be screwed to the second opening portion 22F of the transparent housing body 20F and the sealing member 50E can be pressed against the second opening portion 22F of the transparent housing boy 20F and water-sealed between the cover 40E and the second opening portion 22F of the transparent housing body 20F. Preferably, the first opening portion 12F of the opaque housing body 10F has a length no less than that the second opening portion 22F of the transparent housing body 20F, so that the second opening portion 22F of the transparent housing body 20F is completely wrapped by the first opening portion 12F of the opaque housing body 10F. Preferably, the sealing member 50E is ring-shaped.

As shown in Figs.6A to 6C of the accompanying drawings, the first thread 23F of the alternative of the housing for a water purifier according to the second embodiment of the present invention is an internal thread formed on an inner side wall 221F of the second opening portion 22F of the transparent housing body 20F, and the second thread 421E of the screwing portion 42E of the cover 40E is an external thread formed on the outer side wall 422E of the screwing portion 42E of the cover 40E, wherein the second thread 421E is provided to be suitable for being screwed with the first thread 23F of the second opening portion 22F of the transparent housing body 20F together, so that the sealing member 50E can be water-sealed between the cover 40E and the second opening portion 22F of the transparent housing body 20F.

As shown in Figs.6A to 6C of the accompanying drawings, the second opening portion 22F of the transparent housing body 20F of the alternative of the housing for a water purifier according to the second embodiment of the present invention forms a top end 222F, a bottom end 223F and a thread forming portion 224F extended between the top end 222F and the bottom end 223F, wherein the thread forming portion 224F of the second opening portion 22F of the transparent housing body 20F is outwardly and upwardly extended from the bottom end 223F, the top end 222F of the second opening portion 22F of the transparent housing body 20F forms the second opening 220F, the first thread 23F of the second opening portion 22F of the transparent housing body 20F is formed by the thread forming portion 224F of the second opening portion 22F of the transparent housing body 20F. As shown in Figs.6A to 6C of the accompanying drawings, preferably, the second opening portion 22F of the transparent housing body 20F is thickened to enhance its strength, to prevent the second opening portion 22F of the transparent housing body 20F from being broken or fragmentated caused by being subjected to stress generated by the connection between the cover 40E and the second opening portion 22F of the transparent housing body 20F when the second opening portion 22F of the transparent housing body 20F and the cover 40E of the alternative of the housing for a water purifier according to the second embodiment of the present invention are connected with each other (for example, when screwed together).

Further, considering that the alternative of the housing for a water purifier according to the second embodiment of the present invention, as a manufactured product, even though only has a mechanism formed by integrating the opaque housing body 10F with the transparent housing body 20F, which can be used for sales purposes (the cover 40E can be allocated by downstream distributors). Therefore, although the present invention exemplarily describes the threaded connection between the second opening portion 22F of the transparent housing body 20F of the alternative of the housing for a water purifier according to the second embodiment of the present invention and the cover 40E, the alternative of the housing for a water purifier according to the second embodiment of the present invention is not limited to necessarily having the cover 40E.

It is worth mentioning that the first body portion 11F of the opaque housing body 10F of the alternative of the housing for a water purifier according to the second embodiment of the present invention wraps around the second body portion 21F of the transparent housing body 20F, and the first opening portion 12F of the opaque housing body 10F wraps around the second opening portion 22F of the transparent housing body 20F. Preferably, the first opening portion 12F of the opaque housing body 10F protrudes outwardly from a top portion of the second opening portion 22F of the transparent housing body 20F, so that when the second opening portion 22F of the transparent housing body 20F is connected to the cover 40E of the alternative of the housing for a water purifier according to the second embodiment of the present invention (for example, when screwed together), the entire second opening portion 22F of the transparent housing body 20F can be supported by the first opening portion 12F of the opaque housing body 10F, thereby preventing the second opening portion 22F of the transparent housing body 20F from breaking or shattering under stress. That is to say, due to that the opaque housing body 10F is made of opaque material, which has stronger resistance to water hammer impact compared to ordinary transparent materials, which can provide reliable support for the transparent housing body 20F, thereby increasing the service life of the alternative of the housing for a water purifier. Finally, the sealing member 50E is water-sealed between the screwing portion 42E of the cover 40E and the second opening portion 22F of the transparent housing body 20F, so that the transparent housing body 20F, the cover 40E and the sealing member 50E form a continuous water-sealed whole mechanism, and the water pressure can only directly be applied on a sealing chamber formed by the cover 40E, the sealing member 50E and the transparent housing body 20F to reduce the possibility of leakage of the water to be treated and the purified water.

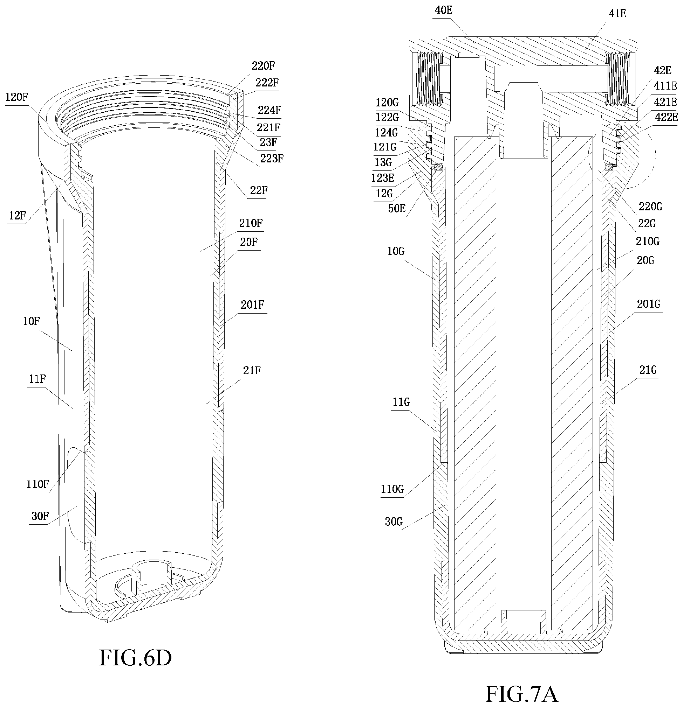

As shown in Fig.6D of the accompanying drawings, the alternative of the housing for a water purifier according to the second embodiment of the present invention further comprises at least one transparent window body 30F, wherein the at least one transparent window body 30F is disposed in the at least one window 110F formed by the first body portion 11F of the opaque housing body 10F, and the at least one transparent window body 30F is integrated with the first body portion 11F of the opaque housing body 10F and the second body portion 21F of the transparent housing body 20F respectively. Preferably, the at least one transparent window body 30F and the second body portion 21F of the transparent housing body 20F are made of the same material, and the at least one transparent window body 30F and the second body portion 21F of the transparent housing body 20F are formed synchronously. Preferably, the opaque housing body 10F forms a plurality of windows 110F. More preferably, the windows 110F of the opaque housing body 10F are arranged to be separated from each other and staggered from each other. Preferably, the at least one transparent window body 30F is made of transparent material.

Correspondingly, the alternative of the housing for a water purifier according to the second embodiment of the present invention is formed by integrating the opaque housing body 10F with the transparent housing body 20F, and second body portion 21F of the transparent housing body 20F is made of a transparent material, the opaque housing body 10F forms the window 110F, so that the opaque housing body 10F of the alternative of the housing for a water purifier according to the second embodiment of the present invention is made of an opaque material having better flexibility and can withstand long-term water pressure and water hammer, and the transparent housing body 20F is made of a transparent material having better rigidity, so that the opaque housing body 10F and the transparent housing body 20F can obtain complementary advantages, thereby allowing the user to view the usage status of the filter cartridge at any time while ensuring safety. In addition, due to that the opaque housing body 10F of the alternative of the housing for a water purifier according to the second embodiment of the present invention is made of opaque material, the use of expensive transparent materials is reduced, significantly reducing the manufacturing cost of the alternative of the housing for a water purifier according to the second embodiment of the present invention.

It is worth mentioning that, in order to reduce the manufacturing process difficulty of the alternative of the housing for a water purifier according to the second embodiment of the present invention while ensuring the safety of the alternative of the housing for a water purifier, the thickness of the opaque housing body 10F of the alternative of the housing for a water purifier according to the second embodiment of the present invention is not less than 2.5mm, the thickness of the transparent housing body 20F is not less than 2.5mm, and the thickness ratio of the opaque housing body 10F to the transparent housing body 20F of the alternative of the housing for a water purifier according to the second embodiment of the present invention is 1:3-3:1. Preferably, the thickness ratio of the opaque housing body 10F to the transparent housing body 20F of the alternative of the housing for a water purifier according to the second embodiment of the present invention is 1:2-2:1.

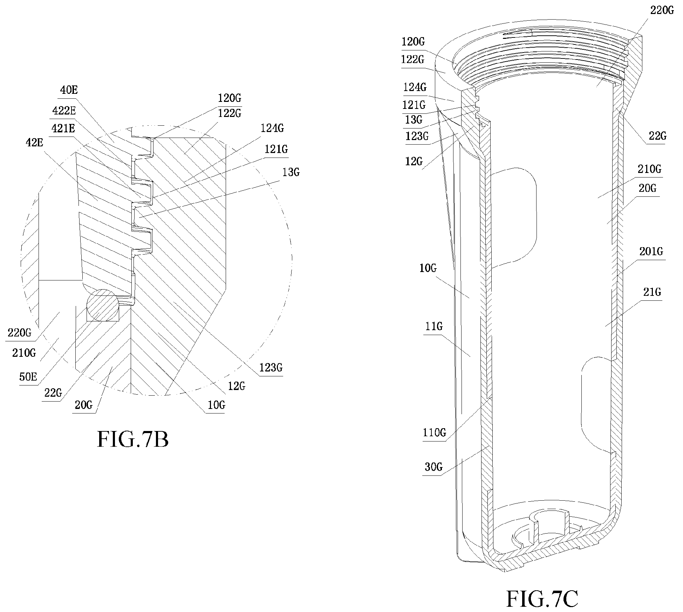

Figs.7A to 7C of the accompanying drawings illustrates an alternative of the housing for a water purifier according to the second embodiment of the present invention, which comprises a transparent housing body 10G and an opaque housing body 20G, wherein the transparent housing body 10G at least partially wraps around an outer surface 201G of the opaque housing body 20G, and the transparent housing body 10G and the opaque housing body 20G are integrated with each other, wherein the opaque housing body 20G forms at least one window 110G and a water treatment chamber 210G, wherein the transparent housing body 10G is transparent and the opaque housing body 20G is opaque. Correspondingly, the opaque housing body 20G of the alternative of the housing for a water purifier according to the second embodiment of the present invention has flexibility better than that of the transparent housing body 10G, and the transparent housing body 10G has a rigidity stronger than that of the opaque housing body 20G. Therefore, the opaque housing body 20G is made of plastic material having better flexibility, and the transparent housing body 10G is made of plastic material having better rigidity and strength. It is appreciated that the water treatment chamber 210G formed by the opaque housing body 20G of the alternative of the housing for a water purifier according to the second embodiment of the present invention is used to accommodate water treatment materials inside the water treatment chamber 210G to purify raw water entering the water treatment chamber 210G.

As shown in Figs.7A to 7C of the accompanying drawings, the transparent housing body 10G of the alternative of the housing for a water purifier according to the second embodiment of the present invention has a first body portion 11G and a first opening portion 12G, the opaque housing body 20G has a second body portion 21G and a second opening portion 22G, wherein the first opening portion 12G of the transparent housing body 10G is extended from the first body portion 11G, the second opening portion 22G of the opaque housing body 20G is extended from the second body portion 21G, wherein the first opening portion 12G of the transparent housing body 10G forms a first opening 120G and the second opening portion 22G of the opaque housing body 20G forms a second opening 220G, wherein the first opening 120G of the first opening portion 12G of the transparent housing body 10G and the second opening 220G of the second opening portion 22G of the opaque housing body 20G have the same orientation, wherein the first body portion 11G of the transparent housing body 10G wraps around the second body portion 21G of the opaque housing body 20G, the first opening portion 12G of the transparent housing body 10G wraps around the second opening portion 22G of the opaque housing body 20G, wherein the at least one window 110G of the opaque housing body 20G is formed by the second body portion 21G of the opaque housing body 20G and the window 110G of the opaque housing body 20G is positioned to face the first body portion 11G of the transparent housing body 10G. Correspondingly, the first body portion 11G of the transparent housing body 10G is integrated with the second body portion 21G of the opaque housing body 20G, the first opening portion 12G of the transparent housing body 10G is integrated with the second opening portion 22G of the opaque housing body 20G.

As shown in Figs.7A to 7C of the accompanying drawings, further, both of the longitudinal sections of the transparent housing body 10G and the opaque housing body 20G of the alternative of the housing for a water purifier according to the second embodiment of the present invention are U-shaped, so that the transparent housing body 10G and the opaque housing body 20G can form a U-shaped double-layer structure. Therefore, both the longitudinal sections of the transparent housing body 10G and the opaque housing body 20G of the alternative of the housing for a water purifier according to the second embodiment of the present invention are U-shaped, so that the alternative of the housing for a water purifier according to the second embodiment of the present invention as a whole has a U-shaped double-layer structure in its longitudinal section.

As shown in Figs.7A to 7C of the accompanying drawings, the alternative of the housing for a water purifier according to the second embodiment of the present invention further comprises a cover 40E and a sealing member 50E, wherein the sealing member 50E is water-sealed between the cover 40E and a mechanism formed by integrating the transparent housing body 10G with the opaque housing body 20G. Preferably, the sealing member 50E is water-sealed between the cover 40E and the second opening portion 22G of the opaque housing body 20G.

As shown in Figs.7A to 7C of the accompanying drawings, the cover 40E of the alternative of the housing for a water purifier according to the second embodiment of the present invention comprises a cover body 41E and a screwing portion 42E, wherein the screwing portion 42E of the cover 40E is extended from an outer side 411E of the cover body 41E, and the sealing member 50E is provided between the screwing portion 42E of the cover 40E and the second opening portion 22G of the opaque housing body 20G, wherein the first opening portion 12G of the transparent housing body 10G further has a first thread 13G and the screwing portion 42E of the cover 40E forms a second thread 421E, wherein the second thread 421E is provided to be suitable for being screwed with the first thread 13G of the first opening portion 12G of the transparent housing body 10G together, so that the cover 40E can be screwed to the first opening portion 12G of the transparent housing body 10G and the sealing member 50E can be pressed against the second opening portion 22G of the opaque housing body 20G and water-sealed between the screwing portion 42E of the cover 40E and the second opening portion 22G of the opaque housing body 20G. Preferably, the first opening portion 12G of the transparent housing body 10G has a length longer than that of the second opening portion 22G of the opaque housing body 20G, so that the second opening portion 22G of the opaque housing body 20G is completely wrapped by the first opening portion 12G of the transparent housing body 10G and the second opening 220G of the second opening portion 22G of the opaque housing body 20G can be hidden within the first opening portion 12G of the transparent housing body 10G. Therefore, the cover 40E and the second opening portion 22G of the opaque housing body 20G of the second embodiment of the present invention form a seal, so that water pressure can only be applied to a sealing chamber formed by the cover 40E, the sealing member 50E, the opaque housing body 20G and the first body portion 11G of the transparent housing body 10G facing by the window 110G, thereby avoiding water pressure and water hammer generated by water pressure from directly acting on the first opening portion 12G of the transparent housing body 10G, as much as possible. Due to the fact that the transparent housing body 10G is made of transparent material, its resistance to water hammer impact is relatively poor compared to opaque material, which helps to prevent water pressure and the water hammer generated by water pressure from directly acting on the first opening portion 12G of the transparent housing body 10G made of transparent material, thereby increasing the service life of the alternative of the housing for a water purifier. Preferably, the sealing member 50E is annular, and its width is no greater than the thickness of the second opening portion 22G of the opaque housing body 20G.

As shown in Figs.7A to 7C of the accompanying drawings, the first thread 13G of the alternative of the housing for a water purifier according to the second embodiment of the present invention is an internal thread formed on an inner side wall 121G of the first opening portion 12G of the transparent housing body 10G, and the second thread 421E of the screwing portion 42E of the cover 40E is an external thread formed on the outer side wall 422E of the screwing portion 42E of the cover 40E, wherein the second thread 421E is provided to be suitable for being screwed with the first thread 13G of the first opening portion 12G of the transparent housing body 10G together, so that the sealing member 50E can be water-sealed between the cover 40E and the second opening portion 22G of the opaque housing body 20G.

As shown in Figs.7A to 7C of the accompanying drawings, the first opening portion 12G of the transparent housing body 10G of the alternative of the housing for a water purifier according to the second embodiment of the present invention forms a top end 122G, a bottom end 123G and a thread forming portion 124G extended between the top end 122G and the bottom end 123G, wherein the top end 122G of the first opening portion 12G of the transparent housing body 10G forms the first opening 120G, wherein the second opening portion 22G of the opaque housing body 20G is wrapped by the bottom end 123G of the first opening portion 12G of the transparent housing body 10G, the second opening portion 22G of the opaque housing body 20G is integrated with the bottom end 123G of the first opening portion 12G of the transparent housing body 10G, the first thread 13G of the first opening portion 12G of the transparent housing body 10G is formed by the thread forming portion 124G of the first opening portion 12G of the transparent housing body 10G. Preferably, of the first opening portion 12G of the transparent housing body 10G is thickened to enhance its strength, to prevent of the first opening portion 12G of the transparent housing body 10G from being broken or fragmentated caused by being subjected to stress generated by the connection between the cover 40E and of the first opening portion 12G of the transparent housing body 10G when the first opening portion 12G of the transparent housing body 10G and the cover 40E of the alternative of the housing for a water purifier according to the second embodiment of the present invention are connected with each other (for example, when screwed together).

Further, considering that the alternative of the housing for a water purifier according to the second embodiment of the present invention, as a manufactured product, even though only has a mechanism formed by integrating the transparent housing body 10G with the opaque housing body 20G, which can be used for sales purposes (the cover 40E can be allocated by downstream distributors). Therefore, although the present invention exemplarily describes the threaded connection between the first opening portion 12G of the transparent housing body 10G and the cover 40E of the alternative of the housing for a water purifier according to the second embodiment of the present invention, the alternative of the housing for a water purifier according to the second embodiment of the present invention is not limited to necessarily having the cover 40E.

As shown in Figs.7A to 7C of the accompanying drawings, the alternative of the housing for a water purifier according to the second embodiment of the present invention further comprises at least one transparent window body 30G, wherein the at least one transparent window body 30G is disposed in the at least one window 110G formed by the second body portion 21G of the opaque housing body 20G, and the at least one transparent window body 30G is integrated with the first body portion 11G of the transparent housing body 10G and the second body portion 21G of the opaque housing body 20G, respectively. Preferably, the at least one transparent window body 30G and the first body portion 11G of the transparent housing body 10G are made of the same material, and the at least one transparent window body 30G and the first body portion 11G of the transparent housing body 10G are formed synchronously. Preferably, the opaque housing body 20G forms a plurality of windows 110G. More preferably, the windows 110G of the opaque housing body 20G are arranged to be separated from each other and staggered from each other. Preferably, the at least one transparent window body 30G is made of transparent material.

Correspondingly, the alternative of the housing for a water purifier according to the second embodiment of the present invention is formed by integrating the opaque housing body 20G with the transparent housing body 10G, and the first body portion 11G of the transparent housing body 10G is made of a transparent material, the opaque housing body 20G forms the window 110G, so that the opaque housing body 20G of the alternative of the housing for a water purifier according to the second embodiment of the present invention is made of an opaque material having better flexibility and can withstand long-term water pressure and water hammer, and the transparent housing body 10G is made of a transparent material having better rigidity, so that the opaque housing body 20G and the transparent housing body 10G can obtain complementary advantages, thereby allowing the user to view the usage status of the filter cartridge at any time while ensuring safety. In addition, due to that the opaque housing body 20G of the alternative of the housing for a water purifier according to the second embodiment of the present invention is made of opaque material, the use of expensive transparent materials is reduced, significantly reducing the manufacturing cost of the alternative of the housing for a water purifier according to the second embodiment of the present invention.

It is worth mentioning that, in order to reduce the manufacturing process difficulty of the alternative of the housing for a water purifier according to the second embodiment of the present invention while ensuring the safety of the alternative of the housing for a water purifier, the thickness of the opaque housing body 20G of the alternative of the housing for a water purifier according to the second embodiment of the present invention is not less than 2.5mm, the thickness of the transparent housing body 10G is not less than 2.5mm, and the thickness ratio of the opaque housing body 20G to the transparent housing body 10G of the alternative of the housing for a water purifier according to the second embodiment of the present invention is 1:3-3:1.

Preferably, the thickness ratio of the opaque housing body 20G to the transparent housing body 10G of the alternative of the housing for a water purifier according to the second embodiment of the present invention is 1:2-2:1.

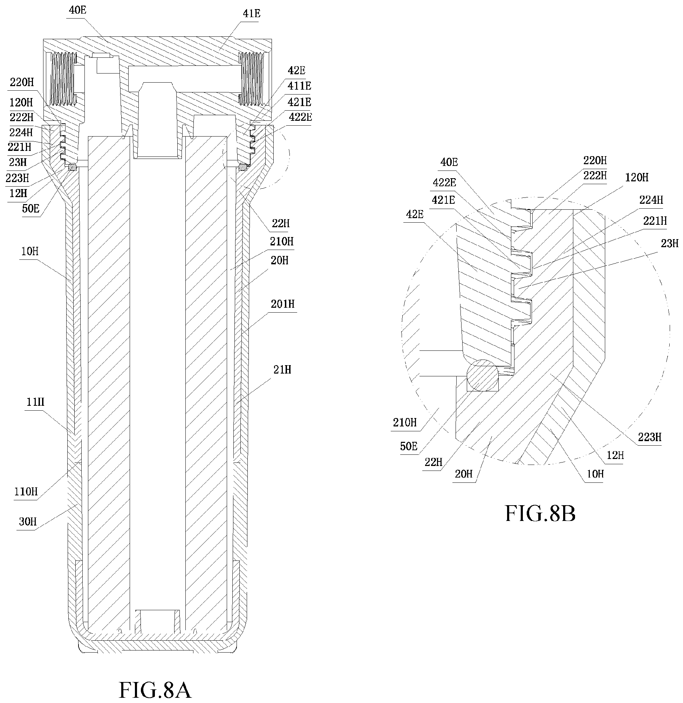

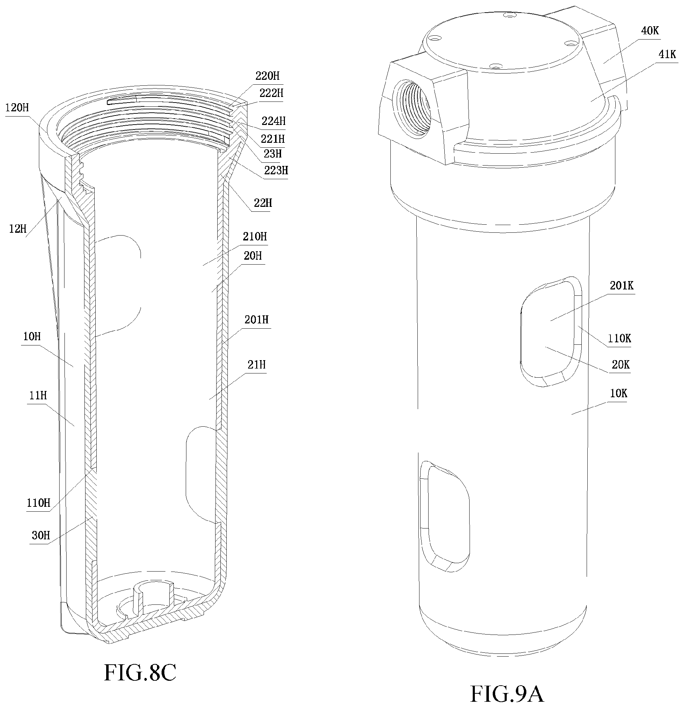

Figs.8A to 8C of the accompanying drawings illustrate an alternative of the housing for a water purifier according to the second embodiment of the present invention, which comprises a transparent housing body 10H and an opaque housing body 20H, wherein the transparent housing body 10H at least partially wraps around an outer surface 201H of the opaque housing body 20H, and the transparent housing body 10H and the opaque housing body 20H are integrated with each other, wherein the opaque housing body 20H forms at least one window 110H and a water treatment chamber 210H, wherein the transparent housing body 10H is transparent and the opaque housing body 20H is opaque. Correspondingly, the opaque housing body 20H of the alternative of the housing for a water purifier according to the second embodiment of the present invention has flexibility better than that of the transparent housing body 10H, and the transparent housing body 10H has a rigidity stronger than that of the opaque housing body 20H. Therefore, the opaque housing body 20H is made of plastic material having better flexibility, and the transparent housing body 10H is made of plastic material having better rigidity and strength. It is appreciated that the water treatment chamber 210H formed by the opaque housing body 20H of the alternative of the housing for a water purifier according to the second embodiment of the present invention is used to accommodate water treatment materials inside the water treatment chamber 210H to purify raw water entering the water treatment chamber 210H.

As shown in Figs.8A to 8C of the accompanying drawings, the transparent housing body 10H of the alternative of the housing for a water purifier according to the second embodiment of the present invention has a first body portion 11H and a first opening portion 12H, the opaque housing body 20H has a second body portion 21H and a second opening portion 22H, wherein the first opening portion 12H of the transparent housing body 10H is extended from the first body portion 11H, the second opening portion 22H of the opaque housing body 20H is extended from the second body portion 21H, wherein the first opening portion 12H of the transparent housing body 10H forms a first opening 120H and the second opening portion 22H of the opaque housing body 20H forms a second opening 220H, wherein the first opening 120H of the first opening portion 12H of the transparent housing body 10H and the second opening 220H of the second opening portion 22H of the opaque housing body 20H have the same orientation, wherein the first body portion 11H of the transparent housing body 10H wraps around the second body portion 21H of the opaque housing body 20H, the first opening portion 12H of the transparent housing body 10H wraps around the second opening portion 22H of the opaque housing body 20H, wherein the at least one window 110H of the opaque housing body 20H is formed by the second body portion 21H of the opaque housing body 20H and the window 110H of the opaque housing body 20H is positioned to face the first body portion 11H of the transparent housing body 10H. Correspondingly, the first body portion 11H of the transparent housing body 10H is integrated with the second body portion 21H of the opaque housing body 20H, the first opening portion 12H of the transparent housing body 10H is integrated with the second opening portion 22H of the opaque housing body 20H.

As shown in Figs.8A to 8C of the accompanying drawings, further, both of the longitudinal sections of the transparent housing body 10H and the opaque housing body 20H of the alternative of the housing for a water purifier according to the second embodiment of the present invention are U-shaped, so that the transparent housing body 10H and the opaque housing body 121H can form a U-shaped double-layer structure. Therefore, both the longitudinal sections of the transparent housing body 10H and the opaque housing body 20H of the alternative of the housing for a water purifier according to the second embodiment of the present invention are U-shaped, so that the alternative of the housing for a water purifier according to the second embodiment of the present invention as a whole has a U-shaped double-layer structure in its longitudinal section.

As shown in Figs.8A to 8C of the accompanying drawings, the alternative of the housing for a water purifier according to the second embodiment of the present invention further comprises a cover 40E and a sealing member 50E, wherein the sealing member 50E is water-sealed between the cover 40E and a mechanism formed by integrating the transparent housing body 10H with the opaque housing body 20H. Preferably, the sealing member 50E is water-sealed between the cover 40E and the second opening portion 22H of the opaque housing body 20H.

As shown in Figs.8A to 8C of the accompanying drawings, the cover 40E of the alternative of the housing for a water purifier according to the second embodiment of the present invention comprises a cover body 41E and a screwing portion 42E, wherein the screwing portion 42E of the cover 40E is extended from an outer side 411E of the cover body 41E, and the sealing member 50E is provided between the screwing portion 42E of the cover 40E and the second opening portion 22H of the opaque housing body 20H, wherein the second opening portion 22H of the opaque housing body 20H further has a first thread 23H and the screwing portion 42E of the cover 40E forms a second thread 421E, wherein the second thread 421E is provided to be suitable for being screwed with the first thread 23H of the second opening portion 22H of the opaque housing body 20H together, so that the cover 40E can be screwed to the second opening portion 22H of the opaque housing body 20H and the sealing member 50E can be pressed against the second opening portion 22H of the opaque housing body 20H and water-sealed between the screwing portion 42E of the cover 40E and the second opening portion 22H of the opaque housing body 20H. Preferably, the first opening portion 12H of the transparent housing body 10H has a length no less than that of the second opening portion 22H of the opaque housing body 20H, so that the second opening portion 22H of the opaque housing body 20H is completely wrapped by the first opening portion 12H of the transparent housing body 10H. Therefore, the cover 40E and the second opening portion 22H of the opaque housing body 20H of the second embodiment of the present invention form a seal, so that water pressure can only be applied to a sealing chamber formed by the cover 40E, the sealing member 50E, the opaque housing body 20H and the first body portion 11H of the transparent housing body 10H facing by the window 110H, thereby avoiding water pressure and water hammer generated by water pressure from directly acting on the first opening portion 12H of the transparent housing body 10H, which is made of transparent material. The opaque housing body 20H made of opaque material has strong resistance to water hammer impact, and the second opening portion 22H of the opaque housing body 20H is not easily broken under the action of water pressure and water hammer generated by water pressure, thereby increasing the service life of the alternative of the housing for a water purifier according to the second embodiment of the present invention. Preferably, the sealing member 50E is ring-shaped.

As shown in Figs.8A to 8C of the accompanying drawings, the first thread 23H of the alternative of the housing for a water purifier according to the second embodiment of the present invention is an internal thread formed on an inner side wall 221H of the second opening portion 22H of the opaque housing body 20H, and the second thread 421E of the screwing portion 42E of the cover 40E is an external thread formed on the outer side wall 422E of the screwing portion 42E of the cover 40E, wherein the second thread 421E is provided to be suitable for being screwed with the first thread 23H of the second opening portion 22H of the opaque housing body 20H together, so that the sealing member 50E can be water-sealed between the cover 40E and the second opening portion 22H of the opaque housing body 20H.

As shown in Figs.8A to 8C of the accompanying drawings, the second opening portion 22H of the opaque housing body 20H of the alternative of the housing for a water purifier according to the second embodiment of the present invention forms a top end 222H, a bottom end 223H and a thread forming portion 224H extended between the top end 222H and the bottom end 223H, wherein the thread forming portion 224H of the second opening portion 22H of the opaque housing body 20H is outwardly and upwardly extended from the bottom end 223H, the top end 222H of the second opening portion 22H of the opaque housing body 20H forms the second opening 220H, the first thread 23H of the second opening portion 22H of the opaque housing body 20H is formed by the thread forming portion 224H of the second opening portion 22H of the opaque housing body 20H. As shown in Figs.8A to 8C of the accompanying drawings, preferably, the second opening portion 22H of the opaque housing body 20H is thickened to enhance its strength, to prevent the second opening portion 22H of the opaque housing body 20H from being broken or fragmentated caused by being subjected to stress generated by the connection between the cover 40E and the second opening portion 22H of the opaque housing body 20H when the second opening portion 22H of the opaque housing body 20H and the cover 40E of the alternative of the housing for a water purifier according to the second embodiment of the present invention are connected with each other (for example, when screwed together). Preferably, the sealing member 50E is water-sealed between the cover 40E and the bottom end 223H of the second opening portion 22H of the opaque housing body 20H. More preferably, the first body portion 11H of the transparent housing body 10H of the alternative of the housing for a water purifier according to the second embodiment of the present invention wraps around the second body portion 21H of the opaque housing body 20H, and the first opening portion 12H of the transparent housing body 10H wraps around the second opening portion 22H of the opaque housing body 20H.

Further, considering that the alternative of the housing for a water purifier according to the second embodiment of the present invention, as a manufactured product, even though only has a mechanism formed by integrating the transparent housing body 10H with the opaque housing body 20H, which can be used for sales purposes (the cover 40E can be allocated by downstream distributors). Therefore, although the present invention exemplarily describes the threaded connection between the second opening portion 22H of the opaque housing body 20H and the cover 40E of the alternative of the housing for a water purifier according to the second embodiment of the present invention, the alternative of the housing for a water purifier according to the second embodiment of the present invention is not limited to necessarily having the cover 40E.

As shown in Figs.8A to 8C of the accompanying drawings, the alternative of the housing for a water purifier according to the second embodiment of the present invention further comprises at least one transparent window body 30H, wherein the at least one transparent window body 30H is disposed in the at least one window 10H formed by the second body portion 21H of the opaque housing body 20H, and the at least one transparent window body 30H is integrated with the first body portion 11H of the transparent housing body 10H and the second body portion 21H of the opaque housing body 20H, respectively.

Preferably, the at least one transparent window body 30H and the first body portion 11H of the transparent housing body 10H are made of the same material, and the at least one transparent window body 30H and the first body portion 11H of the transparent housing body 10H are formed synchronously.

Preferably, the second body portion 21H of the opaque housing body 20H forms a plurality of windows 110H. More preferably, the windows 110H of the second body portion 21H of the opaque housing body 20H are arranged to be separated from each other and staggered from each other. Preferably, the at least one transparent window body 30H is made of transparent material.

Correspondingly, the alternative of the housing for a water purifier according to the second embodiment of the present invention is formed by integrating the opaque housing body 20H with the transparent housing body 10H, and the first body portion 11H of the transparent housing body 10H is made of transparent material, the opaque housing body 20H forms the window 110H, so that the opaque housing body 20H of the alternative of the housing for a water purifier according to the second embodiment of the present invention is made of an opaque material having better flexibility and can withstand long-term water pressure and water hammer, and the transparent housing body 10H is made of a transparent material having better rigidity, so that the opaque housing body 20H and the transparent housing body 10H can obtain complementary advantages, thereby allowing the user to view the usage status of the filter cartridge at any time while ensuring safety. In addition, due to that the opaque housing body 20H the alternative of the housing for a water purifier according to the second embodiment of the present invention is made of opaque material, the use of expensive transparent materials is reduced, significantly reducing the manufacturing cost of the alternative of the housing for a water purifier according to the second embodiment of the present invention.

It is worth mentioning that, in order to reduce the manufacturing process difficulty of the alternative of the housing for a water purifier according to the second embodiment of the present invention while ensuring the safety of the alternative of the housing for a water purifier, the thickness of the opaque housing body 20H of the alternative of the housing for a water purifier according to the second embodiment of the present invention is not less than 2.5mm, the thickness of the transparent housing body 10H is not less than 2.5mm, and the thickness ratio of the opaque housing body 20H to the transparent housing body 10H of the alternative of the housing for a water purifier according to the second embodiment of the present invention is 1:3-3:1.

Preferably, the thickness ratio of the opaque housing body 20H to the transparent housing body 10H of the alternative of the housing for a water purifier according to the second embodiment of the present invention is 1:2-2:1.

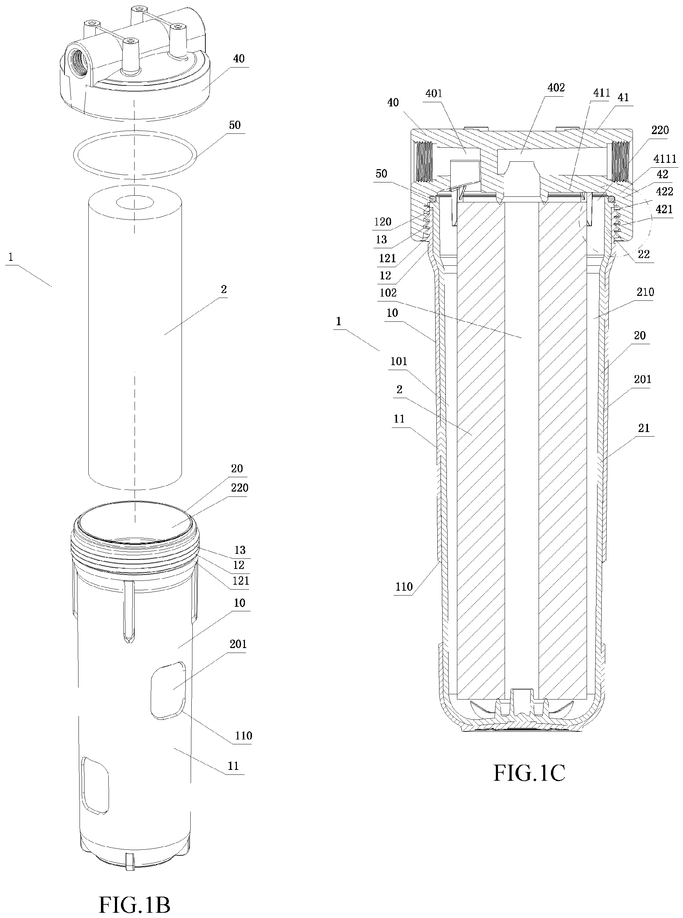

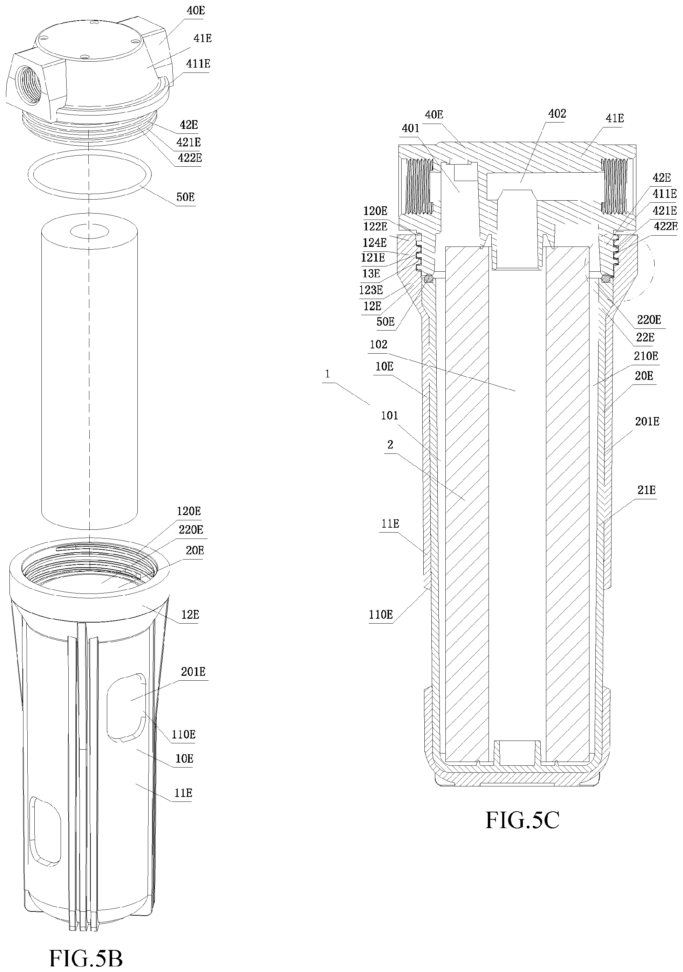

As shown in Figs.1B and 1C, 5B and 5C of the accompanying drawings, the housing for a water purifier according to of the present invention is exemplarily designed to accommodate the filter material 2 of the water purifier 1, and the housing for a water purifier according to the present invention and the filter material 2 can form a first water channel 101 therebetween, and the filter material 2 forms a second water channel 102, so that raw water can flow into the first water channel 101 to be filtered by the filter material 2 to generate purified water, which is accumulated in the second water channel 102 for outflow, or raw water can flow into the second water channel 102 to be filtered by the filter material 2 to generate purified water, which is accumulated in the first water channel 101 for outflow. Correspondingly, the filter material 2 separates the first water channel 101 from the second water channel 102. Further, the cover 40 (or the cover 40E) used for the housing for a water purifier according to the present invention forms a first communicating channel 401 and a second communicating channel 402, wherein the first communicating channel 401 is adapted to be communicated with the first water channel 101, the second communicating channel 402 is adapted to be communicated with the second water channel 102, and the first communicating channel 401 and the second communicating channel 402 are spacedly formed by the cover 40 (or the cover 40E).

The opaque housing body 10 (or opaque housing body 10A, opaque housing body 10E, opaque housing body 10F, opaque housing body 20B, opaque housing body 20C, opaque housing body 20G, opaque housing body 20H, etc.) of the housing for a water purifier according to the embodiments of the present invention is preferably made of opaque PP (polypropylene) or modified PP, the transparent housing body 20 (or transparent housing body 20A, transparent housing body 10B, transparent housing body 10C, transparent housing body 20E, transparent housing body 20F, transparent housing body 10G, transparent housing body 10H) is preferably made of AS (acrylonitrile styrene copolymer), PET (polyethylene terephthalate), PETG (polyethylene terephthalate 1,4-cyclohexanedimethanol ester), PC (polycarbonate), PCTG (1,4-Cyclohexylene Dimethylene Terephthalate Glycol), transparent PA (polyamide), or transparent ABS (acrylonitrile butadiene styrene copolymer).

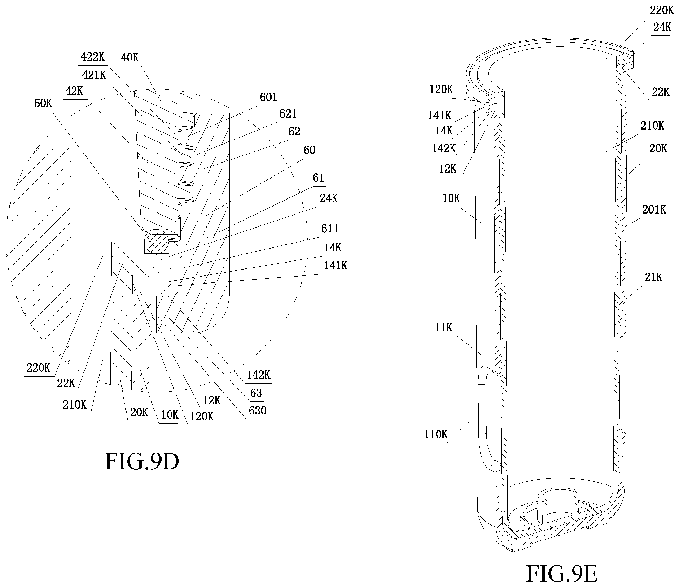

Referring to Figs.9A to 9F of the accompanying drawings, a housing for a water purifier according to the third embodiment of the present invention is illustrated, wherein the housing for a water purifier according to the third embodiment of the present invention comprises an opaque housing body 10K, a transparent housing body 20K and a connecting member 60, wherein the opaque housing body 10K at least partially wraps around an outer surface 201K of the transparent housing body 20K, and the opaque housing body 10K and the transparent housing body 20K are integrated with each other, wherein the opaque housing body 10K forms at least one window 110K, and the transparent housing body 20K forms a water treatment chamber 210K, wherein the connecting member 60 forms a first thread 601. It is appreciated that the opaque housing body 10K of the housing for a water purifier according to the third embodiment of the present invention has flexibility better than that of the transparent housing body 20K, and the transparent housing body 20K has stronger rigidity than that of the opaque housing body 10K. Therefore, the opaque housing body 10K is made of plastic material having better flexibility, and the transparent housing body 20K is made of plastic material having better rigidity and strength.

It is appreciated that the water treatment chamber 210K formed by the transparent housing body 20K of the housing for a water purifier according to the third embodiment of the present invention is used to accommodate water treatment materials inside the water treatment chamber 210K to purify raw water entering the water treatment chamber 210K. It is appreciated that the opaque housing body 10K of the housing for a water purifier according to the third embodiment of the present invention can provide a stable support for the transparent housing body 20K.

As shown in Fig.9A to 9F of the accompanying drawings, the opaque housing body 10K for the housing for a water purifier according to the third embodiment of the present invention has a first body portion 11K, a first opening portion 12K extended from the first body portion 11K, and a first folding edge 14K extended outwardly from the first opening portion 12K, the transparent housing body 20K has a second body portion 21K, a second opening portion 22K extended from the second body portion 21K and a second folding edge 24K extended outwardly from the second opening portion 22K, wherein the connecting member 60 comprises a sleeve portion 61, a thread forming portion 62 extended upwardly from the sleeve portion 61 and a connecting portion 63 extended downwardly and inwardly from the sleeve portion 61, wherein the first opening portion 12K of the opaque housing body 10K forms a first opening 120K, and the second opening portion 22K of the transparent housing body 20K forms a second opening 220K, wherein the first opening 120K of the first opening portion 12K of the opaque housing body 10K and the second opening 220K of the second opening portion 22K of the transparent housing body 20K have the same orientation, wherein the first body 11K and the first opening portion 12K of the opaque housing body 10K wrap around the second body 21K of the transparent housing body 20K, and the first folding edge 14K of the opaque housing body 10K is integrated with the second folding edge 24K of the transparent housing body 20K, wherein the connecting member 60 is cylindrical, and the first folding edge 14K of the opaque housing body 10K and the second folding edge 24K of the transparent housing body 20K are ring-shaped, wherein the thread forming portion 62 forms the first thread 601, the connecting portion 63 forms a sleeve opening 630, wherein the sleeve opening 630 has an inner diameter smaller than the outside diameter of the first folding edge 14K of the opaque housing body 10K and that of the second folding edge 24K of the transparent housing body 20K so that both the first folding edge 14K of the opaque housing body 10K and the second folding edge 24K of the transparent housing body 20K are sleeved on an inner wall 611 of the sleeve portion 61, and the connecting portion 63 of the connecting member 60 can be pressed against a bottom 142K of the first folding edge 14K of the opaque housing body 10K. Preferably, the first thread 601 of the connect member 60 is formed on an inner side wall 621 of the thread forming portion 62 of the connect member 60. It is appreciated that the connecting portion 63 of the connecting member 60 of the housing for a water purifier according to the present invention ensures the sleeve connection between the connecting member 60 and the opaque housing body 10K.

As shown in Figs.9A to 9F of the accompanying drawings, the window 110K of the opaque housing body 10K of the housing for a water purifier according to the third embodiment of the present invention is formed by the first body portion 11K of the opaque housing body 10K, and the window 110K of the opaque housing body 10K is positioned to face the second body portion 21K of the transparent housing body 20K. Correspondingly, the first body portion 11K and the first opening portion 12K of the opaque housing body 10K are integrated with the second body portion 21K and the second opening portion 22K of the transparent housing body 20K, respectively, and the second opening portion 22K of the transparent housing body 20K protrudes outwardly from the first opening 120K of the first opening portion 12K of the opaque housing body 10K. Further, both the first body portion 11K of the opaque housing body 10K are integrated with the second body portion 21K of the transparent housing body 20K have a U-shaped longitudinal cross-section, so that the housing for a water purifier according to the third embodiment of the present invention as a whole has a U-shaped double-layer structure in the longitudinal cross-section, and when the housing for a water purifier according to the third embodiment of the present invention is vertically placed with the opening facing upwards, the second opening portion 22K of the transparent housing body 20K is slightly higher than the first opening portion 12K of the opaque housing body 10K.

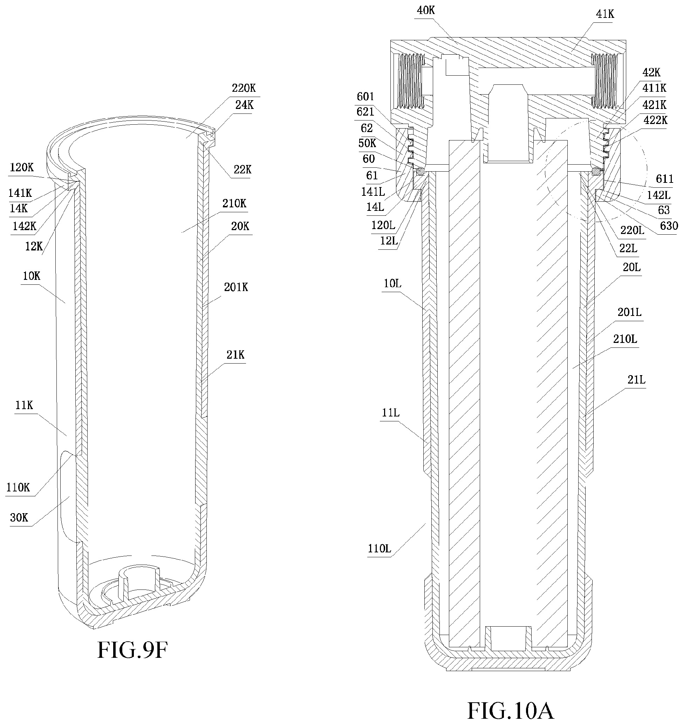

As shown in Fig.9F of the accompanying drawings, the housing for a water purifier according to the third embodiment of the present invention further comprises at least one transparent window body 30K, wherein the at least one transparent window body 30K is disposed in the at least one window 110K formed by the first body portion 11K of the opaque housing body 10K, and the at least one transparent window body 30K is integrated with the first body portion 11K of the opaque housing body 10K and the second body portion 21K of the transparent housing body 20K, respectively. Preferably, the at least one transparent window body 30K and the second body portion 21K of the transparent housing body 20K are made of the same material, and the at least one transparent window body 30K and the second body portion 21K of the transparent housing body 20K are formed synchronously. Preferably, the opaque housing body 10K forms a plurality of windows 110K. More preferably, the windows 110K of the opaque housing body 10K are arranged to be separated from each other. It is appreciated that the at least one transparent window body 30K is made of transparent material.

Correspondingly, the housing for a water purifier according to the third embodiment of the present invention is formed by integrating the opaque housing body 10K with the transparent housing body 20K, and the second body portion 21K of the transparent housing body 20K is made of a transparent material, the opaque housing body 10K forms the window 110K, so that the opaque housing body 10K of the housing for a water purifier according to the third embodiment of the present invention is made of an opaque material having better flexibility and can withstand long-term water pressure and water hammer, and the transparent housing body 20K is made of a transparent material having better rigidity, so that the opaque housing body 10K and the transparent housing body 20K can obtain complementary advantages, thereby allowing the user to view the usage status of the filter cartridge at any time while ensuring safety. In addition, due to that the opaque housing body 10K of the housing for a water purifier according to the third embodiment of the present invention is made of opaque material, the use of expensive transparent materials is reduced, significantly reducing the manufacturing cost of the housing for a water purifier according to the third embodiment of the present invention.

It is worth mentioning that, in order to reduce the manufacturing process difficulty of the housing for a water purifier according to the third embodiment of the present invention while ensuring the safety of the housing for a water purifier according to the third embodiment of the present invention, the thickness of the opaque housing body 10K of the housing for a water purifier according to the third embodiment of the present invention is not less than 2.5mm, the thickness of the transparent housing body 20K is not less than 2.5mm, and the thickness ratio of the opaque housing body 10K to the transparent housing body 20K of the housing for a water purifier according to the third embodiment of the present invention is 1:3-3:1. Preferably, the thickness ratio of the opaque housing body 10K to the transparent housing body 20K of the housing for a water purifier according to the third embodiment of the present invention is 1:2-2:1.

As shown in Figs.9A to 9F of the accompanying drawings, the housing for a water purifier according to the third embodiment of the present invention further comprises a cover 40K and a sealing member 50K, wherein the sealing member 50K is water-sealed between the cover 40K and a mechanism formed by integrating the opaque housing body 10K with the transparent housing body 20K. Preferably, the sealing member 50K is water-sealed between the cover 40K and the second folding edge 22K of the transparent housing body 20K.

As shown in Figs.9A to 9F of the accompanying drawings, the cover 40K for the housing for a water purifier according to the third embodiment of the present invention comprises a cover body 41K and a screwing portion 42K, wherein the screwing portion 42K of the cover 40K is extended from an outer side 411K of the cover body 41K, and the sealing member 50K is provided between the screwing portion 42K of the cover 40K and the second folding edge 24K of the transparent housing body 20K, wherein the screwing portion 42K of the cover 40K forms a second thread 421K, wherein the second thread 421K is provided to be suitable to be screwed with the first thread 601 of the connecting member 60, so that the cover 40K can be screwed with the connecting member 60, and the sealing member 50K can be pressed against the second folding edge 24K of the transparent housing body 20K and water-sealed between the screwing portion 42K of the cover 40K and the second folding edge 24K of the transparent housing body 20K. Preferably, the sealing member 50K is ring-shaped and the sealing member 50K has a width no greater than that of the second folding edge 24K of the transparent housing body 20K.

As shown in Figs.9A to 9F of the accompanying drawings, the first thread 601 of the connecting member 60 of the housing for a water purifier according to the third embodiment of the present invention is an internal thread formed on the inner side wall 621 of the thread forming portion 62 of the connecting member 60, and the second thread 421K of the screwing portion 42K of the cover 40K is an external thread formed on an outer side wall 422K of the screwing portion 42K of the cover 40K, wherein the second thread 421K is provided to be suitable to be screwed together with the first thread 601 of the connecting member 60, so that the sealing member 50K is water-sealed between the cover 40K and the second folding edge 24K of the transparent housing body 20K. Correspondingly, when the connecting member 60 is connected with the cover 40K of the housing for a water purifier according to the third embodiment of the present invention (for example, screwed together), the sealing member 50K is water-sealed between the screwing portion 42K of the cover 40K and the second folding edge 24K of the transparent housing body 20K, therefore, the cover 40K and the transparent housing body 20K of the third embodiment of the present invention form a seal, so that water is contained inside a sealing chamber formed by the cover 40K, the sealing member 50K and the transparent housing body 20K to reduce the possibility of leakage of water to be treated and purified water. Further, the connecting member 60 is connected with the cover 40K of the housing for a water purifier according to the third embodiment of the present invention, and the connecting portion 63 of the connecting member 60 is pressed against the bottom 142K of the first folding edge 14K of the opaque housing body 10K, thereby significantly reducing stress generated by the connection of the connecting member 60 and the cover 40K, which is applied to the second body portion 21K and the second opening portion 22K of the transparent housing body 20K, in order to avoid the second body portion 21K and the second opening portion 22K of the transparent housing body 20K bearing excessive stress. It is appreciated that the first folding edge 14K of the opaque housing body 10K and the second folding edge 24K of the transparent housing body 20K can also be thickened and widened to further reduce probability of fracture under stress.

Further, considering that the housing for a water purifier according to the third embodiment of the present invention, as a manufactured product, even though only has a mechanism formed by integrating the opaque housing body 10K with the transparent housing body 20K, which can be used for sales purposes (the cover 40K can be allocated by downstream distributors). Therefore, although the present invention exemplarily describes the threaded connection between the connecting member 60 and the cover 40K of the housing for a water purifier according to the third embodiment of the present invention, the housing for a water purifier according to the third embodiment of the present invention is not limited to necessarily having the cover 40K.

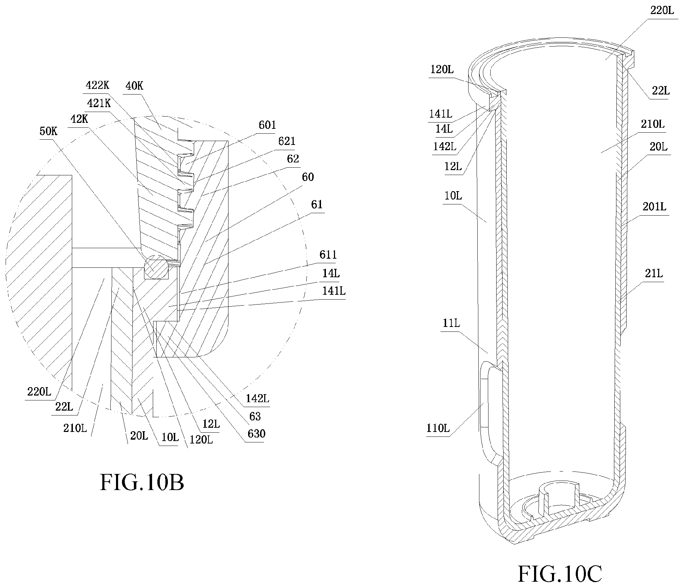

Figs.10A to 10D of the accompanying drawings illustrate an alternative of the housing for a water purifier according to the third embodiment of the present invention, which comprises an opaque housing body 10L, a transparent housing body 20L and the connecting member 60, wherein the opaque housing body 10L at least partially wraps around an outer surface 201L of the transparent housing body 20L, and the opaque housing body 10L and the transparent housing body 20L are integrated with each other, wherein the opaque housing body 10L forms at least one window 110L, and the transparent housing body 20L forms a water treatment chamber 210L, and the connecting member 60 forms a first thread 601. It is appreciated that the opaque housing body 10L of the alternative of the housing for a water purifier according to the third embodiment of the present invention has flexibility better than that of the transparent housing body 20L, and the transparent housing body 20L has a rigidity stronger than that of the opaque housing body 10L. Therefore, the opaque housing body 10L is made of plastic material having better flexibility, and the transparent housing body 20L is made of plastic material having better rigidity and strength. It is appreciated that the water treatment chamber 210L formed by the transparent housing body 20L of the alternative of the housing for a water purifier according to the third embodiment of the present invention is used to accommodate water treatment materials inside the water treatment chamber 210L to purify raw water entering the water treatment chamber 210L. It is appreciated that the opaque housing body 10L of the alternative of the housing for a water purifier according to the third embodiment of the present invention can provide a stable support for the transparent housing body 20L.

As shown in Figs.10A to 10F of the accompanying drawings, the opaque housing body 10L of the alternative of the housing for a water purifier according to the third embodiment of the present invention has a first body portion 11L, a first opening portion 12L extended from the first body portion 11L, and a folding edge 14L extended outwardly from the first opening portion 12L, the transparent housing body 20L has a second body portion 21L and a second opening portion 22L extended from the second body portion 21L, wherein the connecting member 60 comprises a sleeve portion 61, a thread forming portion 62 extended upwardly from the sleeve portion 61 and a connecting portion 63 extended downwardly and inwardly from the sleeve portion 61, wherein the first opening portion 12L of the opaque housing body 10L forms a first opening 120L, and the second opening portion 22L of the transparent housing body 20L forms a second opening 220L, wherein the first opening 120L of the first opening portion 12L of the opaque housing body 10L and the second opening 220L of the second opening portion 22L of the transparent housing body 20L have the same orientation, wherein the first body 11L of the opaque housing body 10L wraps around the second body 21L of the transparent housing body 20L, the first opening portion 12L of the opaque housing body 10L wraps around the second opening portion 22L of the transparent housing body 20L, wherein the connecting member 60 is cylindrical, and the folding edge 14L of the opaque housing body 10L is ring-shaped, wherein the thread forming portion 62 forms the first thread 601, the connecting portion 63 forms a sleeve opening 630, wherein the sleeve opening 630 has an inner diameter smaller than the outside diameter of the first folding edge 14L of the opaque housing body 10L, so that the folding edge 14L of the opaque housing body 10L can be sleeved on an inner wall 611 of the sleeve portion 61, and the connecting portion 63 of the connecting member 60 can be pressed against a bottom 142L of the folding edge 14L of the opaque housing body 10L. Preferably, the first thread 601 of the connect member 60 is formed on an inner side wall 621 of the thread forming portion 62 of the connect member 60. It is appreciated that the connecting portion 63 of the connecting member 60 of the housing for a water purifier according to the present invention ensures the sleeve connection between the connecting member 60 and the opaque housing body 10L.

As shown in Figs.10A to 10D of the accompanying drawings, the window 110L of the opaque housing body 10L of the alternative of the housing for a water purifier according to the third embodiment of the present invention is formed by the first body portion 11L of the opaque housing body 10L, and the window 110L of the opaque housing body 10L is positioned to face the second body portion 21L of the transparent housing body 20L. Correspondingly, the first body portion 11L of the opaque housing body 10L is integrated with the second body portion 21L of the transparent housing body 20L, and the second opening portion 22L of the transparent housing body 20L is integrated with the first opening portion 12L of the opaque shell 10L. Further, both the first body portion 11L of the opaque housing body 10L and the second body portion 21L of the transparent housing body 20L have a U-shaped longitudinal cross-section, so that the alternative of the housing for a water purifier according to the third embodiment of the present invention as a whole has a U-shaped double-layer structure in the longitudinal cross-section.

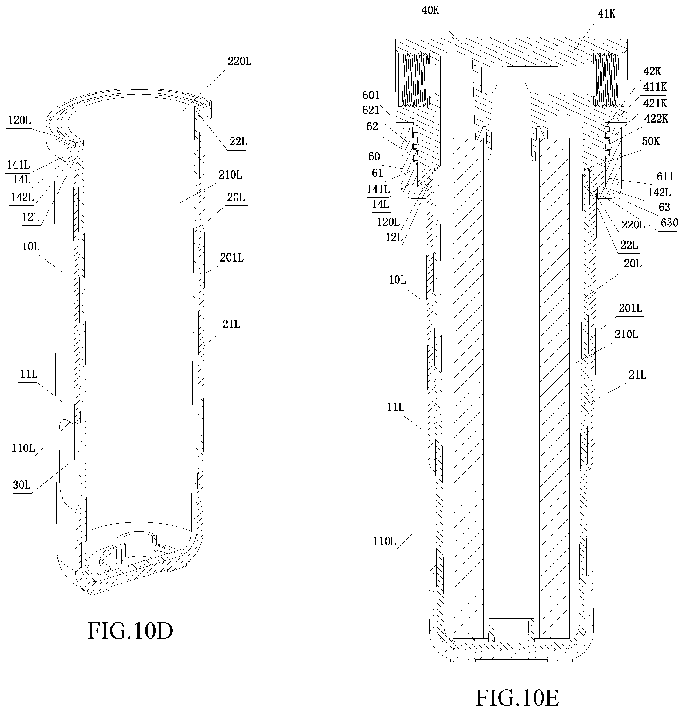

As shown in Fig.10D of the accompanying drawings, the alternative of the housing for a water purifier according to the third embodiment of the present invention further comprises at least one transparent window body 30L, wherein the at least one transparent window body 30L is disposed in the at least one window 110L formed by the first body portion 11L of the opaque housing body 10L, and the at least one transparent window body 30L is integrated with the first body portion 11L of the opaque housing body 10L and the second body portion 21L of the transparent housing body 20L, respectively. Preferably, the at least one transparent window body 30L and the second body portion 21L of the transparent housing body 20L are made of the same material, and the at least one transparent window body 30L and the second body portion 21L of the transparent housing body 20L are formed synchronously. Preferably, the opaque housing body 10L forms a plurality of windows 110L. More preferably, the windows 110L of the opaque housing body 10L are arranged to be separated from each other. It is appreciated that the at least one transparent window body 30L is made of transparent material.

Correspondingly, the alternative of the housing for a water purifier according to the third embodiment of the present invention is formed by integrating the opaque housing body 10L with the transparent housing body 20L, and the second body portion 21L of the transparent housing body 20L is made of a transparent material, the opaque housing body 10L forms the window 110L, so that the opaque housing body 10L of the alternative of the housing for a water purifier according to the third embodiment of the present invention is made of an opaque material having better flexibility and can withstand long-term water pressure and water hammer, and the transparent housing body 20L is made of a transparent material having better rigidity, so that the opaque housing body 10L and the transparent housing body 20L can obtain complementary advantages, thereby allowing the user to view the usage status of the filter cartridge at any time while ensuring safety. In addition, due to that the opaque housing body 10L of the alternative of the housing for a water purifier according to the third embodiment of the present invention is made of opaque material, the use of expensive transparent materials is reduced, significantly reducing the manufacturing cost of the alternative of the housing for a water purifier according to the third embodiment of the present invention.

It is worth mentioning that, in order to reduce the manufacturing process difficulty of the alternative of the housing for a water purifier according to the third embodiment of the present invention while ensuring the safety of the alternative of the housing for a water purifier according to the third embodiment of the present invention, the thickness of the opaque housing body 10L of the alternative of the housing for a water purifier according to the third embodiment of the present invention is not less than 2.5mm, the thickness of the transparent housing body 20L is not less than 2.5mm, and the thickness ratio of the opaque housing body 10L to the transparent housing body 20L of the alternative of the housing for a water purifier according to the third embodiment of the present invention is 1:3-3:1. Preferably, the thickness ratio of the opaque housing body 10L to the transparent housing body 20L of the alternative of the housing for a water purifier according to the third embodiment of the present invention is 1:2-2:1.

As shown in Figs.10A to 10D of the accompanying drawings, the alternative of the housing for a water purifier according to the third embodiment of the present invention further comprises a cover 40K and a sealing member 50K, wherein the sealing member 50K is water-sealed between the cover 40K and a mechanism formed by integrating the opaque housing body 10L with the transparent housing body 20L. Preferably, the sealing member 50K is water-sealed between the cover 40K and the folding edge 14L of the opaque housing body 10L. As shown in Fig.10E of the accompanying drawings, optionally, the sealing member 50K is water-sealed between the cover 40K and the second opening portion 22L of the transparent housing body 20L.

As shown in Figs.10A to 10D of the accompanying drawings, the cover 40K of the alternative of the housing for a water purifier according to the third embodiment of the present invention comprises a cover body 41K and a screwing portion 42K, wherein the screwing portion 42K of the cover 40K is extended from an outer side 411K of the cover body 41K, and the sealing member 50K is provided between the screwing portion 42K of the cover 40K and the folding edge 14L of the opaque housing body 10L, wherein the screwing portion 42K of the cover 40K forms a second thread 421K, wherein the second thread 421K is provided to be suitable to be screwed with the first thread 601 of the connecting member 60, so that the cover 40K can be screwed with the connecting member 60, and the sealing member 50K can be pressed against the folding edge 14L of the opaque housing body 10L and water-sealed between the screwing portion 42K of the cover 40K and the folding edge 14L of the opaque housing body 10L. Preferably, the sealing member 50K is ring-shaped and the sealing member 50K has a width no greater than that of the folding edge 14L of the opaque housing body 10L.

As shown in Figs.10A to 10D of the accompanying drawings, the first thread 601 of the connecting member 60 of the alternative of the housing for a water purifier according to the third embodiment of the present invention is an internal thread formed on the inner side wall 621 of the thread forming portion 62 of the connecting member 60, and the second thread 421K of the screwing portion 42K of the cover 40K is an external thread formed on an outer side wall 422K of the screwing portion 42K of the cover 40K, wherein the second thread 421K is provided to be suitable to be screwed together with the first thread 601 of the connecting member 60, so that the sealing member 50K is water-sealed between the cover 40K and the folding edge 14L of the opaque housing body 10L. Correspondingly, when the connecting member 60 is connected with the cover 40K of the alternative of the housing for a water purifier according to the third embodiment of the present invention (for example, screwed together), the sealing member 50K is water-sealed between the screwing portion 42K of the cover 40K and the folding edge 14L of the opaque housing body 10L, therefore, the cover 40K and the opaque housing body 10L of the third embodiment of the present invention form a seal, so that water is contained inside a sealing chamber formed by the cover 40K, the sealing member 50K, the folding edge 14L of the opaque housing body 10L and the transparent housing body 20L to reduce the possibility of leakage of water to be treated and purified water. Further, the connecting member 60 is connected with the cover 40K of the alternative of the housing for a water purifier according to the third embodiment of the present invention, and the connecting portion 63 of the connecting member 60 is pressed against the bottom 142L of the folding edge 14L of the opaque housing body 10L, thereby significantly reducing stress generated by the connection of the connecting member 60 and the cover 40K, which is applied to the second body portion 21L and the second opening portion 22L of the transparent housing body 20L, in order to avoid the second body portion 21L and the second opening portion 22L of the transparent housing body 20L bearing excessive stress. It is appreciated that the folding edge 14L of the opaque housing body 10L can also be thickened and widened to further reduce probability of fracture under stress. As shown in Fig.10E of the accompanying drawings, optionally, the sealing member 50K is water-sealed between the cover 40K and the second opening portion 22L of the transparent housing body 20L, to ensure that both the water to be treated and the purified water are contained inside a continuous water sealing chamber formed by the cover 40K, the transparent housing body 20L, and the sealing member 50K, in order to minimize the possibility of water leakage.

Further, considering that the alternative of the housing for a water purifier according to the third embodiment of the present invention, as a manufactured product, even though only has a mechanism formed by integrating the opaque housing body 10L with the transparent housing body 20L, which can be used for sales purposes (the cover 40K can be allocated by downstream distributors). Therefore, although the present invention exemplarily describes the threaded connection between the connecting member 60 and the cover 40K of the alternative of the housing for a water purifier according to the third embodiment of the present invention, the alternative of the housing for a water purifier according to the third embodiment of the present invention is not limited to necessarily having the cover 40K.

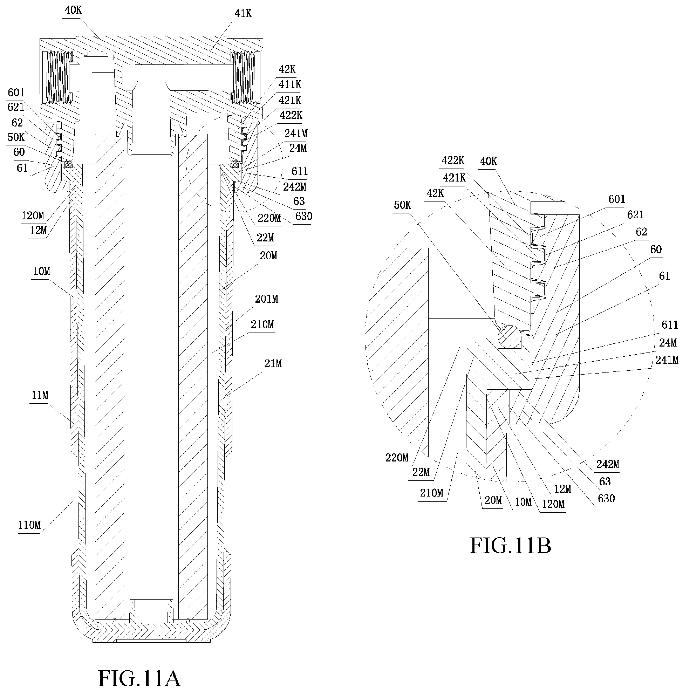

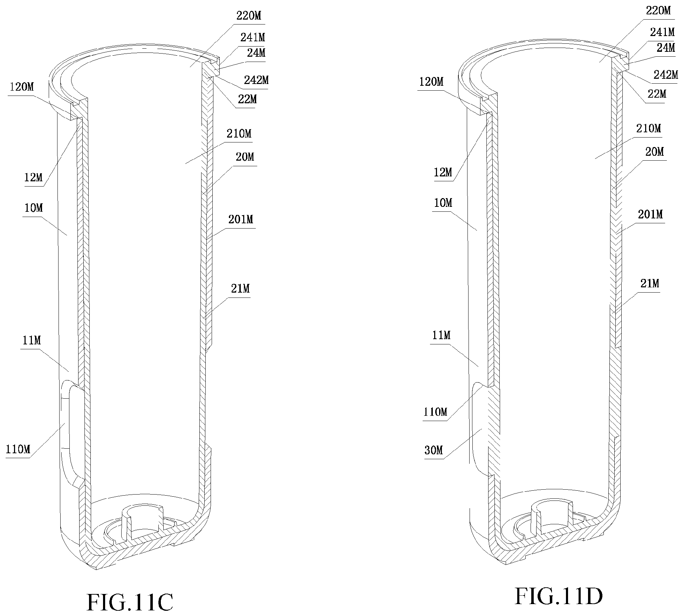

Figs.11A to 11D of the accompanying drawings illustrate another alternative of the housing for a water purifier according to the third embodiment of the present invention, which comprises an opaque housing body 10M, a transparent housing body 20M and a connecting member 60, wherein the opaque housing body 10M at least partially wraps around an outer surface 201M of the transparent housing body 20M, and the opaque housing body 10M and the transparent housing body 20M are integrated with each other, wherein the opaque housing body 10M forms at least one window 110M, and the transparent housing body 20M forms a water treatment chamber 210M, and the connecting member 60 forms a first thread 601. It is appreciated that the opaque housing body 10M of the alternative of the housing for a water purifier according to the third embodiment of the present invention has flexibility better than that of the transparent housing body 20M, and the transparent housing body 20M has a rigidity stronger than that of the opaque housing body 10M. Therefore, the opaque housing body 10M is made of plastic material having better flexibility, and the transparent housing body 20M is made of plastic material having better rigidity and strength. It is appreciated that the water treatment chamber 210M formed by the transparent housing body 20M of the alternative of the housing for a water purifier according to the third embodiment of the present invention is used to accommodate water treatment materials inside the water treatment chamber 210M to purify raw water entering the water treatment chamber 210M. It is appreciated that the opaque housing body 10M of the alternative of the housing for a water purifier according to the third embodiment of the present invention can provide a stable support for the transparent housing body 20M.

As shown in Figs.10A to 10F of the accompanying drawings, the opaque housing body 10M of the alternative of the housing for a water purifier according to the third embodiment of the present invention has a first body portion 11M and a first opening portion 12M extended from the first body portion 11M, the transparent housing body 20M has a second body portion 21M, a second opening portion 22M extended from the second body portion 21M and a folding edge 24M extended outwardly from the second opening portion 22M, the connecting member 60 comprises a sleeve portion 61, a thread forming portion 62 extended upwardly from the sleeve portion 61 and a connecting portion 63 extended downwardly and inwardly from the sleeve portion 61, wherein the first opening portion 12M of the opaque housing body 10M forms a first opening 120M, and the second opening portion 22M of the transparent housing body 20M forms a second opening 220M, wherein the first opening 120M of the first opening portion 12M of the opaque housing body 10M and the second opening 220M of the second opening portion 22M of the transparent housing body 20M have the same orientation, wherein the first body 11M and first opening portion 12M of the opaque housing body 10L wraps around the second body 21M of the transparent housing body 20M, the second opening portion 22M of the transparent housing body 20M protrudes outwardly through the first opening 120M of the first opening portion 12M of the opaque housing body 10M, wherein the connecting member 60 is cylindrical, and the folding edge 24M of the transparent housing body 20M is ring-shaped, wherein the thread forming portion 62 forms the first thread 601, the connecting portion 63 forms a sleeve opening 630, wherein the sleeve opening 630 has an inner diameter smaller than the outside diameter of the first folding edge 24M of the transparent housing body 20M, so that the folding edge 24M of the transparent housing body 20M can be sleeved on an inner wall 611 of the sleeve portion 61, and the connecting portion 63 of the connecting member 60 can be pressed against a bottom 242M of the folding edge 24M of the transparent housing body 20M. Preferably, the first thread 601 of the connect member 60 is formed on the inner side wall 621 of the thread forming portion 62 of the connect member 60. It is appreciated that the connecting portion 63 of the connecting member 60 of the housing for a water purifier according to the present invention ensures the sleeve connection between the connecting member 60 and the transparent housing body 20M.

As shown in Figs.11A to 11D of the accompanying drawings, the window 110M of the alternative of the housing for a water purifier according to the third embodiment of the present invention is formed on the first body portion 11M of the opaque housing body 10M, and the window 110M of the opaque housing body 10M is positioned to face the second body portion 21M of the transparent housing body 20M. Correspondingly, the first body portion 11M and the first opening portion 12M of the opaque housing body 10M are integrated with the second body portion 21M of the transparent housing body 20M, and the second opening portion 22M of the transparent housing body 20M protrudes outwardly through the first opening 120M of the first opening portion 12M of the opaque housing body 10M. Further, both the first body portion 11M of the opaque housing body 10M are integrated with the second body portion 21M of the transparent housing body 20M have a U-shaped longitudinal cross-section, so that the alternative of the housing for a water purifier according to the third embodiment of the present invention as a whole has a U-shaped double-layer structure in the longitudinal cross-section, and when the housing for a water purifier according to the third embodiment of the present invention is vertically placed with the opening facing upwards, the second opening portion 22M of the transparent housing body 20M is slightly higher than the first opening portion 12M of the opaque housing body 10M.

As shown in Fig.11D of the accompanying drawings, the alternative of the housing for a water purifier according to the third embodiment of the present invention further comprises at least one transparent window body 30M, wherein the at least one transparent window body 30M is disposed in the at least one window 110M formed by the first body portion 11M of the opaque housing body 10M, and the at least one transparent window body 30M is integrated with the first body portion 11M of the opaque housing body 10M and the second body portion 21M of the transparent housing body 20M, respectively. Preferably, both the at least one transparent window body 30M and the second body portion 21M of the transparent housing body 20M are made of the same material, and the at least one transparent window body 30M and the second body portion 21M of the transparent housing body 20M are formed synchronously. Preferably, the opaque housing body 10M forms a plurality of windows 110M. More preferably, the windows 110M of the opaque housing body 10M are arranged to be separated from each other and staggered from each other. It is appreciated that the at least one transparent window body 30M is made of transparent material.

Correspondingly, the alternative of the housing for a water purifier according to the third embodiment of the present invention is formed by integrating the opaque housing body 10M with the transparent housing body 20M, and the second body portion 21M of the transparent housing body 20M is made of a transparent material, the opaque housing body 10M forms the window 110M, so that the opaque housing body 10M of the alternative of the housing for a water purifier according to the third embodiment of the present invention is made of an opaque material having better flexibility and can withstand long-term water pressure and water hammer, and the transparent housing body 20M is made of a transparent material having better rigidity, so that the opaque housing body 10M and the transparent housing body 20M can obtain complementary advantages, thereby allowing the user to view the usage status of the filter cartridge at any time while ensuring safety. In addition, due to that the opaque housing body 10M of the alternative of the housing for a water purifier according to the third embodiment of the present invention is made of opaque material, the use of expensive transparent materials is reduced, significantly reducing the manufacturing cost of the alternative of the housing for a water purifier according to the third embodiment of the present invention.

It is worth mentioning that, in order to reduce the manufacturing process difficulty of the alternative of the housing for a water purifier according to the third embodiment of the present invention while ensuring the safety of the alternative of the housing for a water purifier according to the third embodiment of the present invention, the thickness of the opaque housing body 10M of the alternative of the housing for a water purifier according to the third embodiment of the present invention is not less than 2.5mm, the thickness of the transparent housing body 20M is not less than 2.5mm, and the thickness ratio of the opaque housing body 10M to the transparent housing body 20M of the alternative of the housing for a water purifier according to the third embodiment of the present invention is 1:3-3:1. Preferably, the thickness ratio of the opaque housing body 10M to the transparent housing body 20M of the alternative of the housing for a water purifier according to the third embodiment of the present invention is 1:2-2:1.

As shown in Figs.11A to 11D of the accompanying drawings, the alternative of the housing for a water purifier according to the third embodiment of the present invention further comprises a cover 40K and a sealing member 50K, wherein the sealing member 50K is water-sealed between the cover 40K and a mechanism formed by integrating the opaque housing body 10M with the transparent housing body 20M. Preferably, the sealing member 50K is water-sealed between the cover 40K and the folding edge 24M of the transparent housing body 20M.

As shown in Figs.11A to 11D of the accompanying drawings, the cover 40K of the alternative of the housing for a water purifier according to the third embodiment of the present invention comprises a cover body 41K and a screwing portion 42K, wherein the screwing portion 42K of the cover 40K is extended from an outer side 411K of the cover body 41K, and the sealing member 50K is provided between the screwing portion 42K of the cover 40K and the folding edge 24M of the transparent housing body 20M, wherein the screwing portion 42K of the cover 40K forms a second thread 421K, wherein the second thread 421K is provided to be suitable to be screwed with the first thread 601 of the connecting member 60, so that the cover 40K can be screwed with the connecting member 60, and the sealing member 50K can be pressed against the folding edge 24M of the transparent housing body 20M and water-sealed between the screwing portion 42K of the cover 40K and the folding edge 24M of the transparent housing body 20M. Preferably, the sealing member 50K is ring-shaped and the sealing member 50K has a width no greater than that of the folding edge 24M of the transparent housing body 20M.

As shown in Figs.11A to 11D of the accompanying drawings, the first thread 601 of the connecting member 60 of the alternative of the housing for a water purifier according to the third embodiment of the present invention is an internal thread formed on the inner side wall 621 of the thread forming portion 62 of the connecting member 60, and the second thread 421K of the screwing portion 42K of the cover 40K is an external thread formed on an outer side wall 422K of the screwing portion 42K of the cover 40K, wherein the second thread 421K is provided to be suitable to be screwed together with the first thread 601 of the connecting member 60, so that the sealing member 50K is water-sealed between the cover 40K and the folding edge 24M of the transparent housing body 20M. Correspondingly, when the connecting member 60 is connected with the cover 40K of the alternative of the housing for a water purifier according to the third embodiment of the present invention (for example, screwed together), the sealing member 50K is water-sealed between the screwing portion 42K of the cover 40K and the folding edge 24M of the transparent housing body 20M, therefore, the cover 40K and the transparent housing body 20M of the third embodiment of the present invention form a seal, so that water is contained inside a sealing chamber formed by the cover 40K, the sealing member 50K and the transparent housing body 20M to reduce the possibility of leakage of water to be treated and purified water. Further, the connecting member 60 is connected with the cover 40K of the alternative of the housing for a water purifier according to the third embodiment of the present invention, and the connecting portion 63 of the connecting member 60 is pressed against the bottom 242M of the folding edge 24M of the transparent housing body 20M, thereby significantly reducing stress generated by the connection of the connecting member 60 and the cover 40K, which is applied to the second body portion 21M and the second opening portion 22M of the transparent housing body 20M, in order to avoid the second body portion 21M and the second opening portion 22M of the transparent housing body 20M bearing excessive stress. It is appreciated that the folding edge 24M of the transparent housing body 20M can also be thickened and widened to further reduce probability of fracture under stress.

Further, considering that the alternative of the housing for a water purifier according to the third embodiment of the present invention, as a manufactured product, even though only has a mechanism formed by integrating the opaque housing body 10M with the transparent housing body 20M, which can be used for sales purposes (the cover 40K can be allocated by downstream distributors). Therefore, although the present invention exemplarily describes the threaded connection between the connecting member 60 and the cover 40K of the alternative of the housing for a water purifier according to the third embodiment of the present invention, the alternative of the housing for a water purifier according to the third embodiment of the present invention is not limited to necessarily having the cover 40K.

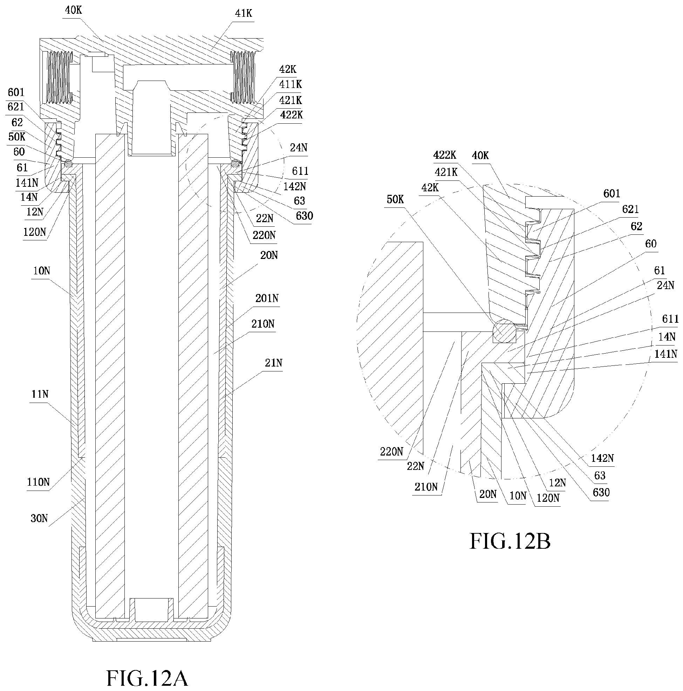

Referring to Figs.12A to 12C of the accompanying drawings, a housing for a water purifier according to the fourth embodiment of the present invention is illustrated, wherein the housing for a water purifier according to the fourth embodiment of the present invention comprises a transparent housing body 10N, an opaque housing body 20N and a connecting member 60, wherein the transparent housing body 10N at least partially wraps around an outer surface 201N of the opaque housing body 20N, and the transparent housing body 10N and the opaque housing body 20N are integrated with each other, wherein the opaque housing body 20N forms at least one window 110N and a water treatment chamber 210N, wherein the connecting member 60 forms a first thread 601. It is appreciated that the transparent housing body 10N of the housing for a water purifier according to the fourth embodiment of the present invention has a rigidity stronger than that of the opaque housing body 20N, and the opaque housing body 20N has flexibility better than that of the transparent housing body 10N. Therefore, the opaque housing body 20N is made of plastic material having better flexibility, and the transparent housing body 10N is made of plastic material having better rigidity and strength. It is appreciated that the water treatment chamber 210N formed by the opaque housing body 20N of the housing for a water purifier according to the fourth embodiment of the present invention is used to accommodate water treatment materials inside the water treatment chamber 210N to purify raw water entering the water treatment chamber 210N.

As shown in Fig.12A to 12C of the accompanying drawings, the transparent housing body 10N of the housing for a water purifier according to the fourth embodiment of the present invention has a first body portion 11N, a first opening portion 12N extended from the first body portion 11N, and a first folding edge 14N extended outwardly from the first opening portion 12N, the opaque housing body 20N has a second body portion 21N, a second opening portion 22N extended from the second body portion 21N and a second folding edge 24N extended outwardly from the second opening portion 22N, wherein the connecting member 60 comprises a sleeve portion 61, a thread forming portion 62 extended upwardly from the sleeve portion 61 and a connecting portion 63 extended downwardly and inwardly from the sleeve portion 61, wherein the first opening portion 12N of the transparent housing body 10N forms a first opening 120N, and the second opening portion 22N of the opaque housing body 20N forms a second opening 220N, wherein the first opening 120N of the first opening portion 12N of the transparent housing body 10N and the second opening 220N of the second opening portion 22N of the opaque housing body 20N have the same orientation, wherein the first body 11N and the first opening portion 12N of the transparent housing body 10N wrap around the second body 21N of the opaque housing body 20N, and the first folding edge 14N of the transparent housing body 10N is integrated with the second folding edge 24N of the opaque housing body 20N, wherein the connecting member 60 is cylindrical, and the first folding edge 14N of the transparent housing body 10N and the second folding edge 24N of the opaque housing body 20N are ring-shaped, wherein the thread forming portion 62 forms the first thread 601, the connecting portion 63 forms a sleeve opening 630, wherein the sleeve opening 630 has an inner diameter smaller than the outer diameter of the first folding edge 14N of the transparent housing body 10N and the outer diameter of the second folding edge 24N of the opaque housing body 20N, respectively, so that both the first folding edge 14N of the transparent housing body 10N and the second folding edge 24N of the opaque housing body 20N can be sleeved on an inner wall 611 of the sleeve portion 61, and the connecting portion 63 of the connecting member 60 can be pressed against a bottom 142N of the first folding edge 14N of the transparent housing body 10N. Preferably, the first thread 601 of the connect member 60 is formed an the inner side wall 621 of the thread forming portion 62 of the connect member 60. It is appreciated that the connecting portion 63 of the connecting member 60 of the housing for a water purifier according to the present invention ensures the sleeve connection between the connecting member 60 and the transparent housing body 10N. As shown in Fig.12A to 12C of the accompanying drawings, the window 110N of the opaque housing body 20N of the housing for a water purifier according to the fourth embodiment of the present invention is formed by the second body portion 21N of the opaque housing body 20N, and the window 110N of the opaque housing body 20N is positioned to face the first body portion 11N of the transparent housing body 10N. Correspondingly, the first body portion 11N and the first opening portion 12N of the transparent housing body 10N are integrated with the second body portion 21N of the opaque housing body 20N, respectively, and the second opening portion 22N of the opaque housing body 20N protrudes outwardly through the first opening 120N of the first opening portion 12N of the transparent housing body 10N. Further, each of the first body portion 11N of the transparent housing body 10N and the second body portion 21N of the opaque housing body 20N has a U-shaped longitudinal cross-section, so that the housing for a water purifier according to the fourth embodiment of the present invention as a whole has a U-shaped double-layer structure in the longitudinal cross-section, and when the housing for a water purifier according to the fourth embodiment of the present invention is vertically placed with the opening facing upwards, the second opening portion 22N of the opaque housing body 20N is slightly higher than the first opening portion 12N of the transparent housing body 10N.

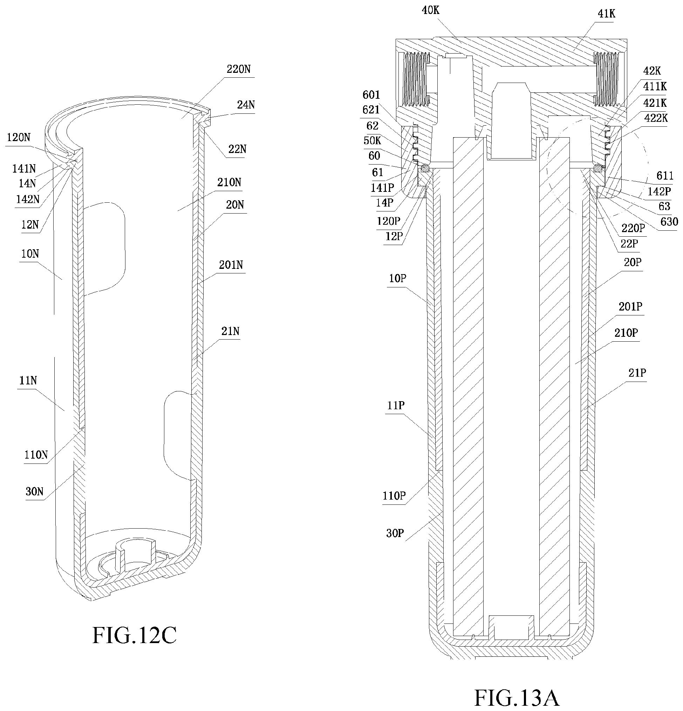

As shown in Fig.12C of the accompanying drawings, the housing for a water purifier according to the fourth embodiment of the present invention further comprises at least one transparent window body 30N, wherein the at least one transparent window body 30N is disposed in the at least one window 110N formed by the second body portion 21N of the opaque housing body 20N, and the at least one transparent window body 30N is integrated with the first body portion 11N of the transparent housing body 10N and the second body portion 21N of the opaque housing body 20N, respectively. Preferably, the at least one transparent window body 30N and the first body portion 11N of the transparent housing body 10N are made of the same material, and the at least one transparent window body 30N and the first body portion 11N of the transparent housing body 10N are formed synchronously. Preferably, the opaque housing body 20N forms a plurality of windows 110N. More preferably, the windows 110N of the opaque housing body 20N are arranged to be separated from each other and staggered from each other. It is appreciated that the at least one transparent window body 30N is made of transparent material.

Correspondingly, the housing for a water purifier according to the fourth embodiment of the present invention is formed by integrating the transparent housing body 10N with the opaque housing body 20N, and the first body portion 11N of the transparent housing body 10N is made of a transparent material, the opaque housing body 20N forms the window 110N, so that the opaque housing body 20N of the housing for a water purifier according to the fourth embodiment of the present invention is made of an opaque material having better flexibility and can withstand long-term water pressure and water hammer, and the transparent housing body 10N is made of a transparent material having better rigidity, so that the transparent housing body 10N and the opaque housing body 20N can obtain complementary advantages, thereby allowing the user to view the usage status of the filter cartridge at any time while ensuring safety. In addition, due to that the opaque housing body 20N of the housing for a water purifier according to the fourth embodiment of the present invention is made of opaque material, the use of expensive transparent materials is reduced, significantly reducing the manufacturing cost of the housing for a water purifier according to the fourth embodiment of the present invention.

It is worth mentioning that, in order to reduce the manufacturing process difficulty of the housing for a water purifier according to the fourth embodiment of the present invention while ensuring the safety of the housing for a water purifier according to the fourth embodiment of the present invention, the thickness of the transparent housing body 10N of the housing for a water purifier according to the fourth embodiment of the present invention is not less than 2.5mm, the thickness of the opaque housing body 20N is not less than 2.5mm, and the thickness ratio of the transparent housing body 10N to the opaque housing body 20N of the housing for a water purifier according to the fourth embodiment of the present invention is 1:3-3:1. Preferably, the thickness ratio of the transparent housing body 10N to the opaque housing body 20N of the housing for a water purifier according to the fourth embodiment of the present invention is 1:2-2:1.

As shown in Figs.12A to 12C of the accompanying drawings, the housing for a water purifier according to the fourth embodiment of the present invention further comprises a cover 40K and a sealing member 50K, wherein the sealing member 50K is water-sealed between the cover 40K and a mechanism formed by integrating the opaque housing body 20N with the transparent housing body 10N. Preferably, the sealing member 50K is water-sealed between the cover 40K and the second folding edge 24N of the opaque housing body 20N.

As shown in Figs.12A to 12C of the accompanying drawings, the cover 40K for the housing for a water purifier according to the fourth embodiment of the present invention comprises a cover body 41K and a screwing portion 42K, wherein the screwing portion 42K of the cover 40K is extended from an outer side 411K of the cover body 41K, and the sealing member 50K is provided between the screwing portion 42K of the cover 40K and the second folding edge 24N of the opaque housing body 20N, wherein the screwing portion 42K of the cover 40K forms a second thread 421K, wherein the second thread 421K is provided to be suitable to be screwed with the first thread 601 of the connecting member 60, so that the cover 40K can be screwed with the connecting member 60, and the sealing member 50K can be pressed against the second folding edge 24N of the opaque housing body 20N and water-sealed between the screwing portion 42K of the cover 40K and the second folding edge 24N of the opaque housing body 20N. Preferably, the sealing member 50K is ring-shaped and the sealing member 50K has a width no greater than that of the second folding edge 24N of the opaque housing body 20N.

As shown in Figs.12A to 12C of the accompanying drawings, the first thread 601 of the connecting member 60 of the housing for a water purifier according to the fourth embodiment of the present invention is an internal thread formed on the inner side wall 621 of the thread forming portion 62 of the connecting member 60, and the second thread 421K of the screwing portion 42K of the cover 40K is an external thread formed on an outer side wall 422K of the screwing portion 42K of the cover 40K, wherein the second thread 421K is provided to be suitable to be screwed together with the first thread 601 of the connecting member 60, so that the sealing member 50K is water-sealed between the cover 40K and the second folding edge 24N of the opaque housing body 20N. Correspondingly, when the connecting member 60 is connected with the cover 40K of the housing for a water purifier according to the fourth embodiment of the present invention (for example, screwed together), the sealing member 50K is water-sealed between the screwing portion 42K of the cover 40K and the second folding edge 24N of the opaque housing body 20N, therefore, the cover 40K and the opaque housing body 20N of the fourth embodiment of the present invention form a seal, so that water pressure or water hammer generated by the raw water is mainly borne by a structure formed by the cover 40K, the sealing member 50K, and the opaque housing body 20N, and the opaque housing body 20N has better flexibility to prevent it from being broken under the action of water pressure or water hammer. Further, the connecting member 60 is connected with the cover 40K of the housing for a water purifier according to the fourth embodiment of the present invention, and the connecting portion 63 of the connecting member 60 is pressed against the bottom 142N of the first folding edge 14N of the transparent housing body 10N, thereby significantly reducing stress generated by the connection of the connecting member 60 and the cover 40K, which is applied to the first body portion 11N and the first opening portion 12N of the transparent housing body 10N, in order to avoid the first body portion 11N and the first opening portion 12N of the transparent housing body 10N bearing excessive stress. It is appreciated that the first folding edge 14N of the transparent housing body 10N and the second folding edge 24N of the opaque housing body 20N can also be thickened and widened to further reduce probability of fracture under stress.

Further, considering that the housing for a water purifier according to the fourth embodiment of the present invention, as a manufactured product, even though only has a mechanism formed by integrating the opaque housing body 20N with the transparent housing body 10N, which can be used for sales purposes (the cover 40K can be allocated by downstream distributors). Therefore, although the present invention exemplarily describes the threaded connection between the connecting member 60 and the cover 40K of the housing for a water purifier according to the fourth embodiment of the present invention, the housing for a water purifier according to the fourth embodiment of the present invention is not limited to necessarily having the cover 40K.

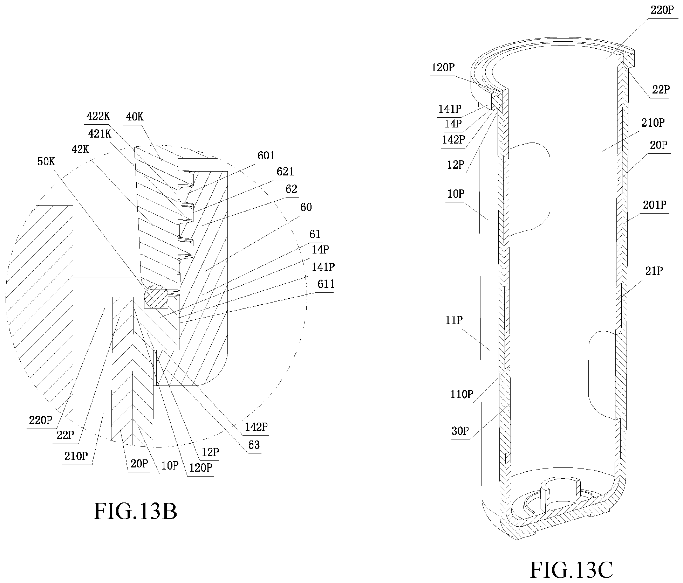

Figs.13A to 13C of the accompanying drawings illustrate an alternative of the housing for a water purifier according to the fourth embodiment of the present invention, which comprises a transparent housing body 10P, an opaque housing body 20P and a connecting member 60, wherein the transparent housing body 10P at least partially wraps around an outer surface 201P of the opaque housing body 20P, and the transparent housing body 10P and the opaque housing body 20P are integrated with each other, wherein the opaque housing body 20P forms at least one window 110P and a water treatment chamber 210P, and the connecting member 60 forms a first thread 601. It is appreciated that the opaque housing body 20P of the alternative of the housing for a water purifier according to the fourth embodiment of the present invention has flexibility better than that of the transparent housing body 10P, and the transparent housing body 10P has a rigidity stronger than that of the opaque housing body 20P. Therefore, the opaque housing body 20P is made of plastic material having better flexibility, and the transparent housing body 10P is made of plastic material having better rigidity and strength. It is appreciated that the water treatment chamber 210P formed by the opaque housing body 20P of the alternative of the housing for a water purifier according to the fourth embodiment of the present invention is used to accommodate water treatment materials inside the water treatment chamber 210P to purify raw water entering the water treatment chamber 210P.

As shown in Figs.13A to 13C of the accompanying drawings, the transparent housing body 10P of the alternative of the housing for a water purifier according to the fourth embodiment of the present invention has a first body portion 11P, a first opening portion 12P extended from the first body portion 11P, and a folding edge 14P extended outwardly from the first opening portion 12P, the opaque housing body 20P has a second body portion 21P and a second opening portion 22P extended from the second body portion 21P, wherein the connecting member 60 comprises a sleeve portion 61, a thread forming portion 62 extended upwardly from the sleeve portion 61 and a connecting portion 63 extended downwardly and inwardly from the sleeve portion 61, wherein the first opening portion 12P of the transparent housing body 10P forms a first opening 120P, and the second opening portion 22P of the opaque housing body 20P forms a second opening 220P, wherein the first opening 120P of the first opening portion 12P of the transparent housing body 10P and the second opening 220P of the second opening portion 22P of the opaque housing body 20P have the same orientation, wherein the first body 11P of the transparent housing body 10P wraps around the second body 21P of the opaque housing body 20P, the first opening portion 12P of the transparent housing body 10P wraps around the second opening portion 22P of the opaque housing body 20P, wherein the connecting member 60 is cylindrical, and the folding edge 14P of the transparent housing body 10P is ring-shaped, wherein the thread forming portion 62 forms the first thread 601, the connecting portion 63 forms a sleeve opening 630, wherein the sleeve opening 630 has an inner diameter smaller than the outside diameter of the folding edge 14P of the transparent housing body 10P, so that the folding edge 14P of the transparent housing body 10P can be sleeved on an inner wall 611 of the sleeve portion 61, and the connecting portion 63 of the connecting member 60 can be pressed against a bottom 142P of the folding edge 14P of the transparent housing body 10P. Preferably, the first thread 601 of the connect member 60 is formed on an inner side wall 621 of the thread forming portion 62 of the connect member 60. It is appreciated that the connecting portion 63 of the connecting member 60 of the alternative of the housing for a water purifier according to the present invention ensures the sleeve connection between the connecting member 60 and the transparent housing body 10P.

As shown in Figs.13A to 13C of the accompanying drawings, the window 110P of the opaque housing body 20P of the alternative of the housing for a water purifier according to the fourth embodiment of the present invention is formed by the second body portion 21P of the opaque housing body 20P, and the window 110P of the opaque housing body 20P is positioned to face the first body portion 11P of the transparent housing body 10P. Correspondingly, the first body portion 11P of the transparent housing body 10P is integrated with the second body portion 21P of the opaque housing body 20P, and the first opening portion 12P of the transparent housing body 10P is integrated with the second opening portion 22P of the opaque housing body 20P. Further, both of the first body portion 11P of the transparent housing body 10P and the second body portion 21P of the opaque housing body 20P have a U-shaped longitudinal cross-section, so that the alternative of the housing for a water purifier according to the fourth embodiment of the present invention as a whole has a U-shaped double-layer structure in the longitudinal cross-section.

As shown in Fig.13C of the accompanying drawings, the alternative of the housing for a water purifier according to the fourth embodiment of the present invention further comprises at least one transparent window body 30P, wherein the at least one transparent window body 30P is disposed in the at least one window 110P formed by the second body portion 21P of the opaque housing body 20P, and the at least one transparent window body 30P is integrated with the second body portion 21P of the opaque housing body 20P and the first body portion 11P of the transparent housing body 10P, respectively. Preferably, the at least one transparent window body 30P and the first body portion 11P of the transparent housing body 10P are made of the same material, and the at least one transparent window body 30P and the first body portion 11P of the transparent housing body 10P are formed synchronously. Preferably, the opaque housing body 20P forms a plurality of windows 110P. More preferably, the windows 110P of the opaque housing body 20P are arranged to be separated from each other and staggered from each other. It is appreciated that the at least one transparent window body 30P is made of transparent material.

Correspondingly, the alternative of the housing for a water purifier according to the fourth embodiment of the present invention is formed by integrating the transparent housing body 10P with the opaque housing body 20P, and the first body portion 11P of the transparent housing body 10P is made of a transparent material, the opaque housing body 20P forms the window 110P, so that the opaque housing body 20P of the alternative of the housing for a water purifier according to the fourth embodiment of the present invention is made of an opaque material having better flexibility and can withstand long-term water pressure and water hammer, and the transparent housing body 10P is made of a transparent material having better rigidity, so that the opaque housing body 20P and the transparent housing body 10P can obtain complementary advantages, thereby allowing the user to view the usage status of the filter cartridge at any time while ensuring safety. In addition, due to that the opaque housing body 20P of the alternative of the housing for a water purifier according to the fourth embodiment of the present invention is made of opaque material, the use of expensive transparent materials is reduced, significantly reducing the manufacturing cost of the alternative of the housing for a water purifier according to the fourth embodiment of the present invention.

It is worth mentioning that, in order to reduce the manufacturing process difficulty of the alternative of the housing for a water purifier according to the fourth embodiment of the present invention while ensuring the safety of the alternative of the housing for a water purifier according to the fourth embodiment of the present invention, the thickness of the transparent housing body 10P of the alternative of the housing for a water purifier according to the fourth embodiment of the present invention is not less than 2.5mm, the thickness of the opaque housing body 20P is not less than 2.5mm, and the thickness ratio of the transparent housing body 10P to the opaque housing body 20P of the alternative of the housing for a water purifier according to the fourth embodiment of the present invention is 1:3-3:1. Preferably, the thickness ratio of the transparent housing body 10P to the opaque housing body 20P of the alternative of the housing for a water purifier according to the fourth embodiment of the present invention is 1:2-2:1.

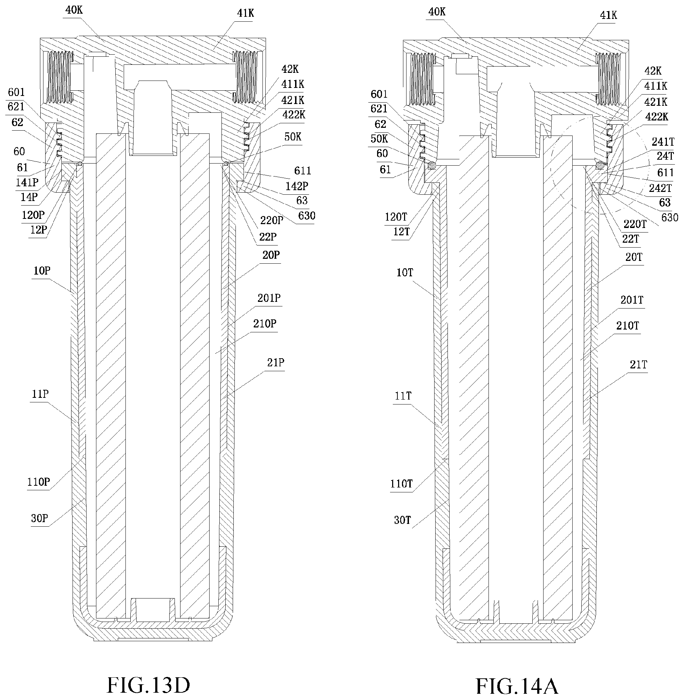

As shown in Figs.13A to 13C of the accompanying drawings, the alternative of the housing for a water purifier according to the fourth embodiment of the present invention further comprises a cover 40K and a sealing member 50K, wherein the sealing member 50K is water-sealed between the cover 40K and a mechanism formed by integrating the transparent housing body 10P with the opaque housing body 20P. Preferably, the sealing member 50K is water-sealed between the cover 40K and the folding edge 14P of the transparent housing body 10P. As shown in Fig.13D of the accompanying drawings, preferably, the sealing member 50K is water-sealed between the cover 40K and the second opening portion 22P of the opaque housing body 20P.

As shown in Figs.13A to 13C of the accompanying drawings, the cover 40K of the alternative of the housing for a water purifier according to the fourth embodiment of the present invention comprises a cover body 41K and a screwing portion 42K, wherein the screwing portion 42K of the cover 40K is extended from an outer side 411K of the cover body 41K, and the sealing member 50K is provided between the screwing portion 42K of the cover 40K and the folding edge 14P of the transparent housing body 10P, wherein the screwing portion 42K of the cover 40K forms a second thread 421K, wherein the second thread 421K is provided to be suitable to be screwed with the first thread 601 of the connecting member 60, so that the cover 40K can be screwed with the connecting member 60 and the sealing member 50K can be pressed against the folding edge 14P of the transparent housing body 10P and water-sealed between the screwing portion 42K of the cover 40K and the folding edge 14P of the transparent housing body 10P. Preferably, the sealing member 50K is ring-shaped and the sealing member 50K has a width no greater than that of the folding edge 14P of the transparent housing body 10P.

As shown in Figs.13A to 13C of the accompanying drawings, the first thread 601 of the connecting member 60 of the alternative of the housing for a water purifier according to the fourth embodiment of the present invention is an internal thread formed on the inner side wall 621 of the thread forming portion 62 of the connecting member 60, and the second thread 421K of the screwing portion 42K of the cover 40K is an external thread formed on an outer side wall 422K of the screwing portion 42K of the cover 40K, wherein the second thread 421K is provided to be suitable to be screwed together with the first thread 601 of the connecting member 60, so that the sealing member 50K is water-sealed between the cover 40K and the folding edge 14P of the transparent housing body 10P. Correspondingly, when the connecting member 60 is connected with the cover 40K of the alternative of the housing for a water purifier according to the fourth embodiment of the present invention (for example, screwed together), the sealing member 50K is water-sealed between the screwing portion 42K of the cover 40K and the folding edge 14P of the transparent housing body 10P, therefore, the cover 40K and the transparent housing body 10P of the fourth embodiment of the present invention form a seal, so that the water pressure or water hammer generated by the raw water is mostly borne by the opaque housing body 20P, which has better flexibility and can prevent it from being broken under the action of water pressure or water hammer, on the other hand, which makes water be contained inside a sealing chamber formed by the cover 40K, the sealing member 50K and the transparent housing body 10P to reduce the possibility of leakage of water to be treated and purified water. Further, the connecting member 60 is connected with the cover 40K of the alternative of the housing for a water purifier according to the fourth embodiment of the present invention, and the connecting portion 63 of the connecting member 60 is pressed against the bottom 142P of the folding edge 14P of the transparent housing body 10P, thereby significantly reducing stress generated by the connection of the connecting member 60 and the cover 40K, which is applied to the first body portion 11P and the first opening portion 12P of the transparent housing body 10P, in order to avoid the first body portion 11P and the first opening portion 12P of the transparent housing body 10P bearing excessive stress. It is appreciated that the folding edge 14P of the transparent housing body 10P can also be thickened and widened to further reduce probability of fracture under stress. As shown in Fig.13D of the accompanying drawings, optionally, the sealing member 50K is water-sealed between the cover 40K and the second opening portion 22P of the opaque housing body 20P, to ensure that the water pressure or water hammer generated by the raw water is mostly borne by a mechanism formed by the cover 40K, the opaque housing body 20P and the sealing member 50K, in order to minimize the possibility of water leakage.

Further, considering that the alternative of the housing for a water purifier according to the fourth embodiment of the present invention, as a manufactured product, even though only has a mechanism formed by integrating the opaque housing body 20P with the transparent housing body 10P, which can be used for sales purposes (the cover 40K can be allocated by downstream distributors). Therefore, although the present invention exemplarily describes the threaded connection between the connecting member 60 and the cover 40K of the alternative of the housing for a water purifier according to the fourth embodiment of the present invention, the alternative of the housing for a water purifier according to the fourth embodiment of the present invention is not limited to necessarily having the cover 40K.

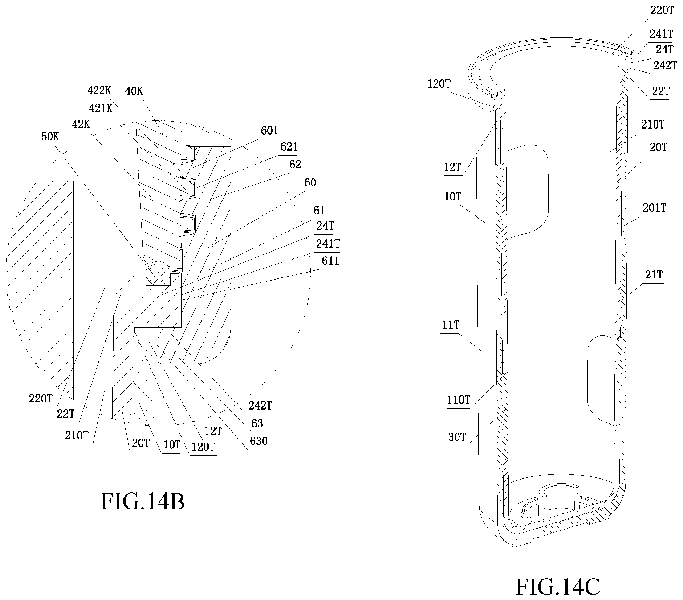

Figs.14A to 14C of the accompanying drawings illustrate another alternative of the housing for a water purifier according to the fourth embodiment of the present invention, which comprises a transparent housing body 10T, an opaque housing body 20T and a connecting member 60, wherein the transparent housing body 10T at least partially wraps around an outer surface 201T of the opaque housing body 20T, and the transparent housing body 10T and the opaque housing body 20T are integrated with each other, wherein the opaque housing body 20T forms at least one window 110T and a water treatment chamber 210T, and the connecting member 60 forms a first thread 601. It is appreciated that the opaque housing body 20T of the alternative of the housing for a water purifier according to the fourth embodiment of the present invention has flexibility better than that of the transparent housing body 10T, and the transparent housing body 10T has a rigidity stronger than that of the opaque housing body 20T. Therefore, the opaque housing body 20T is made of plastic material having better flexibility, and the transparent housing body 10T is made of plastic material having better rigidity and strength. It is appreciated that the water treatment chamber 210T formed by the opaque housing body 20T of the alternative of the housing for a water purifier according to the fourth embodiment of the present invention is used to accommodate water treatment materials inside the water treatment chamber 210T to purify raw water entering the water treatment chamber 210T.

As shown in Figs.14A to 14C of the accompanying drawings, the transparent housing body 10T of the alternative of the housing for a water purifier according to the fourth embodiment of the present invention has a first body portion 11T and a first opening portion 12T extended from the first body portion 11T, the opaque housing body 20T has a second body portion 21T, a second opening portion 22T extended from the second body portion 21T and a folding edge 24T extended outwardly from the second opening portion 22T, the connecting member 60 comprises a sleeve portion 61, a thread forming portion 62 extended upwardly from the sleeve portion 61 and a connecting portion 63 extended downwardly and inwardly from the sleeve portion 61, wherein the first opening portion 12T of the transparent housing body 10T forms a first opening 120T, and the second opening portion 22T of the opaque housing body 20T forms a second opening 220T, wherein the first opening 120T of the first opening portion 12T of the transparent housing body 10T and the second opening 220T of the second opening portion 22T of the opaque housing body 20T have the same orientation, wherein the first body 11T and first opening portion 12T of the transparent housing body 10T wraps around the second body 21T of the opaque housing body 20T, the second opening portion 22T of the opaque housing body 20T protrudes outwardly through the first opening 120T of the first opening portion 12T of the transparent housing body 10T, wherein the connecting member 60 is cylindrical, and the folding edge 24T of the opaque housing body 20T is ring-shaped, wherein the thread forming portion 62 forms the first thread 601, the connecting portion 63 forms a sleeve opening 630, wherein the sleeve opening 630 has an inner diameter smaller than the outside diameter of the first folding edge 24T of the opaque housing body 20T, so that the folding edge 24T of the opaque housing body 20T can be sleeved on an inner wall 611 of the sleeve portion 61, and the connecting portion 63 of the connecting member 60 can be pressed against a bottom 242T of the folding edge 24T of the opaque housing body 20T. Preferably, the first thread 601 of the connect member 60 is formed on an inner side wall 621 of the thread forming portion 62 of the connect member 60. It is appreciated that the connecting portion 63 of the connecting member 60 of the alternative of the housing for a water purifier according to the present invention ensures the sleeve connection between the connecting member 60 and the opaque housing body 20T.

As shown in Figs.14A to 14C of the accompanying drawings, the window 110T of the opaque housing body 20T of the alternative of the housing for a water purifier according to the fourth embodiment of the present invention is formed by the second body portion 21T of the opaque housing body 20T, and the window 110T of the opaque housing body 20T is positioned to face the first body portion 11T of the transparent housing body 10T. Correspondingly, the first body portion 11T and the first opening portion 12T of the transparent housing body 10T are integrated with the second body portion 21T of the opaque housing body 20T, and the second opening portion 22T of the opaque housing body 20T protrudes outwardly through the first opening 120T of the first opening portion 12T of the transparent housing body 10T. Further, both the first body portion 11T of the transparent housing body 10T are integrated with the second body portion 21T of the opaque housing body 20T have a U-shaped longitudinal cross-section, so that the alternative of the housing for a water purifier according to the fourth embodiment of the present invention as a whole has a U-shaped double-layer structure in the longitudinal cross-section, and when the housing for a water purifier according to the fourth embodiment of the present invention is vertically placed with the opening facing upwards, the second opening portion 22T of the opaque housing body 20T is slightly higher than the first opening portion 12T of the transparent housing body 10T.

As shown in Fig.14C of the accompanying drawings, the alternative of the housing for a water purifier according to the fourth embodiment of the present invention further comprises at least one transparent window body 30T, wherein the at least one transparent window body 30T is disposed in the at least one window 110T formed by the second body portion 21T of the opaque housing body 20T, and the at least one transparent window body 30T is integrated with the first body portion 11T of the transparent housing body 10T and the second body portion 21T of the opaque housing body 20T, respectively. Preferably, the at least one transparent window body 30T and the first body portion 11T of the transparent housing body 10T are made of the same material, and the at least one transparent window body 30T and the first body portion 11T of the transparent housing body 10T are formed synchronously. Preferably, the opaque housing body 20T forms a plurality of windows 110T. More preferably, the windows 110T of the opaque housing body 20T are arranged to be separated from each other. It is appreciated that the at least one transparent window body 30T is made of transparent material.

Correspondingly, the alternative of the housing for a water purifier according to the fourth embodiment of the present invention is formed by integrating the transparent housing body 10T with the opaque housing body 20T, and the first body portion 11T of the transparent housing body 10T is made of a transparent material, the opaque housing body 20T forms the window 110T, so that the opaque housing body 20T of the alternative of the housing for a water purifier according to the fourth embodiment of the present invention is made of an opaque material having better flexibility and can withstand long-term water pressure and water hammer, and the transparent housing body 10T is made of a transparent material having better rigidity, so that the opaque housing body 20T and the transparent housing body 10T can obtain complementary advantages, thereby allowing the user to view the usage status of the filter cartridge at any time while ensuring safety. In addition, due to that the opaque housing body 20T of the alternative of the housing for a water purifier according to the fourth embodiment of the present invention is made of opaque material, the use of expensive transparent materials is reduced, significantly reducing the manufacturing cost of the alternative of the housing for a water purifier according to the fourth embodiment of the present invention.

It is worth mentioning that, in order to reduce the manufacturing process difficulty of the alternative of the housing for a water purifier according to the fourth embodiment of the present invention while ensuring the safety of the alternative of the housing for a water purifier according to the fourth embodiment of the present invention, the thickness of the transparent housing body 10T of the alternative of the housing for a water purifier according to the fourth embodiment of the present invention is not less than 2.5mm, the thickness of the opaque housing body 20T is not less than 2.5mm, and the thickness ratio of the transparent housing body 10T to the opaque housing body 20T of the alternative of the housing for a water purifier according to the fourth embodiment of the present invention is 1:3-3:1. Preferably, the thickness ratio of the transparent housing body 10T to the opaque housing body 20T of the alternative of the housing for a water purifier according to the fourth embodiment of the present invention is 1:2-2:1.

As shown in Figs.14A to 14C of the accompanying drawings, the alternative of the housing for a water purifier according to the fourth embodiment of the present invention further comprises a cover 40K and a sealing member 50K, wherein the sealing member 50K is water-sealed between the cover 40K and a mechanism formed by integrating the transparent housing body 10T with the opaque housing body 20T. Preferably, the sealing member 50K is water-sealed between the cover 40K and the folding edge 24T of the opaque housing body 20T.

As shown in Figs.14A to 14C of the accompanying drawings, the cover 40K of the alternative of the housing for a water purifier according to the fourth embodiment of the present invention comprises a cover body 41K and a screwing portion 42K, wherein the screwing portion 42K of the cover 40K is extended from an outer side 411K of the cover body 41K, and the sealing member 50K is provided between the screwing portion 42K of the cover 40K and the folding edge 24T of the opaque housing body 20T, wherein the screwing portion 42K of the cover 40K forms a second thread 421K, wherein the second thread 421K is provided to be suitable to be screwed with the first thread 601 of the connecting member 60, so that the cover 40K can be screwed with the connecting member 60 and the sealing member 50K can be pressed against the folding edge 24T of the opaque housing body 20T and water-sealed between the screwing portion 42K of the cover 40K and the folding edge 24T of the opaque housing body 20T. Preferably, the sealing member 50K is ring-shaped and the sealing member 50K has a width no greater than that of the folding edge 24T of the opaque housing body 20T.

As shown in Figs.14A to 14C of the accompanying drawings, the first thread 601 of the connecting member 60 of the alternative of the housing for a water purifier according to the fourth embodiment of the present invention is an internal thread formed on the inner side wall 621 of the thread forming portion 62 of the connecting member 60, and the second thread 421K of the screwing portion 42K of the cover 40K is an external thread formed on an outer side wall 422K of the screwing portion 42K of the cover 40K, wherein the second thread 421K is provided to be suitable to be screwed together with the first thread 601 of the connecting member 60, so that the sealing member 50K is water-sealed between the cover 40K and the folding edge 24T of the opaque housing body 20T. Correspondingly, when the connecting member 60 is connected with the cover 40K of the alternative of the housing for a water purifier according to the fourth embodiment of the present invention (for example, screwed together), the sealing member 50K is water-sealed between the screwing portion 42K of the cover 40K and the folding edge 24T of the opaque housing body 20T, therefore, the cover 40K and the opaque housing body 20T of the fourth embodiment of the present invention form a seal, so that water pressure or water hammer generated by the raw water is mainly borne by a structure formed by the cover 40K, the sealing member 50K, and the opaque housing body 20T, and the opaque housing body 20T has better flexibility to prevent it from being broken under the action of water pressure or water hammer. Further, the connecting member 60 is connected with the cover 40K of the alternative of the housing for a water purifier according to the fourth embodiment of the present invention, and the connecting portion 63 of the connecting member 60 is pressed against the bottom 242T of the folding edge 24T of the opaque housing body 20T, thereby significantly reducing stress generated by the connection of the connecting member 60 and the cover 40K, which is applied to the first body portion 11T and the first opening portion 12T of the transparent housing body 10T, in order to avoid the first body portion 11T and the first opening portion 12T of the transparent housing body 10T bearing excessive stress. It is appreciated that the folding edge 24T of the opaque housing body 20T can also be thickened and widened to further reduce probability of fracture under stress.

Further, considering that the alternative of the housing for a water purifier according to the fourth embodiment of the present invention, as a manufactured product, even though only has a mechanism formed by integrating the opaque housing body 20T with the transparent housing body 10T, which can be used for sales purposes (the cover 40K can be allocated by downstream distributors). Therefore, although the present invention exemplarily describes the threaded connection between the connecting member 60 and the cover 40K of the alternative of the housing for a water purifier according to the fourth embodiment of the present invention, the alternative of the housing for a water purifier according to the fourth embodiment of the present invention is not limited to necessarily having the cover 40K.

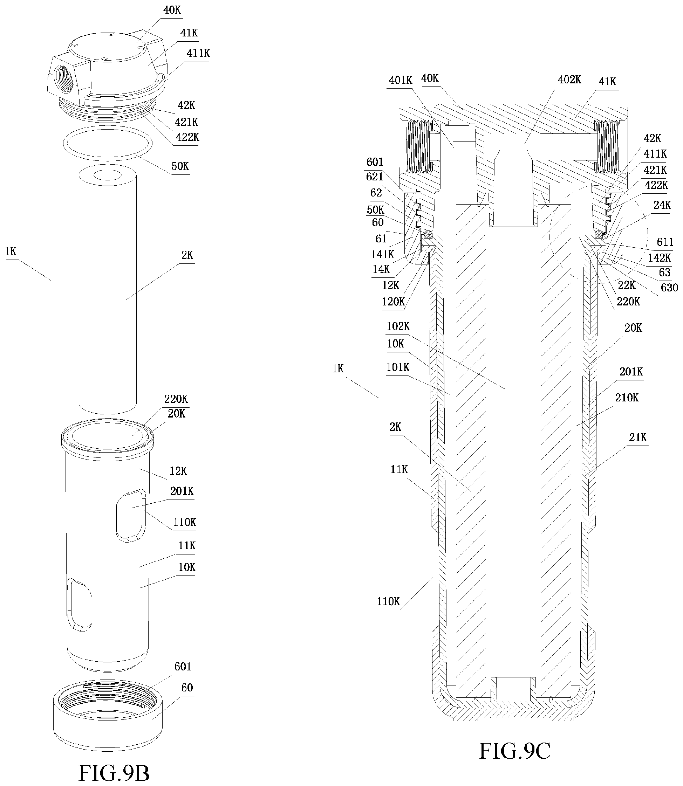

As shown in Figs.9B and 9C of the accompanying drawings, the housing for a water purifier according to the present invention is exemplarily designed to accommodate the filter material 2K of the water purifier 1K, and the housing for a water purifier according to the present invention and the filter material 2K can form a first water channel 101K therebetween, and the filter material 2K forms a second water channel 102K, so that raw water can flow into the first water channel 101K to be filtered by the filter material 2K to generate purified water, which is accumulated in the second water channel 102K for outflow, or raw water can flow into the second water channel 102K to be filtered by the filter material 2K to generate purified water, which is accumulated in the first water channel 101K for outflow. Correspondingly, the filter material 2K separates the first water channel 101K from the second water channel 102K. Further, the cover 40K used for the housing for a water purifier according to the present invention forms a first communicating channel 401K and a second communicating channel 402K, wherein the first communicating channel 401K is adapted to be communicated with the first water channel 101K, the second communicating channel 402K is adapted to be communicated with the second water channel 102K, and the first communicating channel 401K and the second communicating channel 402K are spacedly formed by the cover 40K.

The opaque housing body 10K (or opaque housing body 10L, opaque housing body 10M, opaque housing body 20N, opaque housing body 20P, opaque housing body 20T) of the housing for a water purifier according to the embodiments of the present invention is preferably made of opaque PP (polypropylene) or modified PP, the transparent housing body 20K (or transparent housing body 20L, transparent housing body 20M, transparent housing body 10N, transparent housing body 10P, transparent housing body 10T) is preferably made of AS (acrylonitrile styrene copolymer), PET (polyethylene terephthalate), PETG (polyethylene terephthalate 1,4-cyclohexanedimethanol ester), PC (polycarbonate), PCTG (1,4-Cyclohexylene Dimethylene Terephthalate Glycol), transparent PA (polyamide), or transparent ABS (acrylonitrile butadiene styrene copolymer).

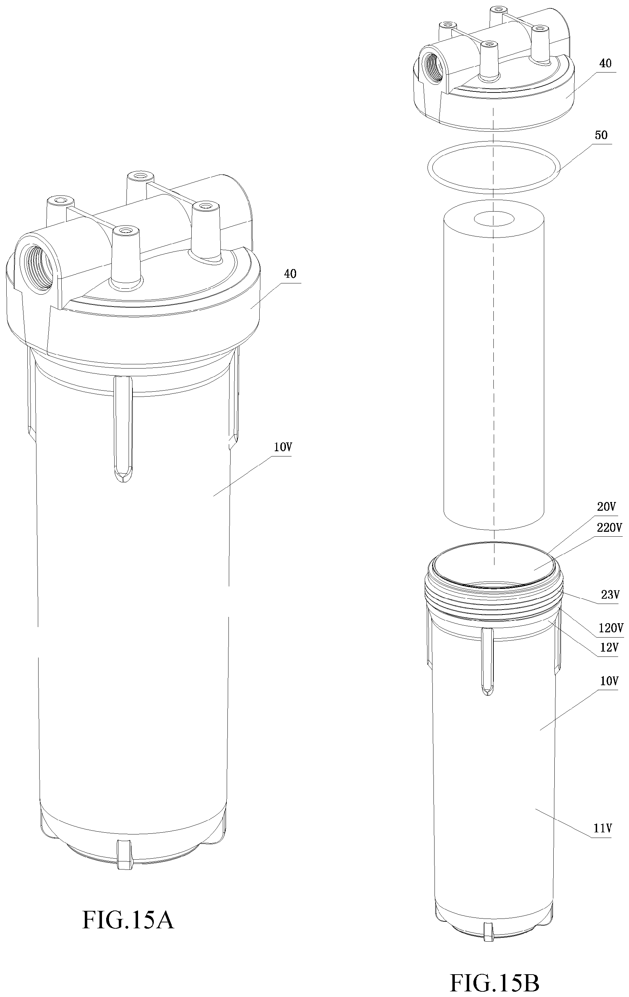

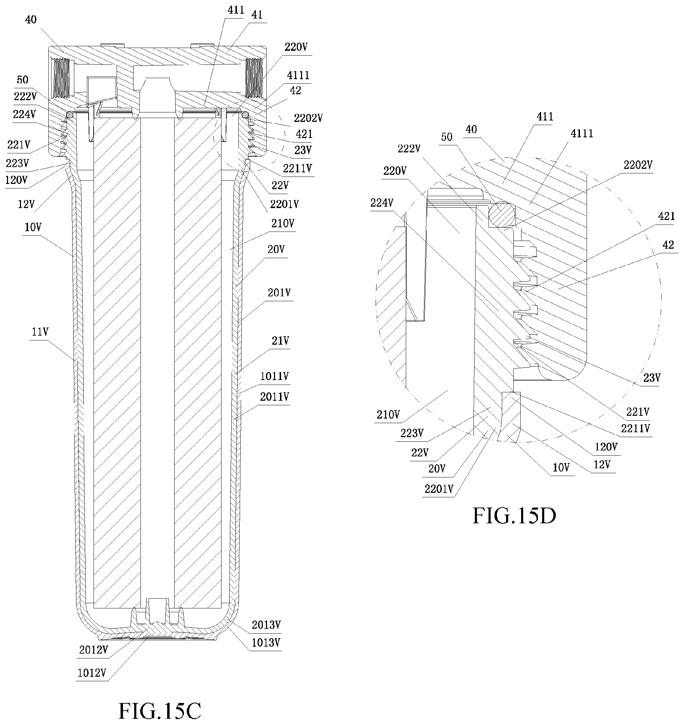

Referring to Figures 15A to 15D of the accompanying drawings, a housing for water purifier according to a fifth embodiment of the present invention is illustrated, which comprises a first transparent housing body 10V and a second transparent housing body 20V, wherein the first transparent housing body 10V at least partially wraps an outer surface 201V of the second transparent housing body 20V, and the first transparent housing body 10V and the second transparent housing body 20V are integrated with each other, wherein the second transparent housing body 20V defines a water treatment chamber 210V, and the first transparent housing body 10V and the second transparent housing body 20V have different translucency.

Generally, materials with different levels of transparency have varying degrees of elongation at break.

It is appreciated that the water treatment chamber 210V defined by the second transparent housing body 20V of the housing for water purifier of the fifth embodiment of the present invention is used to accommodate water treatment materials inside the water treatment chamber 210V for purifying raw water entering the water treatment chamber 210V.

Therefore, the second transparent housing body 20V used for the housing for water purifier of the fifth embodiment of the present invention is susceptible to water hammer caused by changes in water pressure of the raw water (or tap water).

Preferably, the flexibility (or rigidity) of the first transparent housing body 10V and the second transparent housing body 20V of the housing for the water purifier according to the fifth embodiment of the present invention are different, so that the first transparent housing body 10V and the second transparent housing body 20V can complement each other and provide better support for the raw water contained in the water treatment chamber 210V as a whole.

Preferably, the flexibility of the first transparent housing body 10V and the second transparent housing body 20V of the housing for the water purifier of the fifth embodiment of the present invention are different, can make the housing of the water purifier of the present invention being as a whole to provide better support for the raw water contained in the water treatment chamber 210V.

More preferably, the second transparent housing body 20V of the housing for the water purifier of the fifth embodiment of the according present invention has flexibility better than that of the first transparent housing body 10V.

Most preferably, the second transparent housing body 20V of the housing for the water purifier according to the fifth embodiment of the present invention has an elongation at break greater than that of the first transparent housing body 10V, to ensure that the water pressure borne by the second transparent housing body 20V can be better transmitted to the first transparent housing body 10V and the complementary effect generated by the first transparent housing body 10V and the second transparent housing body 20V can better resist the water hammer formed by the raw water in the water treatment chamber 210V.

As shown in Figs.15A to 15D of the accompanying drawings, the first transparent housing body 10V of the housing for water purifier of the fifth embodiment of the present invention comprises a first body portion 11V and a first opening portion 12V, and the second transparent housing body 20V comprises a second body portion 21V and a second opening portion 22V, wherein the first opening portion 12V of the first transparent housing body 10V is extended from the first body portion 11V, and the second opening portion 22V of the second transparent housing body 20V is extended from the second body portion 21V, wherein the first opening portion 12V of the first transparent housing body 10V defines a first opening 120V, and the second opening portion 22V of the second transparent housing body 20V defines a second opening 220V, wherein the first opening 120V of the first opening portion 12V of the first transparent housing body 10V and the second opening 220V of the second opening portion 22V of the second transparent housing body 20V have the same orientation, wherein the first body portion 11V of the first transparent housing body 10V wraps around the second body portion 21V of the second transparent housing body 20V, and the second opening portion 22V of the second transparent housing body 20V is partially wrapped by the first opening portion 12V of the first transparent housing body 10V.

Correspondingly, the first body portion 11V of the first transparent housing body 10V is integrated with the second body portion 21V of the second transparent housing body 20V, and the first opening portion 12V of the first transparent housing body 10V is integrated with the second opening portion 22V of the second transparent housing body 20V, so that the first opening portion 12V of the first transparent housing body 10V wraps around a neck portion 2201V of the second opening portion 22V of the second transparent housing body 20V.

Correspondingly, the second opening portion 22V of the second transparent housing body 20V protrudes outwardly through the first opening 120V of the first opening portion 12V of the first transparent housing body 10V, and the first opening portion 12V of the first transparent housing body 10V wraps around the neck portion 2201V of the second opening portion 22V of the second transparent housing body 20V.

As shown in Figures 15A to 15D of the accompanying drawings, the second opening portion 22V of the second transparent housing body 20V of the housing for the water purifier according to the fifth embodiment of the present invention further comprises a head portion 2202V, wherein the neck portion 2201V of the second opening portion 22V is extended outwardly from the second body 21V, the head portion 2202V of the second opening portion 22V is extended outwardly from the neck 2201V, and protrudes outwardly through the first opening 120V of the first opening portion 12V of the first transparent housing body 10V.

As shown in Figs.15A to 15D of the accompanying drawings, further, both of the longitudinal sections of the first body portion 11V of the first transparent housing body 10V and the second body portion 21V of the second transparent housing body 20V of the housing for water purifier of the fifth embodiment of the present invention are U-shaped, so that the first body portion 11V of the first transparent housing body 10V and the second body portion 21V of the second transparent housing body 20V can define a U-shaped double-layer structure.

Therefore, both the longitudinal sections of the first transparent housing body 10V and the second transparent housing body 20V of the housing for water purifier of the fifth embodiment of the present invention are U-shaped, so that the housing for water purifier of the fifth embodiment of the present invention as a whole has a U-shaped double-layer structure in its longitudinal section.

As shown in Figs.15A to 15D of the accompanying drawings, the housing for water purifier according to the fifth embodiment of the present invention further comprises a cover 40 and a sealing member 50, wherein the sealing member 50 is water-sealed between the cover 40 and a mechanism formed by integrating the first transparent housing body 10V and the second transparent housing body 20V.

Preferably, the sealing member 50 is water-sealed between the cover 40 and the second opening portion 22V of the second transparent housing body 20V.

More Preferably, the sealing member 50 the housing of the water purifier of the present invention is water-sealed between the cover 40 and the head portion 2202V of the second opening portion 22V of the second transparent housing body 20V.

As shown in Figs.15A to 15D of the accompanying drawings, the cover 40 of the housing for the water purifier according to the fifth embodiment of the present invention comprises a cover body 41 and a screwing portion 42, wherein the screwing portion 42 of the cover 40 is extended from a peripheral edge 4111 of an inner side 411 of the cover body 41, and the sealing member 50 is provided on the inner side 411 of the cover body 41, wherein the second opening portion 22V of the second transparent housing body 20V further has a first thread 23V, the sealing member 50 is surrounded by the screwing portion 42 of the cover 40, and the screwing portion 42 forms a second thread 421, wherein the second thread 421 is provided to be suitable for being screwed with the first thread 23V of the second opening portion 22V of the second transparent housing body 20V together, so that the cover 40 can be screwed onto the second opening portion 22V of the second transparent housing body 20V and the sealing member 50 can be pressed against the second opening portion 22V of the second transparent housing body 20V and water-sealed between the cover 40 and the second opening portion 22V of the second transparent housing body 20V.

Preferably, the sealing member 50 is ring-shaped.

As shown in Figs.15A to 15D of the accompanying drawings, the first thread 23V of the housing for water purifier according to the fifth embodiment of the present invention is an external thread formed on an outer side wall 221V of the second opening portion 22V of the second transparent housing body 20V, and the second thread 421 of the screwing portion 42 of the cover 40 is an internal thread formed on the inner side wall 422 of the screwing portion 42 of the cover 40, wherein the second thread 421 is provided to be suitable for being screwed with the first thread 23V of the second opening portion 22V of the second transparent housing body 20V together, so that the sealing member 50 can be water-sealed between the cover 40 and the second opening portion 22V of the second transparent housing body 20V.

As shown in Figs.15A to 15D of the accompanying drawings, the second opening portion 22V of the second transparent housing body 20V of the housing for water purifier according to the fifth embodiment of the present invention forms a top end 222V, a bottom end 223V and a thread forming portion 224V extended between the top end 222V and the bottom end 223V, wherein the top end 222V of the second opening portion 22V of the second transparent housing body 20V defines the second opening 220V, and the bottom end 223V of the second opening portion 22V of the second transparent housing body 20V is covered by the first opening portion 12V of the first transparent housing body 10V, the first thread 23V of the second opening portion 22V of the second transparent housing body 20V is formed by the thread forming portion 224V of the second opening portion 22V of the second transparent housing body 20V.

Correspondingly, the neck portion 2201V of the second opening portion 22V of the second transparent housing body 20V used in the housing of the water purifier of the present invention is formed at the bottom end 223V of the second opening portion 22V of the second transparent housing body 20V.

**It** is worth mentioning that the first transparent housing body 10V and the second transparent housing body 20V of the housing for the water purifier according to the fifth embodiment of the present invention are made of different transparent materials, and especially, when the manufacturing material of the second transparent housing body 20V has an elongation at break greater than that of the manufacturing material of the first transparent housing body 10V, the first transparent housing body 10V and the second transparent housing body 20V can form complementary support structures to better resist the water hammer formed by the raw water of the water treatment chamber 210V.

Under the same thickness, the housings made of materials with higher elongation at break (better flexibility) tend to expand under water hammer, while the housings made of materials with lower elongation at break (stronger rigidity) tend to crack under water hammer.

The first transparent housing body 10V and the second transparent housing body 20V used in the housing of the water purifier of the present invention are made of materials with different elongation at break, especially when the elongation at break of the manufacturing material of the second transparent housing body 20V is greater than that of the manufacturing material of the first transparent housing body 10V, the support performance of the housing used in the water purifier of the present invention can be better than that of the housing used in the water purifier with the same thickness but made of a single material with smaller or larger elongation at break (for example, better water hammer resistance and longer service life).

It is appreciated that a threaded portion of the housing used in the water purifier of the present invention tends to crack under the action of water hammer.

Therefore, the material of the second opening portion 22V of the second transparent housing body 20V of the housing for the water purifier of the present invention has a greater elongation at break, and the first thread 23V of the second opening portion 22V of that second transparent housing body 20V of the housing for the water purifier of the present invention is formed on an outside of the second opening portion 22V of the second transparent housing body 20V, which can make the first thread 23V (or the thread-forming portion 224V) of the second transparent housing body 20V of the housing for the water purifier of the present invention be hard to crack.

The second opening portion 22V of the second transparent housing body 20V of the housing for the water purifier according to the fifth embodiment of the present invention is connected to the cover 40 of the housing for the water purifier according to the fifth embodiment of the present invention (e.g., when screwed together), and the second opening portion 22V of the second transparent housing body 20V protrudes outwardly through the first opening 120V of the first opening portion 12V of the first transparent housing body 10V to avoid cracking of the first body portion 11V and the first opening portion 12V of the first transparent housing body 10V under the action of the stress generated by the connection between the cover 40 and the second transparent housing body 20V.

As shown in Figs.15A to 15D of the accompanying drawings, preferably, the head portion 2202V of the second opening portion 22V of the second transparent housing body 20V of the housing of the water purifier according to the fifth embodiment of the present invention is thickened to enhance its strength and prevent it from shattering under stress.

Further, considering that the housing for the water purifier of the fifth embodiment of the present invention, as a manufactured product, even though only has a mechanism formed by integrating the first transparent housing body 10V and the second transparent housing body 20V, which can be used for sales purposes (the cover 40 can be allocated by downstream distributors). Therefore, although the present invention exemplarily describes the threaded connection between the second opening portion 22V of the second transparent housing body 20V and the cover 40 of the housing of the water purifier of the fifth embodiment of the present invention, the housing of the water purifier of the fifth embodiment of the present invention is not limited to necessarily having the cover 40 and the sealing member 50.

Correspondingly, the second transparent housing body 20V and the first transparent housing body 10V of the housing of the water purifier according to the fifth embodiment of the present invention are integrated with each other, both the first transparent housing body 10V and the second transparent housing body 20V are made of a transparent material (a resin material), and the first transparent housing body 10V and the second transparent housing body 20V have different transmittance (different transparent materials tend to have different natural colors and transmittance), so that the first transparent housing body 10V and the second transparent housing body 20V of the housing of the water purifier of the fifth embodiment of the present invention can form an advantageous complementary effect and have a better counteracting effect against water hammer.

In addition, although the first transparent housing body 10V and the second transparent housing body 20V have different transmittance, the first transparent housing body 10V and the second transparent housing body 20V of the housing of the water purifier of the present invention are respectively made of a material having a suitable transmittance, so as to enable a user to observe the use condition of the water treatment material in the water treatment chamber 210V through the first transparent housing body 10V and the second transparent housing body 20V and to determine whether the water treatment material needs to be replaced.

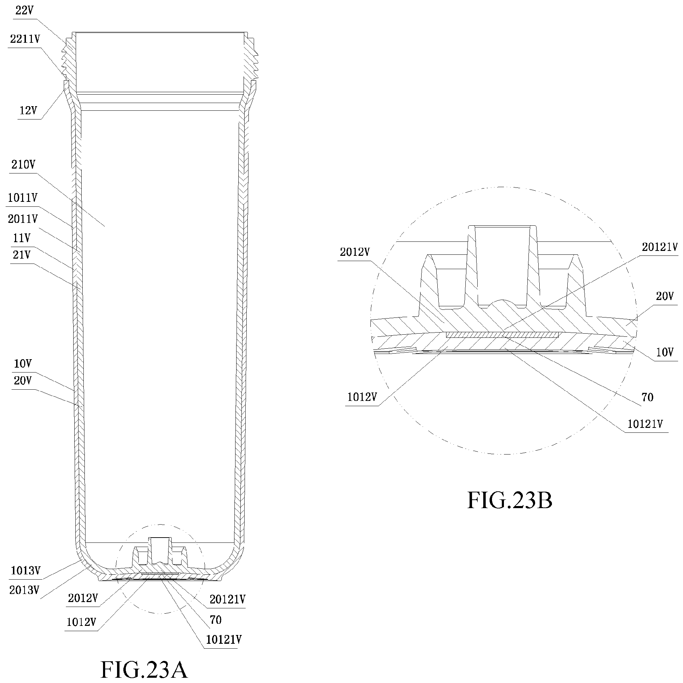

As shown in Figs. 23A and 23B of the accompanying drawings, preferably, the housing of the water purifier of the fifth embodiment of the present invention further comprises a sealing sheet 70, wherein the sealing sheet 70 is provided between a second bottom 2012V of the second transparent housing body 20V and a first bottom 1012V of the first transparent housing body 10V, and wherein the sealing sheet 70 is provided to face an injection molded hole forming portion 20121V of the second bottom 2012V of the second transparent housing body 20V, directly, or/and the sealing sheet 70 is provided to face an injection molded hole forming portion 10121V of the first bottom 1012V of the first transparent housing body 10V, directly.

**It** is appreciated that, the first transparent housing body 10V and the second transparent housing body 20V of the housing of the water purifier according to the fifth embodiment of the present invention have a cylindrical structure, respectively, and during injection molding, a molding resin is to be injected from the bottom, and when the first transparent housing body 10V and the second transparent housing body 20V are being molded, the molding resin is formed in the molding resin injection site at the molding resin forming portion 10121V and the injection hole forming portion 20121V at the injection site of the molding resin may form holes due to air bubbles, resulting in water leakage.

The sealing sheet 70 of the housing of the water purifier of the present invention is provided between the second bottom 2012V of the second transparent housing body 20V and the first bottom 1012V of the first transparent housing body 10V, and wherein the sealing sheet 70 is provided to face the injection molded hole forming portion 20121V of the second bottom 2012V of the second transparent housing body 20V, directly, or/and the sealing sheet 70 is provided to face an injection molded hole forming portion 10121V of the first bottom 1012V of the first transparent housing body 10V, directly, so that when the first transparent housing body 10V and the second transparent housing body 20V form an integrated structure, a seal is formed at the injection molded hole forming portion 20121V of the second bottom 2012V of the second transparent housing body 20V.

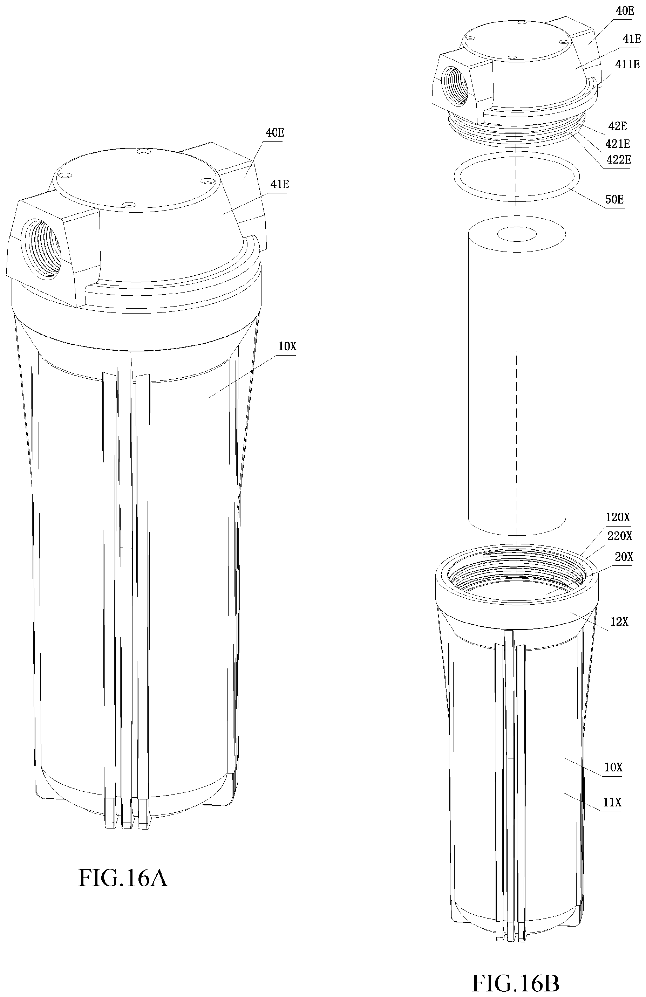

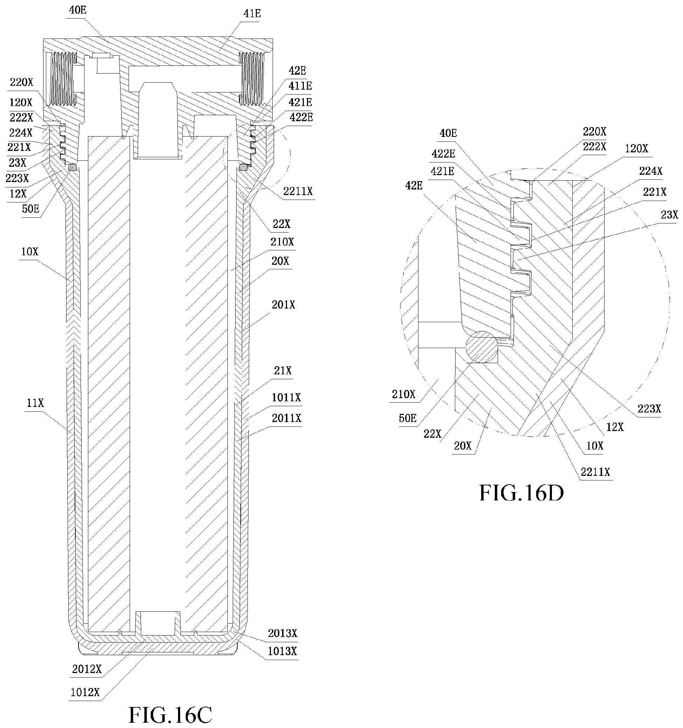

Referring to Figures 16A to 16D of the accompanying drawings, an alternative of the housing of the water purifier according to the fifth embodiment of the present invention is illustrated, which comprises a first transparent housing body 10X and a second transparent housing body 20X, wherein the first transparent housing body 10X at least partially wraps around an outer surface 201X of the second transparent housing body 20X, and the first transparent housing body 10X and the second transparent housing body 20X are integrated with each other, wherein the second transparent housing body 20X defines a water treatment chamber 210X, and the first transparent housing body 10X and the second transparent housing body 20X have different translucency.

It is appreciated that the water treatment chamber 210X defined by the second transparent housing body 20X of the housing of the water purifier of the fifth embodiment of the present invention is used to accommodate water treatment materials inside the water treatment chamber 210X for purifying raw water entering the water treatment chamber 210X.

Therefore, the second transparent housing body 20X used for the housing of the water purifier of the fifth embodiment of the present invention is susceptible to water hammer caused by changes in water pressure of the raw water (or tap water).

Preferably, the flexibility (or rigidity) of the first transparent housing body 10V and the second transparent housing body 20X of the housing of the water purifier according to the fifth embodiment of the present invention are different, so that the first transparent housing body 10X and the second transparent housing body 20X can complement each other and provide better support for the raw water contained in the water treatment chamber 210X as a whole.

Preferably, the flexibility of the first transparent housing body 10X and the second transparent housing body 20X of the housing of the water purifier of the fifth embodiment of the present invention are different, can make the housing of the water purifier of the present invention being as a whole to provide better support for the raw water contained in the water treatment chamber 210X.

More preferably, the second transparent housing body 20X of the housing of the water purifier of the fifth embodiment of the according present invention has flexibility better than that of the first transparent housing body 10X.

Most preferably, the second transparent housing body 20X of the housing of the water purifier according to the fifth embodiment of the present invention has an elongation at break greater than that of the first transparent housing body 10X, to ensure that the water pressure borne by the second transparent housing body 20X can be better transmitted to the first transparent housing body 10X and the complementary effect generated by the first transparent housing body 10X and the second transparent housing body 20X can better resist the water hammer formed by the raw water in the water treatment chamber 210X.

As shown in Figs.16A to 16D of the accompanying drawings, the first transparent housing body 10X of the alternative of the housing of the water purifier of the fifth embodiment of the present invention comprises a first body portion 11X and a first opening portion 12X, and the second transparent housing body 20X comprises a second body portion 21X and a second opening portion 22X, wherein the first opening portion 12X of the first transparent housing body 10X is integrally extended from the first body portion 11X, and the second opening portion 22X of the second transparent housing body 20X is integrally extended from the second body portion 21X, wherein the first opening portion 12X of the first transparent housing body 10X defines a first opening 120X, and the second opening portion 22X of the second transparent housing body 20X defines a second opening 220X, wherein the first opening 120X of the first opening portion 12X of the first transparent housing body 10X and the second opening 220X of the second opening portion 22X of the second transparent housing body 20X have the same orientation, wherein the first body portion 11X of the first transparent housing body 10X integrally wraps around the second body portion 21X of the second transparent housing body 20X, and the second opening portion 22X of the second transparent housing body 20X is integrally wrapped by the first opening portion 12X of the first transparent housing body 10X.

Correspondingly, the first body portion 11X of the first transparent housing body 10X is integrated with the second body portion 21X of the second transparent housing body 20X, the first opening portion 12X of the first transparent housing body 10X is integrated with the second opening portion 22X of the second transparent housing body 20X.

As shown in Figs.16A to 16D of the accompanying drawings, further, both of the longitudinal sections of the first transparent housing body 10X and the second transparent housing body 20X of the alternative of the housing of the water purifier of the fifth embodiment of the present invention are U-shaped, so that the first transparent housing body 10X and the second transparent housing body 20X can define a U-shaped double-layer structure.

Therefore, both the longitudinal sections of the first transparent housing body 10X and the second transparent housing body 20X of the alternative of the housing of water purifier of the fifth embodiment of the present invention are U-shaped, so that the alternative of the water purifier of the fifth embodiment of the present invention as a whole has a U-shaped double-layer structure in its longitudinal section.

As shown in Figs.16A to 16D of the accompanying drawings, the alternative of the housing for the water purifier according to the fifth embodiment of the present invention further comprises a cover 40E and a sealing member 50E, wherein the sealing member 50E is water-sealed between the cover 40E and a mechanism formed by integrating the first transparent housing body 10X and the second transparent housing body 20X.

Preferably, the sealing member 50E is water-sealed between the cover 40E and the second opening portion 22X of the second transparent housing body 20X.

As shown in Figs.16A to 16D of the accompanying drawings, the cover 40E of the alternative of the housing for the water purifier according to the fifth embodiment of the present invention comprises a cover body 41E and a screwing portion 42E, wherein the screwing portion 42E of the cover 40E is extended from an outer side 411E of the cover body 41E, and the sealing member 50E is provided between the screwing portion 42E of the cover 40E and the second opening portion 22X of the second transparent housing body 20X, wherein the second opening portion 22X of the second transparent housing body 20X further has a first thread 23X and the screwing portion 42E of the cover 40E forms a second thread 421E, wherein the second thread 421E is provided to be suitable to be screwed with the first thread 23X of the second opening portion 22X of the second transparent housing body 20X together, so that the cover 40E can be screwed to the second opening portion 22X of the second transparent housing body 20X and the sealing member 50E can be pressed against the second opening portion 22X of the second transparent housing body 20X and water-sealed between the cover 40E and the second opening portion 22X of the second transparent housing body 20X.

Preferably, the first opening portion 12X of the first transparent housing body 10X has a length no less than that of the second opening portion 22X of the second transparent housing body 20X, so that the second opening portion 22X of the second transparent housing body 20X is completely wrapped by the first opening portion 12X of the first transparent housing body 10X.

Therefore, the cover 40E and the second opening portion 22X of the second transparent housing body 20X of the fifth embodiment of the present invention form a seal, so that water pressure can only be applied to a sealing chamber formed by the cover 40E, the sealing member 50E and the second transparent housing body 20X, thereby avoiding water pressure and water hammer generated by water pressure from directly acting on the first opening portion 12X of the first transparent housing body 10X, which is made of transparent material.

The second transparent housing body 20X has an elongation at break greater than that of the first transparent housing body 10X of the housing for the water purifier of the present invention and has stronger resistance to water hammer impact, and the second opening portion 22X of the second transparent housing body 20X is not easily broken under the action of water pressure and water hammer generated by water pressure, thereby increasing the service life of the alternative of the housing for water purifier according to the fifth embodiment of the present invention.

Preferably, the sealing member 50E is ring-shaped.

As shown in Figs.16A to 16D of the accompanying drawings, the first thread 23X of the alternative of the housing for the water purifier according to the fifth embodiment of the present invention is an internal thread formed on an inner side wall 221X of the second opening portion 22X of the second transparent housing body 20X, and the second thread 421E of the screwing portion 42E of the cover 40E is an external thread formed on the outer side wall 422E of the screwing portion 42E of the cover 40E, wherein the second thread 421E is provided to be suitable for being screwed with the first thread 23H of the second opening portion 22X of the second transparent housing body 20X together, so that the sealing member 50E can be water-sealed between the cover 40E and the second opening portion 22X of the second transparent housing body 20X.

As shown in Figs.16A to 16D of the accompanying drawings, the second opening portion 22X of the second transparent housing body 20X of the alternative of the housing for the water purifier according to the fifth embodiment of the present invention forms a top end 222X, a bottom end 223X and a thread forming portion 224X extended between the top end 222X and the bottom end 223X, wherein the thread forming portion 224X of the second opening portion 22X of the second transparent housing body 20X is outwardly and upwardly extended from the bottom end 223X, the top end 222X of the second opening portion 22X of the second transparent housing body 20X defines the second opening 220X, the first thread 23X of the second opening portion 22X of the second transparent housing body 20X is formed by the thread forming portion 224X of the second opening portion 22X of the second transparent housing body 20X.

As shown in Figs.16A to 16D of the accompanying drawings, preferably, the second opening portion 22X of the second transparent housing body 20X is thickened to enhance its strength, to prevent the second opening portion 22X of the second transparent housing body 20X from being broken or fragmentated caused by being subjected to stress generated by the connection between the cover 40E and the second opening portion 22X of the second transparent housing body 20X when the second opening portion 22X of the second transparent housing body 20X and the cover 40E of the alternative of the housing for water purifier according to the fifth embodiment of the present invention are connected with each other (for example, when screwed together).

Preferably, the sealing member 50E is water-sealed between the cover 40E and the bottom end 223X of the second opening portion 22X of the second transparent housing body 20X.

Further, considering that the alternative of the housing for the water purifier of the fifth embodiment of the present invention, as a manufactured product, even though only has a mechanism formed by integrating the first transparent housing body 10X and the second transparent housing body 20X, which can be used for sales purposes (the cover 40E can be allocated by downstream distributors). Therefore, although the present invention exemplarily describes the threaded connection between the second opening portion 22X of the second transparent housing body 20X and the cover 40E of the alternative of the housing for water purifier of the fifth embodiment of the present invention, the alternative of the housing for water purifier of the fifth embodiment of the present invention is not limited to necessarily having the cover 40E and the sealing member 50E.

Correspondingly, the second transparent housing body 20X and the first transparent housing body 10X of the housing of the water purifier according to the fifth embodiment of the present invention are integrated with each other, both the first transparent housing body 10X and the second transparent housing body 20X are made of a transparent material (a resin material), respectively, and the first transparent housing body 10X and the second transparent housing body 20X have different transmittances (different transparent materials tend to have different natural colors and transmittance) and different elongations at break, so that the first transparent housing body 10X and the second transparent housing body 20X of the housing of the water purifier of the fifth embodiment of the present invention can form an advantageous complementary effect and an integrated mechanism formed by the first transparent housing body 10X and the second transparent housing body 20X has a better counteracting effect against water hammer.

Under the same thickness, the housings made of materials with higher elongation at break (better flexibility) tend to expand under water hammer, while the housings made of materials with lower elongation at break (stronger rigidity) tend to crack under water hammer.

The first transparent housing body 10X and the second transparent housing body 20X used in the housing of the water purifier of the present invention are made of materials with different elongation at break, especially when the elongation at break of the manufacturing material of the second transparent housing body 20X is greater than that of the manufacturing material of the first transparent housing body 10X, the support performance of the housing used in the water purifier of the present invention can be better than that of the housing used in the water purifier with the same thickness but made of a single material with smaller or larger elongation at break (for example, better water hammer resistance and longer service life).

In addition, although the first transparent housing body 10X and the second transparent housing body 20X have different transmittance, the first transparent housing body 10X and the second transparent housing body 20X of the housing of the water purifier of the present invention are respectively made of a material having a suitable transmittance, so as to enable a user to observe the use condition of the water treatment material in the water treatment chamber 210X through the first transparent housing body 10X and the second transparent housing body 20X and to determine whether the water treatment material needs to be replaced.

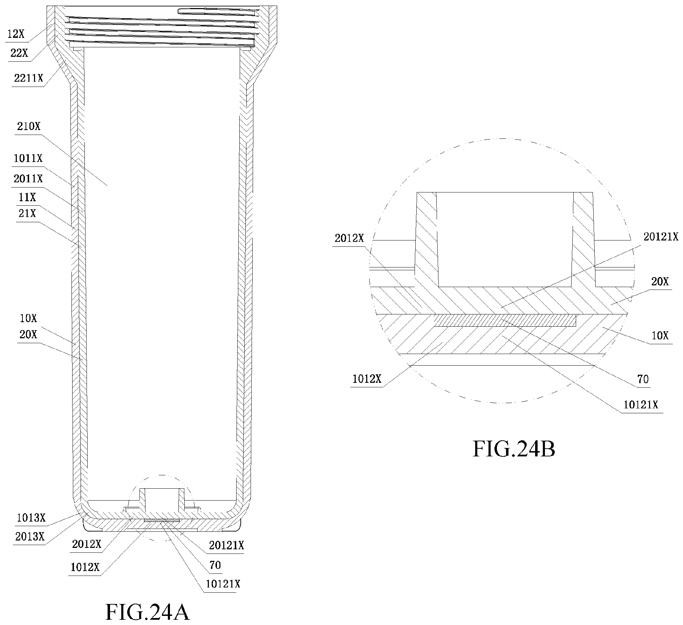

As shown in Figs. 24A and 24B of the accompanying drawings, preferably, the alternative of the housing of the water purifier of the fifth embodiment of the present invention further comprises a sealing sheet 70, wherein the sealing sheet 70 is provided between a second bottom 2012X of the second transparent housing body 20X and a first bottom 1012X of the first transparent housing body 10X, and wherein the sealing sheet 70 is provided to face an injection molded hole forming portion 20121X of the second bottom 2012X of the second transparent housing body 20X, directly, or/and the sealing sheet 70 is provided to face an injection molded hole forming portion 10121X of the first bottom 1012X of the first transparent housing body 10X, directly.

**It** is appreciated that, the first transparent housing body 10X and the second transparent housing body 20X of the housing of the water purifier according to the fifth embodiment of the present invention have a cylindrical structure, respectively, and during injection molding, a molding resin is to be injected from the bottom, and when the first transparent housing body 10X and the second transparent housing body 20X are being molded, the molding resin is formed in the molding resin injection site at the molding resin forming portion 10121X and the injection hole forming portion 20121X at the injection site of the molding resin may form holes due to air bubbles, resulting in water leakage.

The sealing sheet 70 of the housing of the water purifier of the present invention is provided between the second bottom 2012X of the second transparent housing body 20X and the first bottom 1012X of the first transparent housing body 10X, and wherein the sealing sheet 70 is provided to face the injection molded hole forming portion 20121X of the second bottom 2012X of the second transparent housing body 20X, directly, or/and the sealing sheet 70 is provided to face an injection molded hole forming portion 10121X of the first bottom 1012X of the first transparent housing body 10X, directly, so that when the first transparent housing body 10X and the second transparent housing body 20X form an integrated structure, a seal is formed at the injection molded hole forming portion 20121X of the second bottom 2012X of the second transparent housing body 20X.

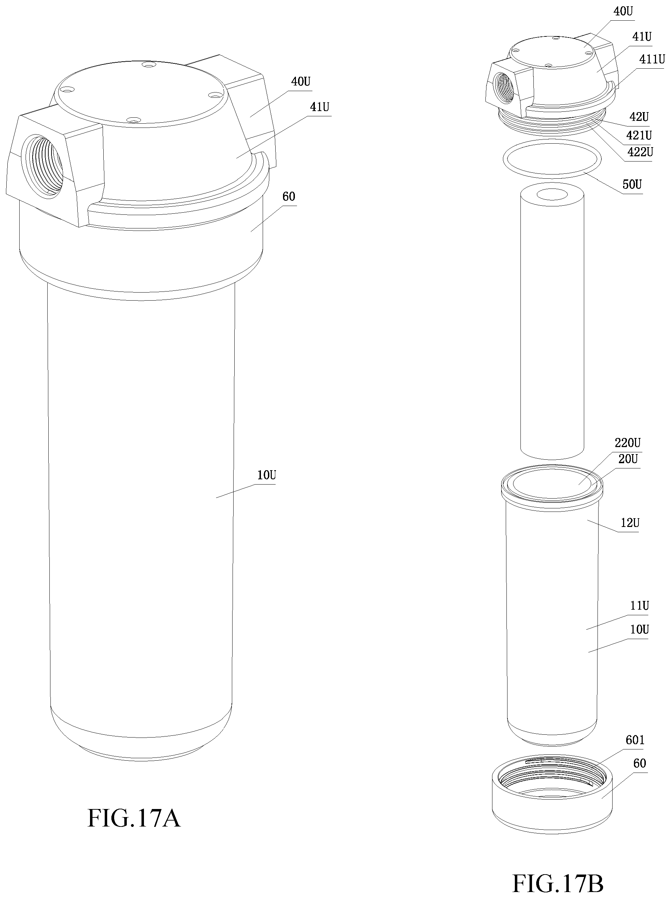

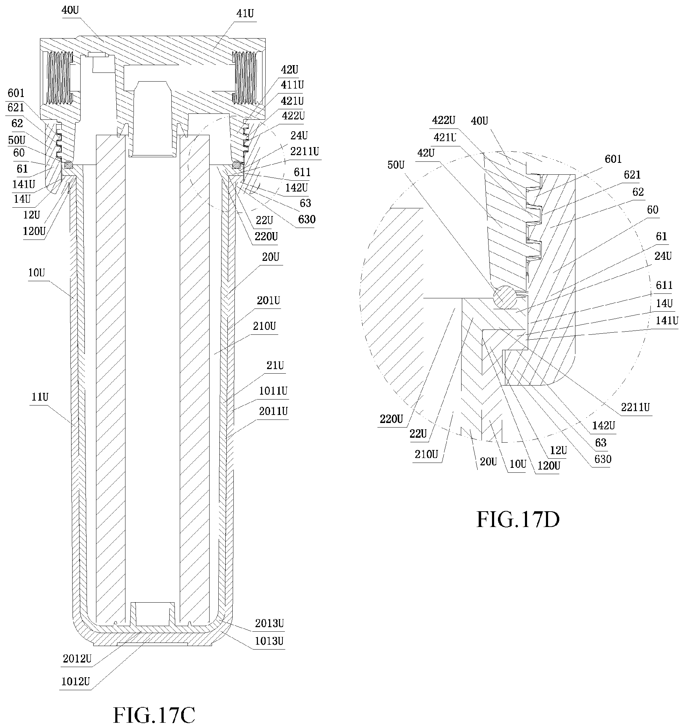

Referring to Figures 17A to 17D of the accompanying drawings, another alternative of the housing of the water purifier according to the fifth embodiment of the present invention is illustrated, which comprises a first transparent housing body 10U and a second transparent housing body 20U, wherein the first transparent housing body 10U at least partially wraps around an outer surface 201U of the second transparent housing body 20U, and the first transparent housing body 10U and the second transparent housing body 20U are integrated with each other, wherein the second transparent housing body 20U defines a water treatment chamber 210U, and the first transparent housing body 10U and the second transparent housing body 20U have different transparencies.

It is appreciated that the water treatment chamber 210U defined by the second transparent housing body 20U of the housing for the water purifier of the fifth embodiment of the present invention is used to accommodate water treatment materials inside the water treatment chamber 210U for purifying raw water entering the water treatment chamber 210U.

Therefore, the second transparent housing body 20U used for the housing of the water purifier of the fifth embodiment of the present invention is susceptible to water hammer caused by changes in water pressure of the raw water (or tap water).

Preferably, the flexibility (or rigidity) of the first transparent housing body 10U and the second transparent housing body 20U of the housing of the water purifier according to the fifth embodiment of the present invention are different, so that the first transparent housing body 10U and the second transparent housing body 20U can complement each other and provide better support for the raw water contained in the water treatment chamber 210U as a whole.

Preferably, the flexibility of the first transparent housing body 10U and the second transparent housing body 20U of the housing of the water purifier of the fifth embodiment of the present invention are different, can make the housing of the water purifier of the present invention being as a whole to provide better support for the raw water contained in the water treatment chamber 210U.

More preferably, the second transparent housing body 20U of the housing of the water purifier of the fifth embodiment of the according present invention has flexibility better than that of the first transparent housing body 10U.

Most preferably, the second transparent housing body 20U of the housing of the water purifier according to the fifth embodiment of the present invention has an elongation at break greater than that of the first transparent housing body 10U, to ensure that the water pressure borne by the second transparent housing body 20U can be better transmitted to the first transparent housing body 10U and the complementary effect generated by the first transparent housing body 10U and the second transparent housing body 20U can better resist the water hammer by the raw water in the water treatment chamber 210U.

As shown in Figs.17A to 17D of the accompanying drawings, the first transparent housing body 10U of the alternative of the housing for the water purifier according to the fifth embodiment of the present invention has a first body portion 11U, a first opening portion 12U extended from the first body portion 11U and a first folding edge 14U extended from the first opening portion 12U, the second transparent housing body 20U has a second body portion 21U, a second opening portion 22U extended from the second body portion 21U and a second folding edge 24U extended from the second opening portion 22U, wherein the first opening portion 12U of the first transparent housing body 10U defines a first opening 120U and the second opening portion 22U of the second transparent housing body 20U defines a second opening 220U, wherein the first opening 120U of the first opening portion 12U of the first transparent housing body 10U and the second opening 220U of the second opening portion 22U of the second transparent housing body 20U have the same orientation, wherein both the first body portion 11U and the first opening portion 12U of the first transparent housing body 10U wrap around the second body portion 21U of the second transparent housing body 20U, the first folding edge 14U of the first transparent housing body 10U and the second folding edge 24U of the second transparent housing body 20U are integrated with each other.

Preferably, both the first folding edge 14U of the first transparent housing body 10U and the second folding edge 24U of the second transparent housing body 20U of the housing for the water purifier of the present invention are ring-shaped.

It is worth mentioning that the first transparent housing body 10U and the second transparent housing body 20U of the alternative of the housing for the water purifier according to the fifth embodiment of the present invention are integrated with each other, the first transparent housing body 10U and the second transparent housing body 20U are made of transparent materials, wherein the first transparent housing body 10U and the second transparent housing body 20U have different transparencies and the second transparent housing body 20U and the first transparent housing body 10U have different elongations at break, and especially, when the manufacturing material of the second transparent housing body 20U has an elongation at break greater than that of the manufacturing material of the first transparent housing body 10U, the first transparent housing body 10U and the second transparent housing body 20U can form complementary support structures to better resist the water hammer formed by the raw water of the water treatment chamber 210U.

Under the same thickness, the housings made of materials with higher elongation at break (better flexibility) tend to expand under water hammer, while the housings made of materials with lower elongation at break (stronger rigidity) tend to crack under water hammer.

The first transparent housing body 10U and the second transparent housing body 20U used in the housing of the water purifier of the present invention are made of materials with different elongation at break, especially when the elongation at break of the manufacturing material of the second transparent housing body 20U is greater than that of the manufacturing material of the first transparent housing body 10U, the support performance of the housing used in the water purifier of the present invention can be better than that of the housing used in the water purifier with the same thickness but made of a single material with smaller or larger elongation at break (for example, better water hammer resistance and longer service life).

As shown in Figs.17A to 17D of the accompanying drawings, the alternative of the housing for the water purifier according to the fifth embodiment of the present invention further comprises a connecting member 60, wherein the connecting member 60 comprises a sleeve portion 61, a thread forming portion 62 extended upwardly from the sleeve portion 61 and a connecting portion 63 extended downwardly and inwardly from the sleeve portion 61, wherein the thread forming portion 62 forms a first thread 601, the connecting portion 63 forms a sleeve opening 630, and the sleeve opening 630 has an inner diameter smaller than the outer diameter of the first folding edge 14U of the first transparent housing body 10U and the second folding edge 24U of the second transparent housing body 20U, such that the first folding edge 14U of the first transparent housing body 10U and the second folding edge 24U of the second transparent housing body 20U can be sleeved at an inner side wall 611 of the sleeve portion 61, the connecting portion 63 of the connection member 60 can be pressed against an bottom portion 142U of the first folding edge 14U of the first transparent housing body 10U.

Preferably, the first thread 601 of the connect member 60 is formed on an inner side wall 621 of the thread forming portion 62 of the connect member 60.

More preferably, the connected member 60 is cylindrical.

It is appreciated that the connecting portion 63 of the connecting member 60 of the housing for the water purifier of the present invention ensures the sleeve connection between the connecting member 60 and the first transparent housing body 10U.

As shown in Figs.17A to 17D of the accompanying drawings, the alternative of the housing for the water purifier according to the fifth embodiment of the present invention further comprises a cover 40U and a sealing member 50U, wherein the sealing member 50U is water-sealed between the cover 40U and a mechanism formed by integrating the first transparent housing body 10U and the second transparent housing body 20U.

Preferably, the sealing member 50U is water-sealed between the cover 40U and a second folding edge 24U of the second transparent housing body 20U.

As shown in Figs.17A to 17D of the accompanying drawings, the cover 40U of the alternative of the housing for the water purifier according to the fifth embodiment of the present invention comprises a cover body 41U and a screwing portion 42U, wherein the screwing portion 42U of the cover 40U is extended from an outer side 411U of the cover body 41U, and the sealing member 50U is provided between the screwing portion 42U of the cover 40U and the second folding edge 24U of the second transparent housing body 20U, wherein the screwing portion 42U of the cover 40U forms a second thread 421U, wherein the second thread 421U is provided to be suitable to be screwed with the first thread 601 of the connecting member 60, so that the cover 40U can be screwed with the connecting member 60 and the sealing member 50U can be pressed against the second folding edge 24U of the second transparent housing body 20U and water-sealed between the screwing portion 42U of the cover 40U and the second folding edge 24U of the second transparent housing body 20U.

Preferably, the sealing member 50U is ring-shaped and the sealing member 50U has a width no greater than that of the second folding edge 24U of the second transparent housing body 20U.

As shown in Figs.17A to 17D of the accompanying drawings, the first thread 601 of the connecting member 60 of the alternative of the housing for the water purifier according to the fifth embodiment of the present invention is an internal thread formed on the inner side wall 621 of the thread forming portion 62 of the connecting member 60, and the second thread 421U of the screwing portion 42U of the cover 40U is an external thread formed on an outer side wall 422U of the screwing portion 42U of the cover 40U, wherein the second thread 421U is provided to be suitable to be screwed together with the first thread 601 of the connecting member 60, so that the sealing member 50U is water-sealed between the cover 40U and the second folding edge 24U of the second transparent housing body 20U.

Correspondingly, when the connecting member 60 is connected with the cover 40U of the alternative of the housing for the water purifier of the fifth embodiment of the present invention (for example, screwed together), the sealing member 50U is water-sealed between the screwing portion 42U of the cover 40U and the second folding edge 24U of the second transparent housing body 20U, therefore, the cover 40U and the second transparent housing body 20U of the alternative of the housing for the water purifier of the present invention form a seal, so that water is contained inside a sealing chamber defined by the cover 40U, the sealing member 50U and the second transparent housing body 20U to reduce the possibility of leakage of water to be treated and purified water.

Further, the connecting member 60 is connected with the cover 40U of the alternative of the housing for the water purifier according to the fifth embodiment of the present invention, and the connecting portion 63 of the connecting member 60 is pressed against the bottom 142U of the first folding edge 14U of the first transparent housing body 10U, thereby significantly reducing stress generated by the connection of the connecting member 60 and the cover 40U, which is applied to the second body portion 21U and the second opening portion 22U of the second transparent housing body 20U, in order to avoid the second body portion 21U and the second opening portion 22U of the second transparent housing body 20U bearing excessive stress.

It is appreciated that the first folding edge 14U of the first transparent housing body 10U and the second folding edge 24U of the second transparent housing body 20U can also be thickened and widened to further reduce probability of fracture under stress.

Further, considering that the alternative of the housing for the water purifier according to the fifth embodiment of the present invention, as a manufactured product, even though only has a mechanism formed by integrating the second transparent housing body 20U and the first transparent housing body 10U, which can be used for sales purposes (the cover 40U can be allocated by downstream distributors). Therefore, although the present invention exemplarily describes the threaded connection between the connecting member 60 and the cover U of the alternative of the housing for water purifier according to the fifth embodiment of the present invention, the alternative of the housing for the water purifier according to the fifth embodiment of the present invention is not limited to necessarily having the cover 40U and the sealing member 50U.

Correspondingly, the second transparent housing body 20U and the first transparent housing body 10U of the housing of the water purifier according to the fifth embodiment of the present invention are integrated with each other, both the first transparent housing body 10U and the second transparent housing body 20U are made of transparent materials (for example, resin materials), respectively, and the first transparent housing body 10U and the second transparent housing body 20U have different transmittance (different transparent materials tend to have different natural colors and transmittance), so that the first transparent housing body 10U and the second transparent housing body 20U of the housing of the water purifier of the fifth embodiment of the present invention can form an advantageous complementary effect and have a better counteracting effect against water hammer.

In addition, although the first transparent housing body 10U and the second transparent housing body 20U have different transmittance, the first transparent housing body 10U and the second transparent housing body 20U of the housing of the water purifier of the present invention are respectively made of a material having a suitable transmittance, so as to enable a user to observe the use condition of the water treatment material in the water treatment chamber 210U through the first transparent housing body 10U and the second transparent housing body 20U and to determine whether the water treatment material needs to be replaced.

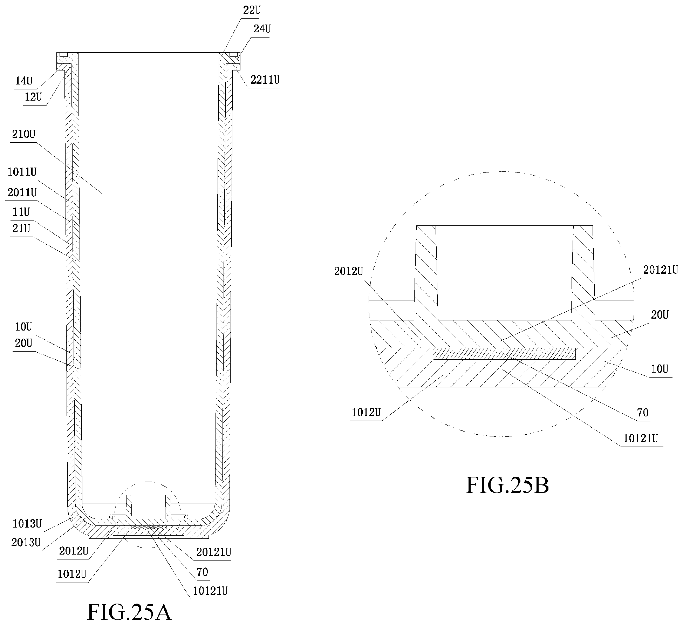

As shown in Figs. 25A and 25B of the accompanying drawings, preferably, the alternative of the housing of the water purifier of the fifth embodiment of the present invention further comprises a sealing sheet 70, wherein the sealing sheet 70 is provided between a second bottom 2012U of the second transparent housing body 20U and a first bottom 1012U of the first transparent housing body 10U, and wherein the sealing sheet 70 is provided to face an injection molded hole forming portion 20121U of the second bottom 2012U of the second transparent housing body 20U, directly, or/and the sealing sheet 70 is provided to face an injection molded hole forming portion 10121U of the first bottom 1012U of the first transparent housing body 10U, directly.

It is appreciated that, the first transparent housing body 10U and the second transparent housing body 20U of the housing of the water purifier according to the fifth embodiment of the present invention have a cylindrical structure, respectively, and during injection molding, a molding resin is to be injected from the bottom, and when the first transparent housing body 10U and the second transparent housing body 20U are being molded, the molding resin is formed in the molding resin injection site at the molding resin forming portion 10121U and the injection hole forming portion 20121U at the injection site of the molding resin may form holes due to air bubbles, resulting in water leakage.

The sealing sheet 70 of the housing of the water purifier of the present invention is provided between the second bottom 2012U of the second transparent housing body 20U and the first bottom 1012U of the first transparent housing body 10U, and wherein the sealing sheet 70 is provided to face the injection molded hole forming portion 20121U of the second bottom 2012U of the second transparent housing body 20U, directly, or/and the sealing sheet 70 is provided to face an injection molded hole forming portion 10121U of the first bottom 1012U of the first transparent housing body 10U, directly, so that when the first transparent housing body 10U and the second transparent housing body 20U form an integrated structure, a seal is formed at the injection molded hole forming portion 20121U of the second bottom 2012U of the second transparent housing body 20U.

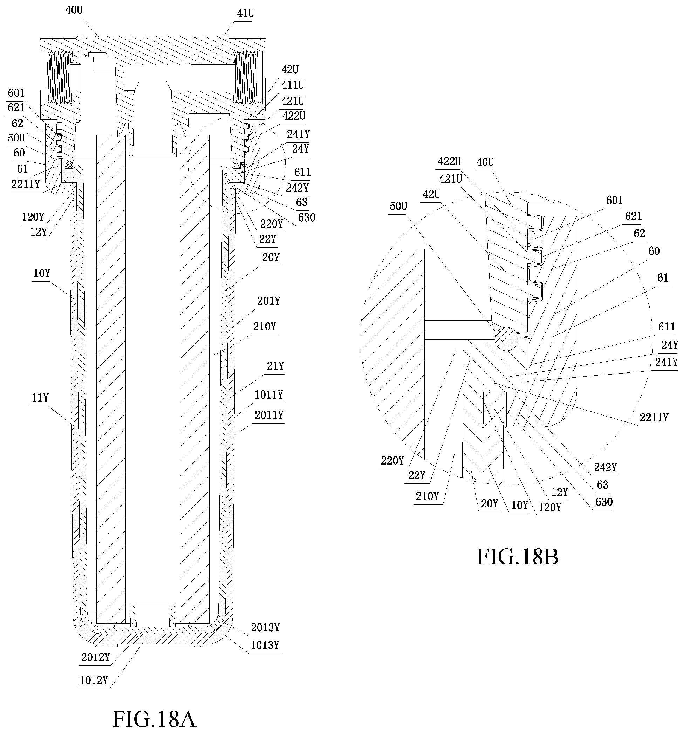

Referring to Figures 18A to 18B of the accompanying drawings, another alternative of the housing of the water purifier according to the fifth embodiment of the present invention is illustrated, which comprises a first transparent housing body 10Y and a second transparent housing body 20Y, wherein the first transparent housing body 10Y at least partially wraps around an outer surface 201Y of the second transparent housing body 20Y, and the first transparent housing body 10Y and the second transparent housing body 20Y are integrated with each other, wherein the second transparent housing body 20Y defines a water treatment chamber 210Y, and the first transparent housing body 10Y and the second transparent housing body 20Y have different transparencies.

It is appreciated that the water treatment chamber 210 defined by the second transparent housing body 20Y of the housing for the water purifier of the fifth embodiment of the present invention is used to accommodate water treatment materials inside the water treatment chamber 210Y for purifying raw water entering the water treatment chamber 210Y.

Therefore, the second transparent housing body 20Y used for the housing of the water purifier of the fifth embodiment of the present invention is susceptible to water hammer caused by changes in water pressure of the raw water (or tap water).

Preferably, the flexibility (or rigidity) of the first transparent housing body 10Y and the second transparent housing body 20Y of the housing of the water purifier according to the fifth embodiment of the present invention are different, so that the first transparent housing body 10Y and the second transparent housing body 20Y can complement each other and provide better support for the raw water contained in the water treatment chamber 210Y as a whole.

Preferably, the flexibility of the first transparent housing body 10Y and the second transparent housing body 20Y of the housing of the water purifier of the fifth embodiment of the present invention are different, can make the housing of the water purifier of the present invention being as a whole to provide better support for the raw water contained in the water treatment chamber 210Y.

More preferably, the second transparent housing body 20Y of the housing of the water purifier of the fifth embodiment of the according present invention has flexibility better than that of the first transparent housing body 10Y.

Most preferably, the second transparent housing body 20Y of the housing of the water purifier according to the fifth embodiment of the present invention has an elongation at break greater than that of the first transparent housing body 10Y, to ensure that the water pressure borne by the second transparent housing body 20Y can be better transmitted to the first transparent housing body 10Y and the complementary effect generated by the first transparent housing body 10Y and the second transparent housing body 20Y can better resist the water hammer by the raw water in the water treatment chamber 210Y.

As shown in Figs.18A to 18B of the accompanying drawings, the first transparent housing body 10Y of the alternative of the housing for the water purifier according to the fifth embodiment of the present invention has a first body portion 11Y and a first opening portion 12Y extended from the first body portion 11Y, the second transparent housing body 20Y has a second body portion 21Y, a second opening portion 22Y extended from the second body portion 21Y and a folding edge 24Y extended from the second opening portion 22Y, wherein the first opening portion 12Y of the first transparent housing body 10Y defines a first opening 120Y and the second opening portion 22Y of the second transparent housing body 20Y defines a second opening 220Y, wherein the first opening 120Y of the first opening portion 12Y of the first transparent housing body 10Y and the second opening 220Y of the second opening portion 22Y of the second transparent housing body 20Y have the same orientation, wherein both the first body portion 11Y and the first opening portion 12Y of the first transparent housing body 10Y wrap around the second body portion 21Y of the second transparent housing body 20Y.

Preferably, the folding edge 24Y of the second transparent housing body 20Y is ring-shaped.

It is worth mentioning that the first transparent housing body 10Y and the second transparent housing body 20Y of the alternative of the housing for the water purifier according to the fifth embodiment of the present invention are integrated with each other, the first transparent housing body 10Y and the second transparent housing body 20Y are made of transparent materials, respectively, wherein the first transparent housing body 10Y and the second transparent housing body 20Y have different transparencies and the second transparent housing body 20Y and the first transparent housing body 10Y have different elongations at break, and especially, when the manufacturing material of the second transparent housing body 20Y has an elongation at break greater than that of the manufacturing material of the first transparent housing body 10Y, the first transparent housing body 10Y and the second transparent housing body 20Y can form complementary support structures to better resist the water hammer formed by the raw water of the water treatment chamber 210Y.

Under the same thickness, the housings made of materials with higher elongation at break (better flexibility) tend to expand under water hammer, while the housings made of materials with lower elongation at break (stronger rigidity) tend to crack under water hammer.

The first transparent housing body 10Y and the second transparent housing body 20Y used in the housing of the water purifier of the present invention are made of materials with different elongation at break, especially when the elongation at break of the manufacturing material of the second transparent housing body 20Y is greater than that of the manufacturing material of the first transparent housing body 10Y, the support performance of the housing used in the water purifier of the present invention can be better than that of the housing used in the water purifier with the same thickness but made of a single material with smaller or larger elongation at break (for example, better water hammer resistance and longer service life).

For example, for the same thickness, the complementary support effect produced by both is better (greater resistance to pressure and longer service life) than the support performance of the housing for the water purifier made solely from the material of manufacture of the first transparent housing body 10Y or the material of manufacture of the second transparent housing body 20Y.

As shown in Figs.18A to 18B of the accompanying drawings, the alternative of the housing for the water purifier according to the fifth embodiment of the present invention further comprises a connecting member 60, wherein the connecting member 60 comprises a sleeve portion 61, a thread forming portion 62 extended upwardly from the sleeve portion 61 and a connecting portion 63 extended downwardly and inwardly from the sleeve portion 61, wherein the thread forming portion 62 forms a first thread 601, the connecting portion 63 forms a sleeve opening 630, and the sleeve opening 630 has an inner diameter smaller than the outer diameter of the folding edge 24Y of the second transparent housing body 20Y, such that the folding edge 24Y of the second transparent housing body 20Y can be sleeved at an inner side wall 611 of the sleeve portion 61, the connecting portion 63 of the connection member 60 can be pressed against an bottom portion 242Y of the folding edge 24Y of the second transparent housing body 20Y.

Preferably, the first thread 601 of the connect member 60 is formed on an inner side wall 621 of the thread forming portion 62 of the connect member 60.

It is appreciated that the connecting portion 63 of the connecting member 60 of the housing for water purifier of the present invention ensures the sleeve connection between the connecting member 60 and the second transparent housing body 20Y.

More preferably, the connected member 60 is cylindrical.

As shown in Figs.18A to 18B of the accompanying drawings, the alternative of the housing for the water purifier according to the fifth embodiment of the present invention further comprises a cover 40U and a sealing member 50U, wherein the sealing member 50U is water-sealed between the cover 40U and a mechanism formed by integrating the first transparent housing body 10Y and the second transparent housing body 20Y.

Preferably, the sealing member 50U is water-sealed between the cover 40U and the folding edge 24Y of the second transparent housing body 20Y.

As shown in Figs.17A to 17D of the accompanying drawings, the cover 40U of the alternative of the housing for the water purifier according to the fifth embodiment of the present invention comprises a cover body 41U and a screwing portion 42U, wherein the screwing portion 42U of the cover 40U is extended from an outer side 411U of the cover body 41U, and the sealing member 50U is provided between the screwing portion 42U of the cover 40U and the folding edge 24Y of the second transparent housing body 20Y, wherein the screwing portion 42U of the cover 40U forms a second thread 421U, wherein the second thread 421U is provided to be suitable to be screwed with the first thread 601 of the connecting member 60, so that the cover 40U can be screwed with the connecting member 60 and the sealing member 50U can be pressed against the folding edge 24Y of the second transparent housing body 20Y and water-sealed between the screwing portion 42U of the cover 40U and the folding edge 24Y of the second transparent housing body 20Y.

Preferably, the sealing member 50U is ring-shaped and the sealing member 50U has a width no greater than that of the folding edge 24Y of the second transparent housing body 20Y.

As shown in Figs.18A to 18B of the accompanying drawings, the first thread 601 of the connecting member 60 of the alternative of the housing for the water purifier according to the fifth embodiment of the present invention is an internal thread formed on the inner side wall 621 of the thread forming portion 62 of the connecting member 60, and the second thread 421U of the screwing portion 42U of the cover 40U is an external thread formed on an outer side wall 422U of the screwing portion 42U of the cover 40U, wherein the second thread 421U is provided to be suitable to be screwed together with the first thread 601 of the connecting member 60, so that the sealing member 50U is water-sealed between the cover 40U and the folding edge 24Y of the second transparent housing body 20Y.

Correspondingly, when the connecting member 60 is connected with the cover 40U of the alternative of the housing for the water purifier of the fifth embodiment of the present invention (for example, screwed together), the sealing member 50U is water-sealed between the screwing portion 42U of the cover 40U and the folding edge 24Y of the second transparent housing body 20Y, therefore, the cover 40U and the second transparent housing body 20Y of the alternative of the housing for the water purifier of the present invention form a seal, so that water is contained inside a sealing chamber defined by the cover 40U, the sealing member 50U, the folding edge 24Y of the second transparent housing body 20Y and the second transparent housing body 20Y to reduce the possibility of leakage of water to be treated and purified water.

Further, the connecting member 60 is connected with the cover 40U of the alternative of the housing for the water purifier according to the fifth embodiment of the present invention, and the connecting portion 63 of the connecting member 60 is pressed against the bottom 242Y of the folding edge 24Y of the second transparent housing body 20Y, thereby significantly reducing a stress generated by the connection of the connecting member 60 and the cover 40U, which is applied to the second body portion 21Y and the second opening portion 22Y of the second transparent housing body 20Y, in order to avoid the second body portion 21Y and the second opening portion 22Y of the second transparent housing body 20Y bearing excessive stress.

**It** is appreciated that the folding edge 24Y of the second transparent housing body 20Y can also be thickened and widened to further reduce probability of fracture under stress.

Further, considering that the alternative of the housing for the water purifier according to the fifth embodiment of the present invention, as a manufactured product, even though only has a mechanism formed by integrating the second transparent housing body 20Y and the first transparent housing body 10Y, which can be used for sales purposes (the cover 40U can be allocated by downstream distributors). Therefore, although the present invention exemplarily describes the threaded connection between the connecting member 60 and the cover 40U of the alternative of the housing for water purifier according to the fifth embodiment of the present invention, the alternative of the housing for the water purifier according to the fifth embodiment of the present invention is not limited to necessarily having the cover 40U and the sealing member 50U.

Correspondingly, the second transparent housing body 20Y and the first transparent housing body 10Y of the alternative of the housing of the water purifier according to the fifth embodiment of the present invention are integrated with each other, both the first transparent housing body 10Y and the second transparent housing body 20Y are made of transparent materials (for example, resin materials), respectively, and the first transparent housing body 10Y and the second transparent housing body 20Y have different transmittance (different transparent materials tend to have different natural colors and transmittance), so that the first transparent housing body 10Y and the second transparent housing body 20YU of the alternative of the housing of the water purifier of the fifth embodiment of the present invention can form an advantageous complementary effect and have a better counteracting effect against water hammer.

Under the same thickness, the housings made of materials with higher elongation at break (better flexibility) tend to expand under water hammer, while the housings made of materials with lower elongation at break (stronger rigidity) tend to crack under water hammer.

The first transparent housing body 10Y and the second transparent housing body 20Y used in the housing of the water purifier of the present invention are made of materials with different elongation at break, especially when the elongation at break of the manufacturing material of the second transparent housing body 20Y is greater than that of the manufacturing material of the first transparent housing body 10Y, the support performance of the housing used in the water purifier of the present invention can be better than that of the housing used in the water purifier with the same thickness but made of a single material with smaller or larger elongation at break (for example, better water hammer resistance and longer service life).

In addition, although the first transparent housing body 10Y and the second transparent housing body 20Y have different transmittance, the first transparent housing body 10Y and the second transparent housing body 20Y of the alternative of the housing of the water purifier of the present invention are respectively made of a material having a suitable transmittance, so as to enable a user to observe the use condition of the water treatment material in the water treatment chamber 210Y through the first transparent housing body 10Y and the second transparent housing body 20Y and to determine whether the water treatment material needs to be replaced.

**It** is worth mentioning that, in order to reduce the manufacturing process difficulty of the alternative of the housing for the water purifier according to the fifth embodiment of the present invention while ensuring the safety of the alternative of the housing for the water purifier according to the fifth embodiment of the present invention, the thickness of the first transparent housing body 10V (or the first transparent housing body 10X or the first transparent housing body 10U or the first transparent housing body 10Y) of the alternative of the housing for water purifier according to the fifth embodiment of the present invention is not less than 2.5mm, the thickness of the second transparent housing body 20V (or the second transparent housing body 20X or the second transparent housing body 20U or the second transparent housing body 20Y) is not less than 2.5mm, and the thickness ratio of the first transparent housing body 10V (or the first transparent housing body 10X or the first transparent housing body 10U or the first transparent housing body 10Y) to the second transparent housing body 20V (or the second transparent housing body 20X or the second transparent housing body 20U or the second transparent housing body 20Y) is 1:3-3:1.

Preferably, the thickness ratio of the first transparent housing body 10V (or the first transparent housing body 10X or the first transparent housing body 10U or the first transparent housing body 10Y) to the second transparent housing body 20V (or the second transparent housing body 20X or the second transparent housing body 20U or the second transparent housing body 20Y) of the alternative of the housing for the water purifier according to the fifth embodiment of the present invention is 1:2-2:1.

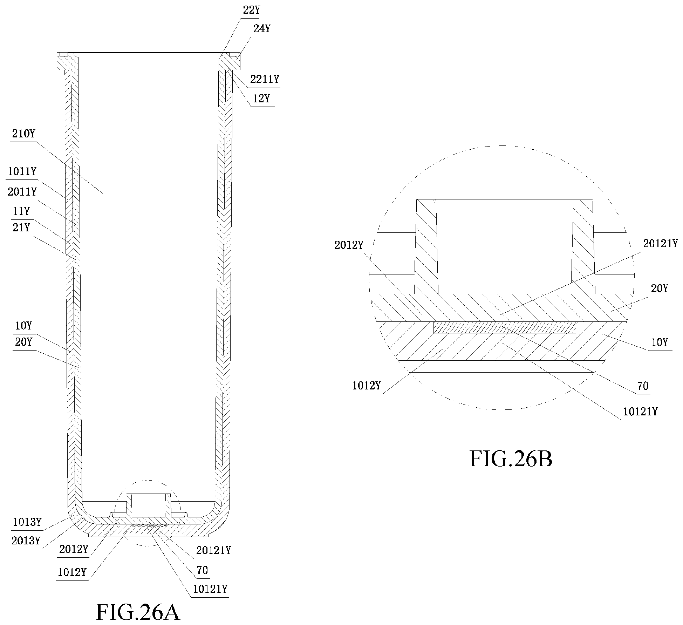

As shown in Figs. 26A and 26B of the accompanying drawings, preferably, the alternative of the housing of the water purifier of the fifth embodiment of the present invention further comprises a sealing sheet 70, wherein the sealing sheet 70 is provided between a second bottom 2012Y of the second transparent housing body 20Y and a first bottom 1012Y of the first transparent housing body 10Y, and wherein the sealing sheet 70 is provided to face an injection molded hole forming portion 20121Y of the second bottom 2012Y of the second transparent housing body 20Y, directly, or/and the sealing sheet 70 is provided to face an injection molded hole forming portion 10121Y of the first bottom 1012Y of the first transparent housing body 10Y, directly.

**It** is appreciated that, the first transparent housing body 10Y and the second transparent housing body 20Y of the housing of the water purifier according to the fifth embodiment of the present invention have a cylindrical structure, respectively, and during injection molding, a molding resin is to be injected from the bottom, and when the first transparent housing body 10Y and the second transparent housing body 20Y are being molded, the molding resin is formed in the molding resin injection site at the molding resin forming portion 10121Y and the injection hole forming portion 20121Y at the injection site of the molding resin may form holes due to air bubbles, resulting in water leakage.

The sealing sheet 70 of the housing of the water purifier of the present invention is provided between the second bottom 2012Y of the second transparent housing body 20Y and the first bottom 1012Y of the first transparent housing body 10Y, and wherein the sealing sheet 70 is provided to face the injection molded hole forming portion 20121Y of the second bottom 2012Y of the second transparent housing body 20Y, directly, or/and the sealing sheet 70 is provided to face an injection molded hole forming portion 10121Y of the first bottom 1012Y of the first transparent housing body 10Y, directly, so that when the first transparent housing body 10Y and the second transparent housing body 20Y form an integrated structure, a seal is formed at the injection molded hole forming portion 20121Y of the second bottom 2012Y of the second transparent housing body 20Y.

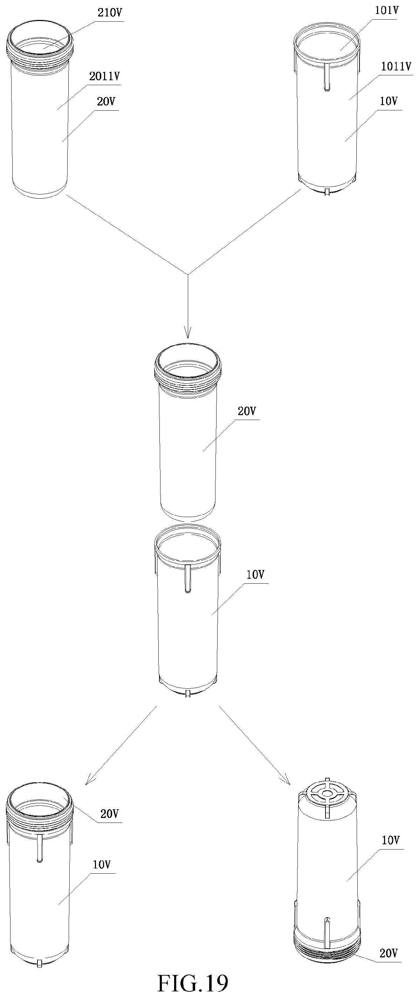

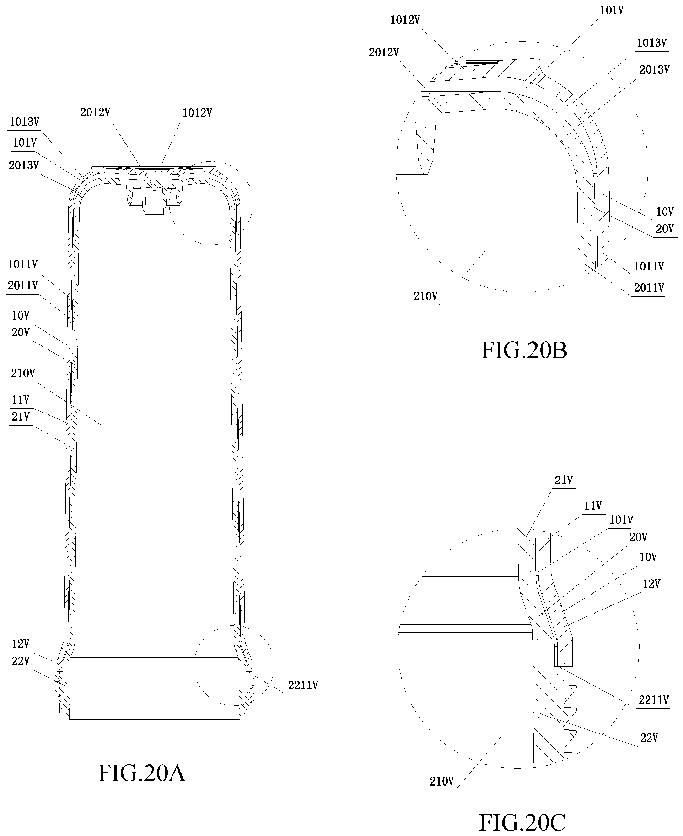

Referring to Figs.19 to 21 of the accompanying drawings, a method for manufacturing a housing for a water purifier is illustrated, which is suitable for manufacturing the housing for the water purifier in accordance with the fifth embodiment of the present invention.

Exemplarily, the method for manufacturing the housing for the water purifier of the present invention is described below in connection with the second transparent housing body 20V and the first transparent housing body 10V of the housing for the water purifier according to the fifth embodiment of the present invention.

The method for manufacturing the housing of the water purifier of the present invention comprises the steps of: (a) manufacturing a second transparent housing body 20V by a thermal injection molding process in a mold and opening the mold to remove the molded second transparent housing body 20V after the second transparent housing body 20V is molded, and then cooling the second transparent housing body 20V to a first preset temperature; (b) manufacturing a first transparent housing body 10V by a thermal injection molding process in a mold and opening the mold to take out the molded first transparent housing body 10V after the first transparent housing body 10V is molded, and then cooling the first transparent housing body 10V to a second preset temperature; (c) placing the molded second transparent housing body 20V into a cavity 101V of the molded first transparent housing body 10V; (d) making a first predetermined distance be defined between a second cylinder 2011V of the second transparent housing body 20V having a first preset temperature and a first cylinder 1011V of the first transparent housing body 10V having a second predetermined temperature, and making a second predetermined distance be defined between a second bottom 2012V of that second transparent housing body 20V having a first predetermined temperature and a first bottom 1012V of the first transparent housing body 10V having a second predetermined temperature, so that the first transparent housing body 10V and the second transparent housing body 20V can form a nested structure; and (e) cooling the nested structure to room temperature so that the first transparent housing body 10V can wrap around the second transparent housing body 20V.

Preferably, the second predetermined temperature is higher than the first predetermined temperature.

More preferably, the second predetermined temperature is not lower than 60 degrees Celsius (60°C) and not higher than 150 degrees Celsius (150°C), and the first predetermined temperature is 10-35 degrees Celsius (10-35°C) at room temperature.

It is appreciated that the chamber 101V of the first transparent housing body 10V of having a second predetermined temperature has an inner diameter slightly larger than the outer diameter of the second transparent housing body 20V having the first predetermined temperature, wherein the second transparent housing body 20V defines a water treatment chamber 210V.

Preferably, a first connecting portion 1013V of the first transparent housing body 10V of the housing of the water purifier of the present invention is integrally and arcuately extended between the first cylinder 1011V and the first bottom 1012V of the first transparent housing body 10V, and the second connecting portion 2013V of the second transparent housing body 20V for the housing of the water purifier of the present invention is integrally and arcuately extended between the second cylinder 2011V and the second bottom 2012V of the second transparent housing body 20V.

It is appreciated that the first connecting portion 1013V of the first transparent housing body 10V of the housing for the water purifier of the present invention is integrally and arcuately extended between the first cylinder 1011V and the first bottom 1012V and the cylinder structure of the first cylinder 1011V of the first transparent housing body 10V can ensure that the first transparent housing body 10V for the housing of the water purifier of the present invention to be shrunk inwardly when the temperature decreases.

Preferably, the first bottom 1012V of the first transparent housing body 10V of the housing of the water purifier of the present invention has a thickness greater than that of the first cylinder 1011V of the first transparent housing body 10V, and the second bottom 2012V of the second transparent housing body 20V has a thickness greater than that of the second cylinder 2011V of the second transparent housing body 20V, and the second predetermined distance is greater than the first predetermined distance.

More preferably, according to the present invention, the thickness of the first cylinder 1011V of the first transparent housing body 10V, the thickness of the first bottom 1012V of the first transparent housing body 10V, the thickness of the inner diameter and the thickness of the outer diameter of the first cylinder 1011V of the first transparent housing body 10V, the height of the first transparent housing body 10V, the first predetermined distance are 0.15-2mm and the second predetermined distance is 0.8-10mm, respectively, which ensure that the first transparent housing body 10V for the housing of the water purifier of the present invention can tightly wrap around an outer surface of the second transparent housing body 20V after being cooled shrunk.

Correspondingly, the first transparent housing body 10V of the housing of the water purifier of the present invention comprises the first connecting portion 1013V, the first cylinder 1011V and the first bottom 1012V, and the second transparent housing body 20V for the housing of the water purifier of the present invention comprises the second connecting portion 2013V, the second cylinder 2011V and the second bottom 2012V, and the first connecting portion 1013V, the first cylinder 1011V and the first bottom 1012V are integrated with each other, the second connecting portion 2013V, the second cylinder 2011V and the second bottom 2012V are integrated with each other.

Correspondingly, the first connecting portion 1013V, the first cylinder 1011V, and the first bottom 1012V of the first transparent housing body 10V for the housing of the water purifier of the present invention form the first body portion 11V of the first transparent housing body 10V, the second transparent housing body 20V for the housing of the water purifier of the present invention comprises the second connecting portion 2013V, the second cylinder 2011V and the second bottom 2012V, which form the second body portion 21V of the second transparent housing body 20V.

It is appreciated that the shape and size of the outer wall of the second body 21V of the second transparent housing body 20V having the first predetermined temperature, which is used for the housing of the water purifier of the present invention, is designed to match the shape and size of the inner wall of the first body portion 11V of the first transparent housing body 10V having the second predetermined temperature, which is used for the housing of the water purifier of the present invention, to ensure that the inner wall of the cooled first transparent housing body 10V for the housing of the water purifier of the present invention can be closely attached to the outer wall of the second body portion 21V of the second transparent housing body 20V for the housing of the water purifier of the present invention.

As shown in Figures 19 to 21 of the accompanying drawings, for example, the first transparent housing body 10V of the housing for the water purifier according to the fifth embodiment of the present invention further has a first opening portion 12V extended outwardly from the first body portion 11V, and the second transparent housing body 20V further has a second opening portion 22V extended outwardly from the second body 21V, wherein the second opening portion 22V of the second transparent housing body 20V has at least one of support protrusions 2211V, so that when the nested structure formed by the first transparent housing body 10V and the second transparent housing body 20V is vertically placed and when the second opening portion 22V of the second transparent housing body 20V and the first opening portion 12V of the first transparent housing body 10V are placed to facing downwards, the first transparent housing body 10V can be supported by the second transparent housing body 20V, so that the distance between the second cylinder 2011V of the second transparent housing body 20V having the first predetermined temperature and the first cylinder 1011V of the first transparent housing body 10V having the second predetermined temperature is maintained at the first predetermined distance, and the distance between the second bottom 2012V of the second transparent housing body 20V having the first predetermined temperature and the first bottom 1012V of the first transparent housing body 10V having the second predetermined temperature is maintained at the second predetermined distance.

For example, as shown in Figures 15A to 15D of the accompanying drawings, the second opening portion 22V of the second transparent housing body 20V of the housing of the water purifier of the present invention is thickened, so that the first opening portion 12V of the first transparent housing body 10V can be supported on the second opening portion 22V of the second transparent housing body 20V; as shown in Figures 16A to 16D, the second opening portion 22X of the second transparent housing body 20X of the housing of the water purifier of the present invention is thickened, so that the second opening portion 22X of the second transparent housing body 20X of the housing of the water purifier of the present invention is thickened, so that the first opening portion 12X of the first transparent housing body 10V can be supported on the second opening portion 22X of the second transparent housing body 20X; as shown in Figures 17A to 17D of the accompanying drawings, the first folded edge 14U of the first transparent housing body 10U of the housing body of the water purifier of the present invention is at least partially overlapped with the second folded edge 24U of the second transparent housing body 20U, so that the first opening portion 12U and the first folded edge 14U of the first transparent housing body 10U can be supported on the second folded edge 24U of the second transparent housing body 20U; as shown in Figs.18A and 8B of the accompanying drawings, the second transparent housing body 20Y of the housing of the water purifier of the present invention has the folded edge 24Y, so that the first opening portion 12Y of the first transparent housing body 10Y can be supported on the folded edge 24Y of the second transparent housing body 20Y.

For example, as shown in Figs.15A to 15D of the accompanying drawings, the second opening portion 22V of the second transparent housing body 20V of the housing of the water purifier of the present invention forms the support protrusion 2211V; as shown in Figures 16A to 16D, the second opening portion 22X of the second transparent housing body 20X of the housing of the water purifier of the present invention forms the support protrusion 2211X; as shown in Figures 17A to 17D of the accompanying drawings, the second folded edge 24U of the second transparent housing body 20U of the housing body of the water purifier of the present invention forms the support protrusion 2211U; as shown in Figs.18A and 8B of the accompanying drawings, the folded edge 24Y of the second transparent housing body 20Y of the housing of the water purifier of the present invention forms the support protrusion 2211Y.

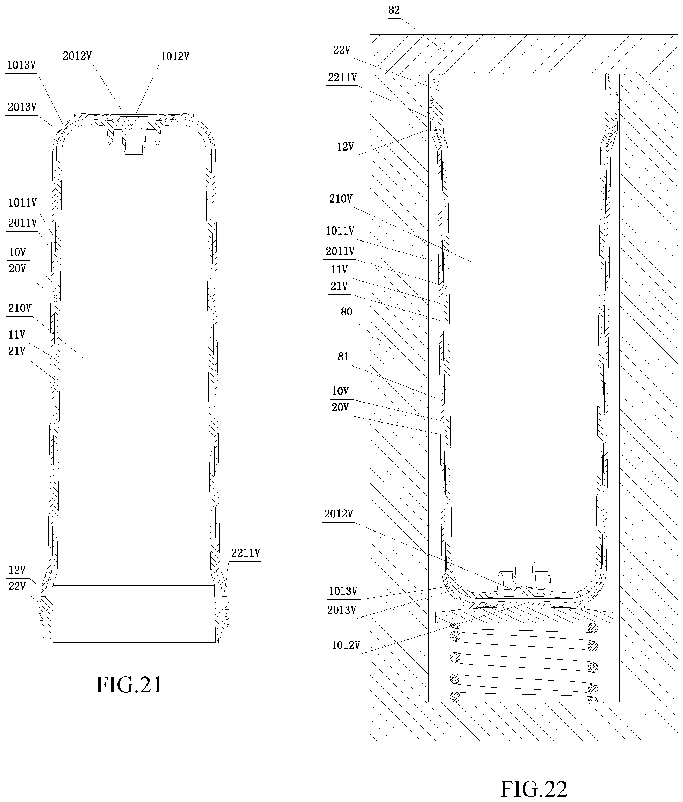

As shown in Fig.22 of the accompanying drawings, exemplarily, the nested mechanism defined by the first transparent housing body 10V and the second transparent housing body 20V of the housing for the water purifier according to the fifth embodiment of the present invention can be disposed inside a molding cavity 81 of a mold 80.

At this time, an elastic support structure is provided between the mold 80 and the first bottom 1012V of the first transparent housing body 10V, and a limiting member 82 is provided at a top of the mold 80, wherein the limiting member 82 of the mold 80 is suitable for acting on the second opening portion 22V of the second transparent housing body 20V for the housing of the water purifier of the present invention, to ensure that the second transparent housing body 20V for the housing of the water purifier of the present invention is positioned.

Accordingly, the first transparent housing body 10V of the housing for the water purifier according to the fifth embodiment of the present invention is pushed against the second transparent housing body 20V under the action of the elastic support structure, so that the distance between the second cylinder 2011V of the second transparent housing body 20V having the first predetermined temperature and the first cylinder 1011V of the first transparent housing body 10V having the second predetermined temperature can be maintained at the first predetermined distance, and the distance between the second bottom 2012V of the second transparent housing body 20V having the first predetermined temperature and the first bottom 1012V of the first transparent housing body 10V having the second predetermined temperature can be maintained at the second predetermined distance.

It is appreciated that, as shown in Fig.22 of the accompanying drawings, when the nested mechanism defined by the first transparent housing body 10V and the second transparent housing body 20V of the housing for the water purifier according to the fifth embodiment of the present invention is disposed inside a molding cavity 81 of a mold 80 to be molded, the mold 80 can be placed vertically or horizontally.

Correspondingly, the elastic support structure applies a first axial thrust to the first bottom 1012V of the first transparent housing body 10V having the second preset temperature, and the limiting member 82 of the mold 80 applies a second axial thrust to the second opening portion 22V of the second transparent housing body 20V having the first preset temperature, and the direction of the first axial thrust is opposite to that of the second axial thrust, so that the first transparent housing body 10V is supported on the second transparent housing body 20V.

Further, the step (c) of the method for manufacturing a housing for a water purifier according to the present invention comprises the following steps:

(c1) arranging the sealing sheet 70 at an appropriate position of the outer side of the second bottom 2012V of the second transparent housing body 20V; and (c2) placing the molded second transparent housing body 20V into the cavity 101V of the first transparent housing body 10V.

Alternatively, the step (c) of the method for manufacturing a housing for a water purifier according to the present invention comprises the following steps:

(c1) arranging the sealing sheet 70 at an appropriate position of the inner side of the first bottom 1012V of the first transparent housing body 10V; and (c2) placing the molded second transparent housing body 20V into the cavity 101V of the first transparent housing body 10V.

It is appreciated that, when arranging the sealing sheet 70 at an appropriate position of the outer side of the second bottom 2012V of the second transparent housing body 20V or arranging the sealing sheet 70 at an appropriate position of the inner side of the first bottom 1012V of the first transparent housing body 10V to make the first transparent housing body 10V and the second transparent housing body 20V form a nested structure, the sealing sheet 70 can face an injection molded hole forming portion 20121V of the second bottom 2012V of the second transparent housing body 20V, directly, or/and the sealing sheet 70 can face an injection molded hole forming portion 10121V of the first bottom 1012V of the first transparent housing body 10V, directly.

It is appreciated that, the first transparent housing body 10V and the second transparent housing body 20V of the housing of the water purifier according to the fifth embodiment of the present invention have a cylindrical structure, respectively, and during injection molding, a molding resin is to be injected from the bottom, and when the first transparent housing body 10V and the second transparent housing body 20V are being molded, the molding resin is formed in the molding resin injection site at the molding resin forming portion 10121V and the injection hole forming portion 20121V at the injection site of the molding resin may form holes due to air bubbles, resulting in water leakage.

When arranging the sealing sheet 70 at an appropriate position of the outer side of the second bottom 2012V of the second transparent housing body 20V or arranging the sealing sheet 70 at an appropriate position of the inner side of the first bottom 1012V of the first transparent housing body 10V to make the first transparent housing body 10V and the second transparent housing body 20V form a nested structure, the sealing sheet 70 can face an injection molded hole forming portion 20121V of the second bottom 2012V of the second transparent housing body 20V, directly, or/and the sealing sheet 70 can face an injection molded hole forming portion 10121V of the first bottom 1012V of the first transparent housing body 10V, directly, so that when the first transparent housing body 10V and the second transparent housing body 20V form an integrated structure, a seal is formed at the injection molded hole forming portion 20121V of the second bottom 2012V of the second transparent housing body 20V.

The first transparent housing body 10V (or the first transparent housing body 10X or the first transparent housing body 10U or the first transparent housing body 10Y) of the housing for the water purifier of the embodiments of the present invention is preferably made of AS (acrylonitrile styrene copolymer) or transparent ABS (acrylonitrile butadiene styrene copolymer), the second transparent housing body 20V (or the second transparent housing body 20X or the second transparent housing body 20U or the second transparent housing body 20Y) is preferably made of PET (polyethylene terephthalate), PETG (polyethylene terephthalate 1,4-cyclohexanedimethanol ester), PC (polycarbonate), PCTG (1,4-Cyclohexylene Dimethylene Terephthalate Glycol), transparent PA (polyamide).

More preferably, the first transparent housing body 10V (the first transparent housing body 10X, the first transparent housing body 10U, or the first transparent housing body 10Y) is made of PET (polyethylene terephthalate), PETG (polyethylene terephthalate 1,4-cyclohexanedimethanol ester), PCTG (polyethylene terephthalate 1,4-cyclohexanedimethanol ester), or transparent PA (polyamide), and the second transparent housing body 20V (the second transparent housing body 20X, the second transparent housing body 20U, or the second transparent housing body 20Y) is made of PC (polycarbonate).

It is worth mentioning that the terms of first, and/or second herein are only used to name different components (or elements) of the present invention and distinguish between different components, elements and structures of the present invention, they themselves have no meaning of order or number.

Those skilled in the art should understand that the embodiments of the present invention shown in the above description and the accompanying drawings are only examples and do not limit the present invention.

The objects of the present invention have been completely and effectively realized.

The function and structural principle of the present invention have been shown and explained in the above embodiments. Without departing from the principle, the embodiments of the present invention can be deformed or modified.

## Claims

1. A housing for a water purifier, comprising:
a first transparent housing body; and
a second transparent housing body, wherein both the longitudinal cross-sections of the first transparent housing body and the second transparent housing body are U-shaped, wherein the first transparent housing body at least partially wraps around an outer surface of the second transparent housing body, and the first transparent housing body and the second transparent housing body are integrated with each other, wherein the second transparent housing body forms a water treatment chamber, wherein the first transparent housing body and the second transparent housing body have different translucencies.

2. The housing for a water purifier, as recited in claim 1, wherein the first transparent housing body comprises a first body portion and a first opening portion, and the second transparent housing body comprises a second body portion and a second opening portion, wherein the first opening portion of the first transparent housing body is extended from the first body portion , and the second opening portion of the second transparent housing body is extended from the second body portion, wherein the first opening portion of the first transparent housing body forms a first opening, and the second opening portion of the second transparent housing body forms a second opening, wherein the first opening of the first opening portion of the first transparent housing body and the second opening of the second opening portion of the second transparent housing body have the same orientation, wherein the first body portion of the first transparent housing body wraps around the second body portion of the second transparent housing body, and the second opening portion of the second transparent housing body is partially wrapped by the first opening portion of the first transparent housing body.

3. The housing for a water purifier, as recited in claim 2, wherein the second opening of the second transparent housing body further comprises a head portion and a neck portion, wherein the neck portion of the second opening is extended outwardly from the second body portion, the head portion of the second opening portion is extended outwardly from the neck portion and protrudes outwardly through the first opening of the first transparent housing body, wherein the first opening portion of the first transparent housing body wraps around the neck portion of the second opening portion of the second transparent housing body.

4. The housing for a water purifier, as recited in claim 3, wherein further comprises a cover and a sealing member, wherein the sealing member is water-sealed between the cover and a mechanism formed by integrating the first transparent housing body with the second transparent housing body.

5. The housing for a water purifier, as recited in claim 4, wherein the cover comprises a cover body and a screwing portion, wherein the screwing portion of the cover is extended from a peripheral edge of an inner side of the cover body, and the sealing member is provided on the inner side of the cover body, wherein the second opening portion of the second transparent housing body further has a first thread, the sealing member is surrounded by the screwing portion of the cover, and the screwing portion forms a second thread, wherein the second thread is provided to be suitable to be screwed with the first thread of the second opening portion of the second transparent housing body together, so that the cover is capable of being screwed onto the second opening portion of the second transparent housing body and the sealing member is capable of being pressed against the second opening portion of the second transparent housing body and water-sealed between the cover and the second opening portion of the second transparent housing body.

6. The housing for a water purifier, as recited in claim 5, wherein the first thread is an external thread formed on an outer side wall of the second opening portion of the second transparent housing body , and the second thread of the screwing portion of the cover is an internal thread formed on the inner side wall of the screwing portion of the cover, wherein the second thread1 is provided to be suitable to be screwed with the first thread of the second opening portion of the second transparent housing body together, so that the sealing member is capable of being water-sealed between the cover and the second opening portion of the second transparent housing body.

7. The housing for a water purifier, as recited in claim 6, wherein the second opening portion of the second transparent housing body forms a top end, a bottom end and a thread forming portion extended between the top end and the bottom end, wherein the top end of the second opening portion of the second transparent housing body forms the second opening, and the bottom end of the second opening portion of the second transparent housing body is wrapped around by the first opening portion of the first transparent housing body, the first thread of the second opening portion of the second transparent housing body is formed by the thread forming portion of the second opening portion of the second transparent housing body.

8. The housing for a water purifier, as recited in claim 1, wherein the first transparent housing body comprises a first body portion and a first opening portion, and the second transparent housing body comprises a second body portion and a second opening portion, wherein the first opening portion of the first transparent housing body is extended from the first body portion , and the second opening portion of the second transparent housing body is extended from the second body portion, wherein the first opening portion of the first transparent housing body forms a first opening, and the second opening portion of the second transparent housing body forms a second opening, wherein the first opening of the first opening portion of the first transparent housing body and the second opening of the second opening portion of the second transparent housing body have the same orientation, wherein the first body portion of the first transparent housing body integrally wraps around the second body portion of the second transparent housing body, and the second opening portion of the second transparent housing body is integrally wrapped around by the first opening portion of the first transparent housing body.

9. The housing for a water purifier, as recited in claim 8, wherein further comprises a cover and a sealing member, wherein the sealing member is water-sealed between the cover and a mechanism formed by integrating the first transparent housing body with the second transparent housing body.

10. The housing for a water purifier, as recited in claim 9, wherein the sealing member is water-sealed between the cover and the second body portion of the second transparent housing body.

11. The housing for a water purifier, as recited in claim 9, wherein the cover comprises a cover body and a screwing portion, wherein the screwing portion of the cover is extended from an outer side of the cover body, and the sealing member is provided between on the screwing portion of the cover body and the second opening portion of the second transparent housing body, wherein the second opening portion of the second transparent housing body further has a first thread, the screwing portion of the cover forms a second thread, wherein the second thread is provided to be suitable to be screwed with the first thread of the second opening portion of the second transparent housing body together, so that the cover is capable of being screwed onto the second opening portion of the second transparent housing body and the sealing member is capable of being pressed against the second opening portion of the second transparent housing body and water-sealed between the screwing portion of the cover and the second opening portion of the second transparent housing body.

12. The housing for a water purifier, as recited in claim 11, wherein the first thread is an internal thread formed on an inner side wall of the second opening portion of the second transparent housing body, and the second thread of the screwing portion of the cover is an external thread formed on the outer side wall of the screwing portion of the cover, wherein the second thread1 is provided to be suitable to be screwed with the first thread of the second opening portion of the second transparent housing body together, so that the sealing member is capable of being water-sealed between the cover and the second opening portion of the second transparent housing body.

13. The housing for a water purifier, as recited in claim 12, wherein the second opening portion of the second transparent housing body forms a top end, a bottom end and a thread forming portion extended between the top end and the bottom end, wherein the thread forming portion of the second opening portion of the second transparent housing body is inwardly and upwardly extended from the bottom end, the top end of the second opening portion of the second transparent housing body forms the second opening, the first thread of the second opening portion of the second transparent housing body is formed by the thread forming portion of the second opening portion of the second transparent housing body.

14. The housing for a water purifier, as recited in anyone of claims 3-7, wherein the head portion of the second opening portion of the second transparent housing body is thickened.

15. The housing for a water purifier, as recited in anyone of claims 8-13, wherein the second opening portion of the second transparent housing body is thickened.

16. The housing for a water purifier, as recited in claim 1, the first transparent housing body has a first body portion, a first opening portion extended from the first body portion and a first folding edge extended from the first opening portion, the second transparent housing body has a second body portion, a second opening portion extended from the second body portion and a second folding edge extended from the second opening portion, wherein the first opening portion of the first transparent housing body forms a first opening and the second opening portion of the second transparent housing body forms a second opening, wherein the first opening of the first opening portion of the first transparent housing body and the second opening of the second opening portion of the second transparent housing body have the same orientation, wherein both the first body portion and the first opening portion of the first transparent housing body wrap around the second body portion of the second transparent housing body, the first folding edge of the first transparent housing body and the second folding edge of the second transparent housing body are integrated with each other.

17. The housing for a water purifier, as recited in claim 16, further comprises a connecting member, wherein the connecting member comprises a sleeve portion, a thread forming portion extended upwardly from the sleeve portion and a connecting portion extended downwardly and inwardly from the sleeve portion, wherein the thread forming portion forms a first thread, the connecting portion forms a sleeve opening, and the sleeve opening has an inner diameter smaller than an outer diameter of the first folding edge of the first transparent housing body and the second folding edge of the second transparent housing body, such that the first folding edge of the first transparent housing body and the second folding edge of the second transparent housing body can be sleeved at an inner side wall of the sleeve portion, the connecting portion of the connection member can be pressed against an bottom portion of the first folding edge of the first transparent housing body.

18. The housing for a water purifier, as recited in claim 17, wherein further comprises a cover and a sealing member, wherein the sealing member is water-sealed between the cover and a mechanism formed by integrating the first transparent housing body with the second transparent housing body.

19. The housing for a water purifier, as recited in claim 18, wherein the cover comprises a cover body and a screwing portion, wherein the screwing portion of the cover is extended from an outer side of the cover body, and the sealing member is provided between on the screwing portion of the cover body and the second folding edge of the second transparent housing body, the screwing portion of the cover forms a second thread, wherein the second thread is provided to be suitable to be screwed with the first thread of the connecting member together, so that the cover is capable of being screwed with the connecting member and making the sealing member be pressed against the second folding edge of the second transparent housing body and water-sealed between the screwing portion of the cover and the second folding edge of the second transparent housing body.

20. The housing for a water purifier, as recited in claim 19, wherein the first thread of the connecting member is an internal thread formed on an inner side wall of the thread forming portion of the second transparent housing body, and the second thread of the screwing portion of the cover is an external thread formed on the outer side wall of the screwing portion of the cover, wherein the second thread is suitable to be screwed with the first thread of the connecting member together, so that the sealing member is capable of being water-sealed between the cover and the second folding edge of the second transparent housing body.

21. The housing for a water purifier, as recited in claim 1, the first transparent housing body has a first body portion and a first opening portion extended from the first body portion, the second transparent housing body has a second body portion, a second opening portion extended from the second body portion and a folding edge extended from the second opening portion, wherein the first opening portion of the first transparent housing body forms a first opening and the second opening portion of the second transparent housing body forms a second opening, wherein the first opening of the first opening portion of the first transparent housing body and the second opening of the second opening portion of the second transparent housing body have the same orientation, wherein both the first body portion and the first opening portion of the first transparent housing body wrap around the second body portion of the second transparent housing body.

22. The housing for a water purifier, as recited in claim 21, further comprises a connecting member, wherein the connecting member comprises a sleeve portion, a thread forming portion extended upwardly from the sleeve portion and a connecting portion extended downwardly and inwardly from the sleeve portion, wherein the thread forming portion forms a first thread, the connecting portion forms a sleeve opening, and the sleeve opening has an inner diameter smaller than an outer diameter of the folding edge of the second transparent housing body, such that the second folding edge of the second transparent housing body is capable of being sleeved at an inner side wall of the sleeve portion, the connecting portion of the connection member is capable of being pressed against an bottom portion of the folding edge of the second transparent housing body.

23. The housing for a water purifier, as recited in claim 22, wherein further comprises a cover and a sealing member, wherein the sealing member is water-sealed between the cover and a mechanism formed by integrating the first transparent housing body with the second transparent housing body.

24. The housing for a water purifier, as recited in claim 23, wherein the cover comprises a cover body and a screwing portion, wherein the screwing portion of the cover is extended from an outer side of the cover body, and the sealing member is provided between on the screwing portion of the cover body and the folding edge of the second transparent housing body, the screwing portion of the cover forms a second thread, wherein the second thread is provided to be suitable to be screwed with the first thread of the connecting member together, so that the cover is capable of being screwed with the connecting member and making the sealing member be pressed against the folding edge of the second transparent housing body and water-sealed between the screwing portion of the cover and the folding edge of the second transparent housing body.

25. The housing for a water purifier, as recited in claim 24, wherein the first thread of the connecting member is an internal thread formed on an inner side wall of the thread forming portion of the second transparent housing body, and the second thread of the screwing portion of the cover is an external thread formed on the outer side wall of the screwing portion of the cover, wherein the second thread is suitable to be screwed with the first thread of the connecting member together, so that the sealing member is capable of being water-sealed between the cover and the folding edge of the second transparent housing body.

26. The housing for a water purifier, as recited in anyone of claims 1-13 and 16-25, wherein each of the first transparent housing body and the second transparent housing body has a thickness no less than 2.5mm, wherein the first transparent housing body and the second transparent housing body has a thickness ratio of 1:3~3:1.

27. for a water purifier, as recited in claim 26, wherein the first transparent housing body and the second transparent housing body has a thickness ratio of 1:2~2:1.

28. The housing for a water purifier, as recited in anyone of claims 1-13 and 16-25, wherein further comprises a sealing sheet, wherein the sealing sheet is provided between a second bottom of the second transparent housing body and a first bottom of the first transparent housing body, and wherein the sealing sheet is provided to face an injection molding hole forming portion of the second bottom of the second transparent housing body.
